# EUROPEAN PATENT APPLICATION

(11) **EP 4 636 522 A1**
(43) Date of publication of application: **22.10.2025**
(21) Application number: 23902899.6
(22) Date of filing: 07.12.2023
(51) Int. Cl.: G05D 1/00, B64C 39/02, B60F 1/00, B60F 3/00, G05D 105/45

(54) **SYSTEM, METHOD AND SELF-PROPELLED MODULE FOR FORMING A THREE-DIMENSIONAL OBJECT**

(30) Priority: 15.12.2022 RU 2022133019
(71) Applicant: Andreev, Pavel Ruslanovich, St. Petersburg, 191025 (RU)
(72) Inventor: Andreev, Pavel Ruslanovich, St. Petersburg, 191025 (RU)
(74) Representative: Keller Schneider Patent- und Markenanwälte AG
(86) International application number: PCT/IB2023/062350
(87) International publication number: WO 2024/127179

(57) **Abstract**

The present invention relates to means and methods for automatically forming collapsible three-dimensional objects in space, specifically to a system and method for forming a three-dimensional object which are based on the use of controlled self-propelled modules, and also to a self-propelled module for forming a three-dimensional object which self-propelled module may be used in such system and method.

Provided is a system for forming a three-dimensional object comprising: (i) one or more parking stations; and (ii) self-propelled modules, each provided with a housing; wherein said self-propelled modules are accommodated in parking stations, and said system also comprises a control device communicatively coupled to the self-propelled modules and configured to direct at least a portion of said self-propelled modules from at least one parking station of said parking stations to a given region of space so as to enable placement of each of said directed self-propelled modules in a given spatial location in accordance with a given model of a three-dimensional object to form at least one three-dimensional object from the housings of said placed self-propelled modules. Furthermore, provided are a method and a self-propelled module for forming three-dimensional objects, which may be used to implement the subject system for forming a three-dimensional object. 3 independent claims, 7 figures

## Description

### FIELD OF THE INVENTION

The present invention relates to means and methods for automatically forming collapsible three-dimensional objects in space, specifically to a system and method for forming a three-dimensional object which are based on the use of controlled self-propelled modules, and also to a self-propelled module for forming a three-dimensional object which self-propelled module may be used in such system and method.

### BACKGROUND OF THE INVENTION

To date, for automated formation of three-dimensional objects there have been widely used methods and devices for 3D printing enabling formation of various articles of manufacture, parts, models of buildings and structures, and other three-dimensional objects. Despite the acceptable speed and quality of the formation of three-dimensional objects, the current 3D printing methods have a significant disadvantage of uncollapsibility of the resulting three-dimensional models. This disadvantage results in increased material consumption, the need to dispose of modeling waste, and the like.

Therefore, the development of methods and systems for the automated formation of three-dimensional objects allowing for repeated assembly and disassembly thereof is an urgent task.

Also, widely used are various self-propelled modules with various designs and propulsion units, which are configured to automatically move and navigate in space, including to be placed in predetermined spatial coordinates. In particular, known are self-propelled modules in the form of unmanned aerial vehicles of various designs, wheeled/caterpillar-tracked self-propelled drones, underwater or above-water drones represented by unmanned boats or submarines, multicopters, and the like. Said self-propelled modules are capable of carrying housings or housing portions thereof and are capable of moving or being present in a given region of space.

For example, US patent No. 10303415 (hereinafter US 10303415) published on May 28, 2019 describes a system for forming a three-dimensional object in the form of a cluster display which is comprised of self-propelled modules in the form of aerial vehicles provided each with a housing with display and propulsion units, and a control device communicatively coupled, in a wired or wireless manner, to said self-propelled modules and configured to direct said self-propelled modules to a predetermined region of space so as to enable each of said directed self-propelled modules to be disposed in a predetermined spatial location to form a three-dimensional object in the form of a cluster display from the displays of said self-propelled modules. Of note, in the system for forming a three-dimensional object disclosed in US 10303415, the modules are present in the air and can not form a static three-dimensional object, which affects the positioning accuracy and the accuracy of formation of a three-dimensional model whose accuracy is significantly inferior to that of models created by 3D printing methods; another disadvantage is the increased battery consumption, which also makes it impossible to maintain the shape of the formed three-dimensionally object.

Thus, the main disadvantage of the known system for forming a three-dimensional object disclosed in US 10303415 is the increased complexity and time required to form a three-dimensional object and maintain a three-dimensional object in proper state in a given region of space in which it has been formed.

Thus, there is an obvious need for further improvement of known systems, methods and self-propelled modules for forming a three-dimensional object, in particular to reduce the complexity and duration of the formation of a three-dimensional object, and also to reduce the complexity and duration of maintaining the formed three-dimensional object in proper state in a given region of space.

Therefore, the technical problem solved by the present invention is to create a system, method and self-propelled module for forming a three-dimensional object, each of which at least partially overcomes at least one of the above disadvantages of the known system for forming a three-dimensional object of increased complexity and duration of the formation of a three-dimensional object in a given region of space in which it must be formed, and of increased complexity and duration of maintaining the formed three-dimensional object in proper state in said region of space.

### DISCLOSURE

The object of the present invention is to create a system, method, and self-propelled module for forming a three-dimensional object, solving each at least one of the above-mentioned problems of the prior art, as well as to expand the range of means for forming a three-dimensional object.

The task at hand is solved in the first aspect of the present invention by the fact that in the subject system for forming a three-dimensional object comprising: (i) one or more parking stations; and (ii) self-propelled modules, each provided with a housing; (a) said self-propelled modules are accommodated in parking stations; and (b) said system also comprises a control device communicatively coupled to the self-propelled modules and configured to direct at least a portion of said self-propelled modules from at least one parking station of said parking stations to a given region of space so as to enable placement of each of said directed self-propelled modules in a given spatial location in accordance with a given model of a three-dimensional object to form at least one three-dimensional object from the housings of said placed self-propelled modules.

Furthermore, the problem at hand is solved in the second aspect of the present invention by the fact that in the subject method for forming a three-dimensional object comprising a step of: (i) presenting navigation commands and a given model of a three-dimensional object to self-propelled modules, each having a housing; (a) in response to said navigation commands, further directing said self-propelled modules from at least one parking station to a given region of space so as to enable placement of each of said directed self-propelled modules in a given spatial location in accordance with a given model of a three-dimensional object to form at least one three-dimensional object from the housings of said placed self-propelled modules.

Furthermore, the task at hand is solved in the third aspect of the present invention by the fact that in the subject self-propelled module for forming a three-dimensional object comprising: (i) a housing provided with one or more propulsion units enabling movement of the self-propelled module; (a) said housing is further configured to enable placement of said self-propelled module in a parking station, and (b) said self-propelled module also comprises a control unit configured to receive navigation commands from an external control device so as to enable movement of said self-propelled module from the parking station to a given region of space using at least one of said propulsion units and to enable placement of said self-propelled module in a given spatial location to form at least a portion of a given three-dimensional object.

The system for forming a three-dimensional object according to the first aspect of the present invention, the method for forming a three-dimensional object according to the second aspect of the present invention, and the self-propelled module for forming a three-dimensional object according to the third aspect of the present invention provide each the technical result of accelerating the process of forming a three-dimensional object in a given region of space, in which it must be formed, and simplifying the process of maintaining the formed three-dimensional object in said region of space. The above technical advantages of the subject technical solution are not limiting. One skilled would appreciate additional advantages of the technical solution and individual embodiments thereof from the following detailed description and the accompanying drawings.

Furthermore, the system for forming a three-dimensional object according to the first aspect of the present invention, the method for forming a three-dimensional object according to the second aspect of the present invention, and the self-propelled module for forming a three-dimensional object according to the third aspect of the present invention provide each an additional technical result of expanding the range of means for forming a three-dimensional object.

### BRIEF DESCRIPTION OF DRAWINGS

The accompanying drawings which are included to provide further understanding of the principles of the present invention constitute a part hereof and are incorporated herein to illustrate the below embodiments and aspects of the present invention. The accompanying drawings, together with the description below, serve to explain the principles of the present invention. In the drawings:
Fig. 1 is a schematic view of a first illustrative embodiment of the system for forming a three-dimensional object according to the present invention;
Fig. 2 is a second illustrative embodiment of the system for forming a three-dimensional object according to the present invention;
Fig. 3 shows other embodiments of a self-propelled module used as part of the system for forming a three-dimensional object shown in Fig. 1 or Fig. 2;
Fig. 4 is a schematic view of one example of a hybrid embodiment of a self-propelled module used as part of the system for forming a three-dimensional object shown in Fig. 1 or Fig. 2;
Fig. 5 is a third illustrative embodiment of the system for forming a three-dimensional object according to the present invention;
Fig. 6 is an image illustrating the capabilities of transformation of a single three-dimensional object formed using the system for forming a three-dimensional object shown in Fig. 1 or Fig. 2, into other three-dimensional objects;
Fig. 7 is a flowchart of a method for forming a three-dimensional object implemented using the system for forming a three-dimensional object shown in Fig. 1 or Fig. 2.

### DETAILED DESCRIPTION

Hereinafter, various exemplary embodiments of the present invention are described with reference to the accompanying drawings; however, it should be understood that the description below does not define or limit the scope of the present invention.

In the following description, a detailed description of known functions and designs will be omitted as this unimportant information may obscure the concept of the present invention.

It is to be understood that in the following description the terms such as "first", "second", "upper", "lower", "lateral", "front", "rear", and the like are used solely for convenience, and they should not be interpreted as limiting terms. In particular, as used in the present invention, unless explicitly stated otherwise in the description herein, the terms "first", "second", "third" or the like are used to distinguish elements, components, parts, assemblies, modules, blocks, embodiments or the like, to which they pertain, from one another and not meant to describe any particular relationship therebetween. Thus, for example, it should be understood that the use of the terms "first group" of self-propelled modules and "second group" of self-propelled modules is not intended to imply any particular order, type, chronology, hierarchy or ranking (for example) of/between groups of self-propelled modules in a plurality of self-propelled modules, nor is their use (by itself) intended to imply that "third group" of self-propelled modules, "fourth group" of self-propelled modules, etc. may further exist. Further, as is discussed herein in other contexts, reference to a "first group" and a "second group" does not preclude herein the two groups from being the groups of the same elements. Thus, for example, in some instances, self-propelled modules in a "first group" of self-propelled modules and in a "second group" of self-propelled modules may coincide in terms of design, while in other instances they may be different in terms of design.

References to an item in the singular should be understood to include such items in the plural, and vice versa, unless explicitly stated otherwise or clear from the context herein.

Grammatical conjunctions are intended to express any and all disjunctive and conjunctive combinations of conjoined clauses, sentences, words and the like, unless otherwise stated or clear from the context. Thus the term "or" should be understood to generally mean "and/or" and so forth.

Recitation of ranges of values herein is not intended to be limiting, referring instead individually to any and all values falling within the range, unless otherwise indicated herein, and each separate value within such a range is incorporated into the description as if it was individually recited herein.

Words "about," "approximately" or the like, when accompanying a numerical value, are to be construed as including any deviation as would be understood by one of ordinary skill in the art to operate satisfactorily for an intended purpose. Ranges of values and/or numeric values are provided herein as examples only, and do not constitute a limitation on the scope of the described embodiments.

Any and all examples provided herein or at least a portion thereof, as well as corresponding phrases ("for example", "such as", "in particular" or the like), are used merely to facilitate understanding of the principles of the present invention and to provide for sufficient disclosure of the present invention; however, these phrases do not pose any limitations on the embodiments of the present invention, for description of which embodiments they are utilized herein, in particular they do not limit practical implementations of elements, components, parts, assemblies, modules, blocks, devices, means and/or the like utilized to disclose the principles of design and operation of the present invention.

### Terms and definitions used in the description herein

The term "illustrative" means a non-limiting example, instance or illustration. In a similar manner, the terms "for example" and "by way of example" used herein set off lists of one or more non-limiting examples, instances or illustrations. As used herein, circuitry is "configured" to perform a function whenever the circuitry comprises the necessary hardware and code (if any is necessary) to perform the function, regardless of whether performance of the function is blocked or forbidden (for example, by an operator-configurable setting, factory trim, etc.).

As used in the present invention, the term "correspondence" and derivatives thereof (i.e. adjective, verb, adverb) does not necessarily mean exact conformity or exact equality in/to/between whatsoever in any respect but may imply a departure or deviation from said equality within specified limits. For example, the term "corresponding coordinates", unless the description herein clearly dictates otherwise, means not only that these coordinates may be exactly equal to one another or may exactly coincide with one another but also implies that said equality or coincidence of coordinates may be established with some error (for example, with the error of operation of a GPS system) or within the bounds of a predetermined geographic region surrounding an exact geographic point or region to which these coordinates belong or an exact geographic location to which these coordinates belong.

In the context of the present invention, the term "self-propelled module", unless the description herein clearly dictates otherwise, refers to an independent apparatus or device structurally assembled from typical (commercially available) parts, elements, blocks, assemblies, devices and/or the like and capable of moving under its own power through the air, over land (ground), over water, under water and/or over the surface of a stationary or movable physical object disposed in at least one of air space, ground space, above-water space, and underwater space.

As used in the present invention, the term "unmanned aircraft apparatus" (UAA), unless the description herein clearly dictates otherwise, refers to an unmanned aerial vehicle which is configured to fly or which is capable of moving through the air in automatic mode, i.e. without involving a human or external control sources, or is capable of moving through the air in semi-automatic mode, i.e. with receipt of at least a portion of control commands from a human (for example, a pilot, an operator or the like) or an external source (for example, a control panel, control server, control device or the like) via predetermined communication channels. Unlimited examples of UAAs are various multi-rotor UAAs, for example, multicopter drones; single-rotor UAAs, for example, unmanned helicopter; hybrid UAAs, for example, rotary wing drones; and the like.

In the context of the present invention, the term "housing", unless the description herein clearly dictates otherwise, refers to a framework, skeleton, shell or load-bearing structure of a self-propelled module, each of which may be formed from a single load-bearing element or a combination of coupled to one another load-bearing elements, wherein the type, shape, overall dimensions, design features and/or material of such housing are not specifically limited in any way.

As used in the present invention, the term "module", unless the description herein clearly dictates otherwise, refers to a functional element or a combination of functional elements of a device in the form of a part, node, block or other assembly unit that performs certain technical functions that provide for the functioning of the device. The module generally may be implemented in practice using a combination of known structural elements, a combination of known structural elements and known hardware, a combination of known structural elements and known software and hardware or a combination of known hardware and known software. Accordingly, for example, the control unit may be implemented using hardware and software. As used in the present invention, the control unit may be a physical device, an apparatus or a plurality of modules implemented using hardware, for example, using an application-specific integrated circuit (ASIC) or a field-programmable gate array (FPGA) or a combination of hardware and software, for example, using a microprocessor system and a set of instructions implementing the functionality of the control unit, which (when executed) transform the microprocessor system into an application-specific device or system (for example, autopilot). Furthermore, each of the modules, or at least one of them, may also be implemented in the form of a combination of hardware and software, wherein some of the functionality described herein with respect to one of the modules may be implemented by means of hardware only, whereas other functionality described herein with respect to the same module or other module may be implemented by way of using hardware in combination with software.

As used in the present invention, the term "navigation command", unless the description herein clearly dictates otherwise, refers to an instruction directed to self-propelled modules being part of the system for forming a three-dimensional object. Navigation commands may be presented or provided by the control system for movement of a self-propelled module in the form of digital or analog data, instructions or control signals. Navigation commands may be generated by, without limitation, an automatic operator, an operator (whether locally or remotely situated), and/or an obstacle-avoidance system. Navigation commands may be communicated to, for example, a control unit to control a self-propelled module or to a steering system of a self-propelled module.

As used in the present invention, the term "manual control", unless the description herein clearly dictates otherwise, refers not only to control solely using human hands but also using human feet, fingers, voice, pupils or any suitable combination thereof. Thus, as used in the present invention, the term "manual control" refers to at least one of the following: buttons, levers, joysticks, toggle switches, pedals, touch screen, gesture control sensors, pupil-tracking scanners, microphone and/or the like.

As used in the present invention, the term "charging device", unless the description herein clearly dictates otherwise, refers to a device for replenishing the range of a self-propelled module by way of recharging the rechargeable battery thereof and/or by replenishing the fuel capacity thereof.

As used in the present invention, the term "database", unless the description herein clearly dictates otherwise, refers to any structured data set that does not depend on a specific structure, database management software, hardware of the computer that stores data, uses data or otherwise makes data available for use. The database may be present on the same hardware running the process that stores or uses the information stored in the database or it may be present on separate hardware, for example, a dedicated server or on a plurality of servers.

In the context of the present invention, the term "docking spot", unless the description herein clearly dictates otherwise, refers to a region of the surface of the housing of the self-propelled module or other structural portion of the self-propelled module, on which region said self-propelled module comes into coupling, connects or interacts with another self-propelled module or any other structure dockable to said self-propelled module.

As used in the present invention, the term "parking station", unless the description herein clearly dictates otherwise, means an unmovable or movable structure adapted to accommodate, store and/or replenish the range (for example, recharge) of self-propelled modules therein.

As used in the present invention, the term "control device" refers to computing equipment executing a computer program for enabling receipt of requests (for example, from other computing devices) over a communication network, execution or processing of such requests and/or transmission of such requests over a communication network (for example, to other computing devices). The computing equipment executing a computer program may be, without limitation, a single physical computer or a single physical computer system. As used in the present invention, the use of the term "control device" does not mean that each computational task (for example, received instructions or commands) or any other specific task will be received, executed or cause performance by one and the same control device (i.e. by one and the same software and/or hardware), which means that any quantity of pieces of software or hardware may be involved in receiving/transmitting, executing or may cause performance of any task or request or the consequences of any task or request, where all that software and hardware may be implemented in the form of one or more control devices.

### System for forming a three-dimensional object

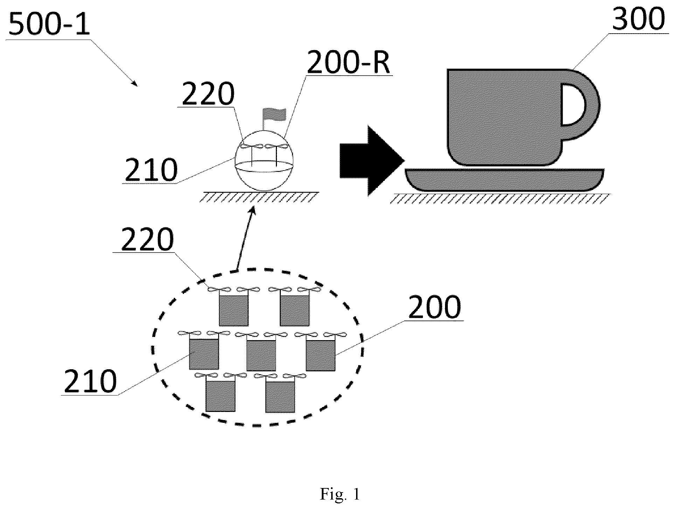

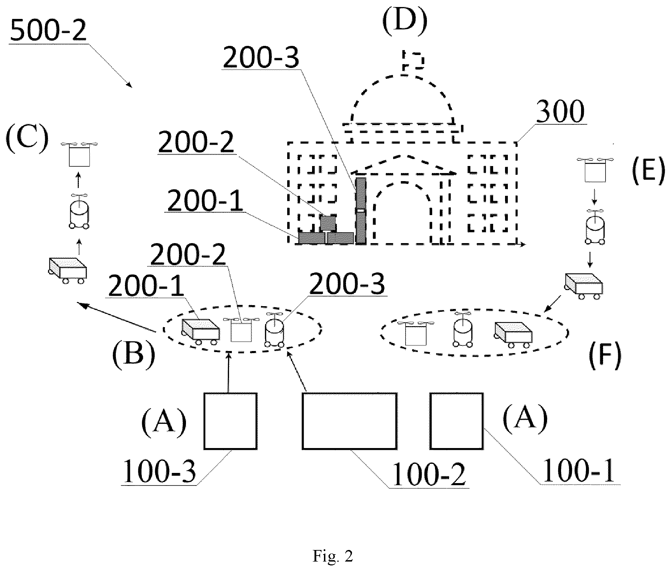

Fig. 1 schematically shows a generalized embodiment of the system 500-1 for forming a three-dimensional object according to the present invention, wherein the description of particular or alternative embodiments described below with respect to the system 500-2 for forming a three-dimensional object according to the present invention as shown in Fig. 2 should be considered applying to the system 500-1 as well.

In particular, the system 500-1 enables formation, on the surface of the table, of a static three-dimensional object 300 in the form of a cup and saucer corresponding to one of predetermined models of a three-dimensional object, which is selected by the user using standard input/output means of the user device among the available models of three-dimensional objects displayed on the display of this user device, wherein the user device may further be part of the system 500-1.

As shown in Fig. 1, the system 500-1 comprises self-propelled modules 200 each of which is provided with a housing 210 and two air propulsion units 220 and which are initially placed in at least one of the parking stations (not shown) also being part of the system 500-1, and further comprises a reference (base) self-propelled module 200-R which is provided with a spherical housing 210 and two air propulsion units 220 installed interiorly to the spherical housing 210 and which substantially sets a reference (base) spatial location for forming a three-dimensional object 300 in the form of a cup and saucer. Furthermore, the reference self-propelled module 200-R further comprises a control unit (not shown) configured to establish communication with a user device so as to enable mutual data exchange. Of note, the reference self-propelled support module 200-R may be initially placed in one of the parking stations (not shown) analogously to the self-propelled modules 200 used to form a three-dimensional object 300, or may be situated in any other place or any other region of space in which between the self-propelled support module 200-R and the user device (not shown) there may be established a connection so as to mutually exchange data.

To set a reference (base) location, the user selects, by means of standard input/output means of their user device, on a three-dimensional map of the room, which is displayed on the display of their user device and illustrates a three-dimensional image of the room with the objects present therein, a table on whose surface there must be formed a three-dimensional object 300 in the form of a cup and saucer corresponding to the model of a three-dimensional object previously selected by the user. In response, data about the user-selected location of the formation of a three-dimensional object (i.e., the surface of the table as an illustrative example), which data is presented by the user device (not shown) to the control unit of the reference (base) self-propelled module 200-R, the control unit of this reference (base) self-propelled module 200-R switches on or actuates the propulsion units 220 of the reference self-propelled module 200-R so as to provide for movement through the air (flight) of said reference self-propelled module 200-R towards said table followed by landing thereof on the surface of this table. After landing of the reference (base) self-propelled module 200-R onto the surface of the table, the control unit of the reference self-propelled module 200-R switches off the propulsion units 220 and presents data about the reference location set by the reference self-propelled module 200-R and corresponding to the user-selected location of the formation of a three-dimensional object to the self-propelled modules 200 in the parking stations of the system 500-1. In response to the data about the reference location for the formation of a three-dimensional object, the self-propelled modules 200 are directed from the parking stations of the system 500-1 under the control of the control units thereof or under the control of the control unit of the reference self-propelled module 200-R to a predetermined region of space corresponding to said reference location in an amount corresponding to a previously user-selected model of a three-dimensional object so as to provide for sequential or simultaneous placement of said directed self-propelled modules 200 in predetermined spatial locations with reference to the reference self-propelled module 200-R. Thus, the spatial location of each of the self-propelled modules 200 used to form a three-dimensional object 300 is set using the value of spatial displacement (i.e. displacement along at least one of the three coordinate axes) with respect to the reference location occupied by the self-propelled support module 200-R, and the reference self-propelled module 200-R is the basis of a three-dimensional object 300 formed from the housings of the self-propelled modules 200.

Alternatively, the user may manually place the reference (base) self-propelled module 200-R in a desired spot (for example, on the surface of the table) which will substantially be a reference (base) location for forming a three-dimensional object 300, such that the reference self-propelled module 200-R may present data about the reference location to the self-propelled modules 200 so as to enable placement of said self-propelled modules 200 in predetermined spatial locations with reference to the reference self-propelled module 200-R. In one of the variations of this alternative embodiment of the system 500-1, the reference self-propelled module 200-R may further comprise a location determination module (for example, a GPS system, a GLONASS system, a Beidou system or any other suitable location determination system known from the prior art) configured to determine the spatial coordinates of said reference self-propelled module 200-R in real time, and may further be configured to present certain spatial coordinates to the self-propelled modules 200 used to form a three-dimensional object 300 for adjusting or correcting the spatial coordinates of the region of space to which the self-propelled modules 200 must be directed from the corresponding parking stations of the system 500-1 in an amount corresponding to the user-selected model of a three-dimensional object, and/or adjusting or correcting at least one of the spatial locations that said directed self-propelled modules 200 must occupy with respect to the reference location occupied by the reference self-propelled module 200-R while formation of a three-dimensional object 300. In yet another variation of this alternative embodiment of the system 500-1, the reference self-propelled module 200-R may further comprise a scanning unit (not shown) configured to create a three-dimensional map of the space surrounding the spot in which the reference self-propelled module 200-R landed or was manually placed and which should be considered a reference location for forming a three-dimensional object 300 and communicatively coupled to the control unit of the reference self-propelled module 200-R such that the control unit of the reference self-propelled module 200-R may present said three-dimensional map of the surrounding space to the self-propelled modules 200 used to form a three-dimensional object 300 for adjusting or correcting the spatial coordinates of the region of space to which the self-propelled modules 200 must be directed from the corresponding parking stations of the system 500-1 in an amount corresponding to the user-selected model of a three-dimensional object, and/or for adjusting or correcting at least one of the spatial locations that said directed self-propelled modules 200 must occupy with respect to the reference location occupied by the reference self-propelled module 200-R while formation of a three-dimensional object 300 based on said three-dimensional map of the surrounding space.

Of note, the reference self-propelled module 200-R in the system 500-1 may be configured in the form of a self-propelled module 200 in any one of embodiments thereof described herein or of any stationary object, configured to be gripped or moved by the user and provided with a control unit or a transceiver configured to exchange data with the self-propelled modules 200 being part of the system 500-1 and used to form a three-dimensional object 300 for presenting thereto data about the reference location occupied by said object and used to set spatial locations for said self-propelled modules 200 while forming a three-dimensional object 300.

Of further note, the self-propelled modules 200, parking stations (not shown) and three-dimensional object 300, which are part of the above-described system 500-1 shown in Fig. 1, may be configured analogously or identically to any one of the embodiments of the self-propelled modules 200, parking stations 100 and three-dimensional object 300, respectively, described below herein with respect to the system 500-2 for forming a three-dimensional object shown in Fig. 2.

Fig. 2 is a schematic view of a generalized embodiment of the system 500-2 for forming a three-dimensional object according to the present invention on which embodiment each of the particular or alternative embodiments of the system 500-2 for forming a three-dimensional object described hereinafter are based. The system 500-2 may enable formation of a static three-dimensional object, a dynamic three-dimensional object or any combination thereof in the air, on water, under water and/or on land (ground). In particular, the system 500-2 may enable formation in the air (directly in the airspace itself and/or on the surface of any ground object), on water (directly on the surface of the water space and/or on the surface of any above-water object), underwater (directly underwater and/or on the surface of any underwater object) and/or on land or the ground (directly on the ground itself and/or on the surface of any ground object), in particular in a user-defined or user-selected region of space or a predetermined region of space, of a three-dimensional (3D) object consisting only of static (stationary) elements of a three-dimensional object, consisting only of dynamic (movable) elements of a three-dimensional object or consisting of a predetermined combination of static (unmovable) elements of a three-dimensional object and dynamic (movable) elements of a three-dimensional object.

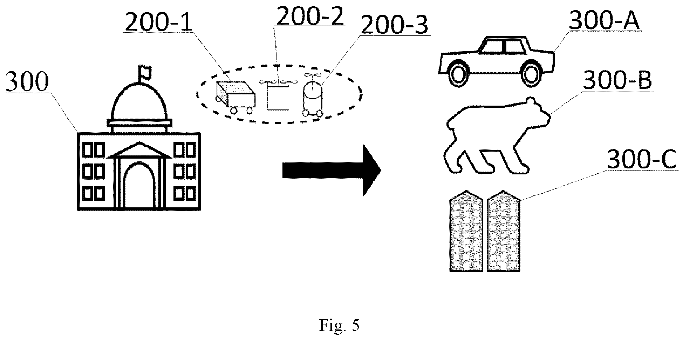

Of further note, the system 500-2 for forming a three-dimensional object shown in Fig. 2 and particular or alternative embodiments thereof described hereinafter generally have a similar or analogous structure or architecture, and therefore the similar or identical functional components being part of these systems 500-2 for forming a three-dimensional object are denominated in Figs. 2 to 5 and in the text herein using the same reference numbers. For the convenience of description, all variations of the systems 500-2 for forming a three-dimensional object described herein with reference to Figs. 2 to 5 are denominated in the text herein using the reference number (500-2).

As shown in Fig. 2, the system 500-2 for forming a three-dimensional object comprises three parking stations 100-1, 100-2, 100-3 which are denominated herein, for the convenience of description, with the reference number (100).

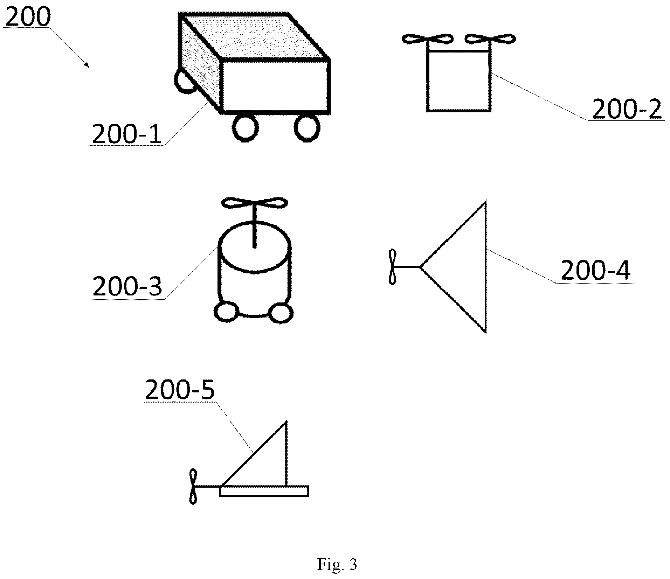

As shown in Fig. 2, the system 500-2 also comprises one or more self-propelled modules 200-1, one or more self-propelled modules 200-2 and one or more self-propelled modules 200-3, each of which is initially placed, stored or parked in one of the parking stations 100 being part of the system 500-2, wherein the self-propelled modules 200-1, 200-2 and 200-3 have different types characterized by different capabilities of moving such self-propelled modules in space and are individually shown in Fig. 3 by way of example.

As shown in Fig. 3, the self-propelled modules 200-1 are each provided with a wheeled propulsion unit or wheeled propulsion units enabling movement of the self-propelled module 200-1 over the surface of the ground (land), as well as movement of such self-propelled module 200-1 over the surface of an unmovable or movable physical object which may at least partially be present in airspace, ground space, above-water space and/or underwater space, wherein such self-propelled module 200-1, if necessary, may be adapted (arranged) or modified so as to enable movement (flight) thereof through the air or in the air, movement thereof over the surface of water (floating) with at least partial immersion of the body of the self-propelled module 200-1 into water and/or movement underwater in analogy with a submersible vehicle.

Furthermore, as shown in Fig. 3, the self-propelled modules 200-2 are provided each with air propulsion units enabling movement (flight) of the self-propelled module 200-2 through the air or in the air, landing of such self-propelled module 200-2 on the surface of the ground and/or landing on the surface of an unmovable or movable physical object which may at least partially be present air space, ground space, above-water space and/or underwater space, wherein such self-propelled module 200-2, if necessary, may be adapted or modified so as to enable landing on the surface of the water with at least partial immersion of the body of the self-propelled module 200-2 into the water, landing on the surface of the water followed by complete immersion of the body of the self-propelled module 200-2 underwater, movement underwater in analogy with a submersible vehicle, movement over the surface of water, and/or movement over the surface of the ground (over land). Furthermore, as shown in Fig. 3, the self-propelled modules 200-3 are provided each with two types of propulsion units at once: (1) air propulsion units and (2) wheeled propulsion units, which fact enables movement of such self-propelled module 200-3 over the surface of the ground (land), movement (flight) of such self-propelled module 200-3 through the air or movement of such self-propelled module 200-3 over the surface of an unmovable or movable physical object which may at least partially be present in air space, ground space, above-water space and/or underwater space, as well as landing of such self-propelled module 200-3 on the surface of the ground and/or landing on the surface of an unmovable or movable physical object which may at least partially be present air space, ground space, above-water space and/or underwater space, wherein such self-propelled module 200-3, if necessary, may also be adapted (arranged) or modified so as to enable landing on the surface of the water with at least partial immersion of the body of the self-propelled module 200-3 into the water, landing on the surface of the water followed by complete immersion of the body of the self-propelled module 200-3 underwater, movement underwater in analogy with a submersible vehicle and/or movement over the surface of the water. Thus, the self-propelled module 200-3 is substantially provided with each of the propulsion units installed on the self-propelled modules 200-1, 200-2.

Furthermore, Fig. 3 shows a self-propelled module 200-4 which is provided with a propeller propulsion unit enabling movement of such self-propelled module 200-4 underwater, wherein such self-propelled module 200-4, if necessary, may also be adapted (arranged) or modified so as to enable movement underwater, movement on the surface of the ground (on land), movement (flight) in the air and/or movement on the surface of a unmovable or movable physical object which may at least partially be present in air space, ground space, above-water space and/or underwater space.

Furthermore, Fig. 3 shows a self-propelled module 200-5 which is provided with a propeller propulsion unit enabling movement of such self-propelled module 200-5 over the surface of water, wherein such self-propelled module 200-5, if necessary, may also be adapted (arranged) or modified so as to enable movement over the surface of water, movement on the surface of the ground (on land), movement (flight) in the air and/or movement on the surface of a unmovable or movable physical object which may at least partially be present in air space, ground space, above-water space and/or underwater space.

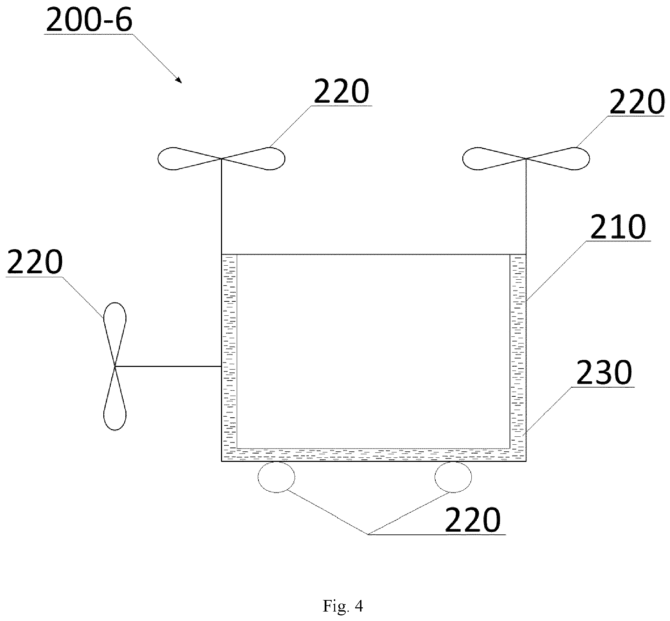

Fig. 4 shows, by way of example, a combined self-propelled module 200-6 whose housing 210 comprises a ballast chamber or tank configured to collect outboard fluid (for example, water) so as to enable at least partial or full immersion of such self-propelled module 200-6 into water and enable release of water therefrom for at least partial emersion of such self-propelled module 200-6 and which comprises multiple different types of propulsion units 200 which may be sequentially or partially simultaneously actuated: air propulsion units in the form of air propellers, wheeled propulsion units and an above-water/underwater propulsion unit in the form of a marine propeller, which allows such a self-propelled module 200-6 to move through the air, over land (ground), over water and/or underwater, depending on a given region of space in which the three-dimensional object 300 is contemplated to be formed and on the spatial location which such self-propelled module 200-6 will have to occupy and maintain while being part of said three-dimensional object 300. Thus, the self-propelled module 200-6 is substantially provided with each of the propulsion units which are installed on the self-propelled modules 200-1, 200-2, 200-3, 200-4, 200-5. In some embodiments of the present invention, in such a combined self-propelled module 200 there may be used two or more types of propulsion units, as well as propulsion units of the same type but implemented in different fashions (for example, caterpillar propulsion units and wheeled propulsion units).

The above-described self-propelled modules 200-1, self-propelled modules 200-2, self-propelled modules 200-3, self-propelled modules 200-4, self-propelled modules 200-5 and self-propelled modules 200-6, which may be part of the system 500-2, are also denominated herein using the reference number (200) for the convenience of description. Furthermore, for the convenience of description, all propulsion units 220 being part of different self-propelled modules 200 described herein with reference to Figs. 2-3, are also denominated herein using the reference number (220).

Of note, in order to form a three-dimensional object there may be used the self-propelled modules 200 of one or two or more types, including at least one or at least two of the above types of the self-propelled modules 200.

Of further note, the self-propelled modules 200 may also be provided with any other propulsion units 220 known from the prior art, whose actuation or activation may enable flight, riding, walking, rolling (movement by way of rolling), tipping (movement by way of shifting the center of gravity), walking (movement in steps, in particular using walking propulsion units), jumping (jumping movements), and the like.

Furthermore, the system 500-2 for forming a three-dimensional object also includes a control device (not shown) connected via a communication network (not shown) to the parking stations 100 and to the self-propelled modules 200 so as to enable exchange of data therewith and control of operation thereof.

The control device (not shown) being part of the system 500-2 for forming a three-dimensional object shown in Fig. 2 is configured to receive and process data from the self-propelled modules 200 and the parking stations 100, and is also configured to generate control instructions/commands or navigation instructions/commands based on said received data and results of processing thereof so as to enable presenting or direction of such generated control or navigation commands to at least one of the self-propelled modules 200 and/or to at least one of the parking stations 100, including in response to a request of said self-propelled module 200 and/or in response to a request of said parking station 100.

In some embodiments of the present invention, the data transfer protocols and/or technical means utilized to transfer data between the control device (not shown), self-propelled modules 200, and parking stations 100 may be at least partially different or may coincide. Furthermore, for communication there may be simultaneously used one or more communication protocols and corresponding technical means of communication.

In other embodiments of the present invention, for data exchange between the control device (not shown), self-propelled modules 200 and parking stations 100 in the system 500-2 there may be used one or more means of communication from the group of means of communication comprising: SW band radio antennas, USW radio antennas, UHF radio antennas, an optical communication module, half-duplex/simplex satellite communication module, 2G/3G/4G/LTE/5G cellular communication module, wireless network communication module or wired network communication module.

The control device (not shown) in the system 500-2 is a single server which may be configured in the form of, for example, the Dell PowerEdge^{™} server on which there may be used the Ubuntu Server or Windows Server operating system. In some embodiments of the present invention, the control device (not shown) in the system 500-2 may be any other suitable hardware, application software, system software or any combination thereof. In other embodiments of the present invention, the functions of the control device (not shown) in the system 500-2 may be shared among multiple computer devices or computing devices, for example, may be implemented using multiple servers communicatively coupled to one another. Furthermore, the control device (not shown) in the system 500-2 may have access to at least one database via a communication network or in other manner, or may comprise at least one local database stored on a storage device or in the memory of such control device.

In some embodiments of the present invention, the control device of the system 500-2 may be configured to perform traffic management and provide for safety while movement of the self-propelled modules 200 through the air, over land (ground), over water and/or underwater, in particular, while presence of the self-propelled modules 200 in a predetermined region of space to which region said self-propelled modules 200 may be directed by said control device. Furthermore, the control device of the system 500-2 may be configured to receive and process a request for directing the self-propelled modules 200 from one or more parking stations 100 to a predetermined region of space and a request for placing each of said directed self-propelled modules 200 in a predetermined spatial location in accordance with a predetermined model of a three-dimensional object, which model may be available to the control device of the system 500-2 and which model may be presented to the control device of the system 500-2 from an external source of data (not shown), wherein said requests may be presented each to the control device of the system 500-2 using, for example, a user device configured to establish communication with the control device of the system 500-2 to exchange data therewith. Of note, the region of space into which the control device of the system 500-2 directs self-propelled modules 20 from the corresponding parking stations 100 may substantially correspond to a given region of above-water space, a given region of underwater space, a given region of ground space, a given region of airspace, or any suitable combination thereof, and may have predefined geographical coordinates which unambiguously identify the location of said region of space.

The communication network of the system 500-2 to which the control device of the system 500-2, parking stations 100 and self-propelled modules 200 are preferably communicatively coupled substantially allows the control device of the system 500-2, parking stations 100 and self-propelled modules 200 to exchange between one another the system data and/or operational data which they use for implementing functions thereof or functional capabilities thereof described herein. Such communication network may be any suitable wireless communication link known from the prior art, such as a WiFi wireless technology-based communication link, 2G, 3G, 4G or 5G wireless technology-based communication link, LTE technology-based communication link and/or the like.

In one of the embodiments of the present invention, the system 500-2 for forming a three-dimensional object may comprise two or more wireless networks configured each analogously to the above communication network of the system 500-2 for performance of communication between the parking stations 100, self-propelled modules 200, control device of the system 500-2, and any other functional devices which may further be part of the system 500-2 and which are described herein in the real-time mode or in real time.

In one of the embodiments of the present invention, the system 500-2 for forming a three-dimensional object may include at least one parking station 100 or one or more parking stations 100 (for example, one, two, three, four, five, six, seven, eight, nine, ten or more parking stations 100). Of note, in the case of using only one parking station 100 it must be configured to accommodate, park or store therein all the self-propelled modules 200 being part of the system 500-2. Of further note, in the case of using two or more parking stations 100, each of those parking stations must be configured to accommodate, park or store therein at least a predetermined portion of self-propelled modules of the plurality of self-propelled modules 200 being part of the system 500-2, wherein the quantity of self-propelled modules 200 accommodated in such parking stations 100, as well as shapes, sizes, types, specifications, and the like of such self-propelled modules 200, may be the same as well as different.

The parking stations 100 being part of the system 500-2 for forming a three-dimensional object shown in Fig. 2 are intended each to accommodate, store or park therein the self-propelled modules 200. Of note, for forming a three-dimensional object the system 500-2 may not use the parking stations 100 at all (in particular, it may at least partially utilize the self-propelled modules 200 present in the air at a predetermined distance from the region of space in which region it is contemplated to form a three-dimensional object, or the self-propelled modules 200 used for forming other three-dimensional objects in nearby regions of space that are removed from said region of space to a distance being within a threshold value), may utilize only one parking station 100, or may utilize two or more parking stations 100 (i.e., three, four, five, six, seven, eight, nine, ten or more) which are geographically removed from one another or disposed at a distance from one another and which are present within the limits of the zone surrounding the region of space in which region it is contemplated to form a three-dimensional object. For example, the parking stations 100 may be disposed at a distance of several meters, tens of meters, hundreds of meters away from one another or several kilometers away from one another.

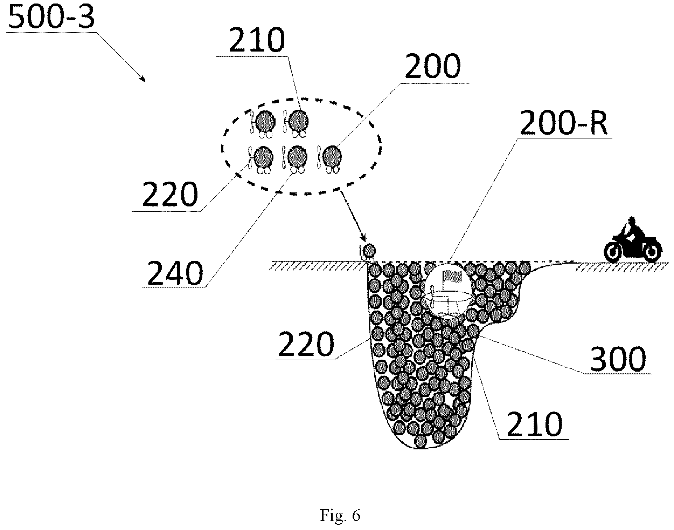

Of note, the geographical or spatial location of the parking stations 100 must enable timely replacement of one or more self-propelled modules 200, including in the case where it is necessary to move a formed three-dimensional object through the air, over water, over land and/or underwater in different directions and by different distances with respect to the region of space in which said three-dimensional object was originally or initially formed, or in the case of rearrangement of the entire three-dimensional object 300 or at least one portion thereof, followed by transformation into other three-dimensional object or followed by the formation of other three-dimensional object, as schematically shown by way of example in Fig. 6. In particular, Fig. 6 shows that the three-dimensional object 300 in the form of a structure or building formed from self-propelled modules 200-1, 200-2, 200-3 using the system 500-2 shown in Fig. 2 may be unformed in response, for example, to the control commands of the control device of the system 500-2, followed by the use of at least a portion of the available self-propelled modules 200-1, 200-2, 200-3 to form other three-dimensional object different from the three-dimensional object 300, in particular to form a three-dimensional object 300-A in the form of a car, a three-dimensional object 300-B in the form of a bear and/or a three-dimensional object 300-C in the form of two multi-storey buildings. For example, the parking stations 100 may be disposed every 10 m, 100 m, 500-2 m, 1 km or every 10 km, and so on. One skilled in the art would readily appreciate that the quantity of parking stations 100 and mutual disposition thereof may differ depending on specific geographical locations (in particular, depending on whether the region of space in which the three-dimensional object is contemplated to be formed is in open air, within or beyond city limits, under water, above water, or the three-dimensional object is formed in the interior of a building, for example, in an apartment, in an exhibition hall, a cinema hall, an office building, and the like). In particular, in large cities there may be a need for more parking stations 100 at shorter distances from one another, as opposed to small cities, areas between cities, or other possible locations beyond city limits. To form a three-dimensional object interiorly to a building, there may be sufficient either a single parking station 100 or mulitple parking stations 100.

Any one of the parking stations 100 shown in Fig. 2 is a stationary structure provided with compartments for accommodating at least a portion of the self-propelled modules 200, which are part of the system 500-2, and configured to be placed on a movable or stationary object present on water, underwater, in the air and/ or on land (ground).

In one embodiment of the present invention, at least one or each of the parking stations 100 being part of the system 500-2 may be configured in the form of a special housing or a special structure adapted to accommodate, store or park therein one or more of the self-propelled modules 200, which are part of the system 500-2, and installed on a stationary object which is present substantially in a fixed position on the surface of the water (for example, on an anchored surface platform or any other anchored surface object), in the air (for example, on an anchored aerostat, anchored balloon or other anchored aerial object), on the ground (for example, on a ground platform, in or on a building, or on or in another structure or other stationary object on the surface of the ground) or underwater (for example, on an anchored underwater platform or other anchored underwater object).

In another embodiment of the present invention, at least one or each of the parking stations 100 being part of the system 500-2 may be configured in the form of a special housing or a special structure adapted to accommodate, store or park therein one or more of the self-propelled modules 200, being part of the system 500-2, and installed on a movable object configured to alter the spatial or geographical location thereof, in particular to move over water, underwater, over land (ground) and/or through the air. For example, the parking station 100 may be installed in the back of a truck, on a ferry, barge, boat, ship, airplane, helicopter, aerostat, bathyscaphe, submarine or other above-water, underwater, land and/or air-based vehicle which enables altering of the spatial or geographic location of said parking station 100, thus allowing to quickly dispose the parking stations used as part of the system 500-2 in an appropriate quantity (including further to existing stationary parking stations 100) in close proximity to the region of space in which region it is contemplated to form a three-dimensional object.

In yet another embodiment of the present invention, at least one or each of the parking stations 100 being part of the system 500-2 may be a portable housing configured, for example, in the form of a backpack, suitcase or bag with wheels which housing may be moved by a person without the use of auxiliary technical means.

In yet another embodiment of the present invention, at least one or each of the parking stations 100 being part of the system 500-2 may be implemented in the form of a movable structure or a special above-water, underwater, land and/or air-based vehicle whose body or housing may be adapted to accommodate, store or park therein one or more of the self-propelled modules 200 being part of the system. The movable parking stations 100 may be moved between various geographic locations taking into account the most demanded locations for forming a three-dimensional object using the self-propelled modules 200 and taking into account the needs for optimized replacements of the self-propelled modules 200 used for forming a three-dimensional object. One of skill in the art would readily appreciate that some stationary or movable parking stations may be shared between two or more systems for forming a three-dimensional object configured each similarly to the system 500-2.

Of note, the system 500-2 for forming a three-dimensional object may comprise parking stations of any type (for example, land stationary parking stations, water stationary parking stations, air stationary parking stations, land movable parking stations, water movable parking stations, air movable parking stations, underwater stationary parking stations, underwater movable parking stations, and/or the like) configured each to park or temporarily store at least one of the self-propelled modules 200 being part of at least one system 500-2 or sharedly used by the system 500-2 and at least one other system for forming a three-dimensional object similar to the system 500-2.

Furthermore, each of the parking stations 100, which are part of the system 500-2 for forming a three-dimensional object shown in Fig. 2, may be provided with one or more power sources (not shown), each of which may be one or more batteries, a generator based on an internal combustion engine, a generator based on a hydrogen engine, a solar panel and any other suitable energy source known from the prior art, and may be provided with one or more charging devices (not shown) electrically coupled each to at least one of said power sources of the parking station 100 and enabling each coupling thereto of at least one of the self-propelled modules 200 being placed for storage or being parked in the parking station 100 so as to enable recharging, charging-up or replenishment of the range of said coupled self-propelled module 200. Of note, at least one of the charging devices (not shown) of the parking station 100 may be a wireless charging device, a wired charging device or a charging dock. In particular, at least one or each of the charging devices which may be provided to at least one of the parking stations 100 being part of the system 500-2 may be configured, for example, in the form of a device for supplying electrical energy, a device for supplying liquid or gaseous fuels, and/or the like. In one of the embodiments of the present invention, at least one or each of the charging devices (not shown) which may be provided to any one of the parking stations 100 being part of the system 500-2 may be hydraulically coupled by means of a pump (not shown) coupled by a hydraulic line to a reservoir or container (not shown) with fuel in a manner to enable intake of this fuel from said container so as to enable supply of said amount of intaken fuel to the fuel tank of the self-propelled module 200, the fuel tank being hydraulically coupled to the fuel-powered engine of the self-propelled module 200, to replenish the range thereof (in particular, due to at least partial replenishment of fuel volume in the fuel tank of the self-propelled module 200).

In some embodiments of the present invention, at least a portion of the self-propelled modules 200 used for forming a three-dimensional object may be part of the system 500-2 for forming a three-dimensional object as shown in Fig. 2, and the other portion of the self-propelled modules 200 used for forming a three-dimensional object may not be part of that system 500-2, wherein each of the parking stations 100 being part of the system 500-2 may be adapted or tailored to accommodate therein the self-propelled modules 200 with various modifications, dimensions, power plants and/or the like known from the prior art.

Of note, the self-propelled modules 200 being part of the system 500-2 for forming a three-dimensional object shown in Fig. 2 should include self-propelled modules 200 that may be present in a predetermined region of space (in particular, in the air space, above-water space, underwater space, ground space or on a movable/unmovable object in one of said spaces) or may be directed to such region of space as well as self-propelled modules 200 accommodated in or on the parking stations 100 as well as any other self-propelled modules 200 which may be further directed (for example, as replacement or additional self-propelled modules 200) to said region of space or at least to one of said parking stations 100 from at least one other system for forming a three-dimensional object similar to the system 500-2, whereby one skilled in the art would readily appreciate that at least a portion of the self-propelled modules 200 being part of the system 500-2 may have different types, modifications, designs, dimensioning specifications, masses, power plants and/or the like.

At least one or each of the self-propelled modules being part of the system 500-2 may be configured in the form of an unmanned aerial vehicle (UAV), an unmanned surface vehicle, an unmanned underwater vehicle, an unmanned ground vehicle (including a caterpillar- or wheel-based vehicle) or a hybrid vehicle configured to move over water, underwater, over land (ground) and/or through the air.

Each of the self-propelled modules 200 being part of the system 500-2 comprises a framework or housing 210 of any suitable type, and also comprises at least two propulsion units 220, each of which is configured in the form of a propeller and which are disposed or installed on the housing 210 from the exterior side thereof, and a control unit (not shown) installed in the interior of the housing 210 and configured to control the operation of the self-propelled module 200, including the operation of the propulsion units 220 thereof. Furthermore, each of the self-propelled modules 200 may include at least one of the following means of wireless communication: an SW band radio antenna, USW radio antenna, UHF radio antenna, optical communication module, half-duplex/simplex satellite communication module, 2G/3G/4G/LTE/5G communication cellular module, wireless network communication module between multiple self-propelled modules and/or radio repeaters, and the like.

Of note, depending on the region of space (in particular, depending on whether this region of space relates to water space, land space, underwater space, air space, or a combination thereof) in which it is contemplated to form a three-dimensional object in accordance with a given model of a three-dimensional object, at least one or each of the propulsion units 220 in at least one of the self-propelled modules 200 being part of the system 500-2 may be configured in the form of one of the group of propulsion units comprising: a sail, marine propeller, Voith Schneider propeller, bladed propeller, water jet propulsion unit, paddle wheel, oar-type propulsion unit, fin propulsion unit, fishtail propulsion unit, wheeled chassis of one or more wheels, pneumatic-tire roller propulsion unit, rotary-cutting propulsion unit, caterpillar propulsion unit, half-track propulsion unit, ski-caterpillar propulsion unit, screw-type propulsion unit, walking-type propulsion unit, electromagnetic propulsion unit, jet propulsion unit, flapping-wing propulsion unit, walking wheeled propulsion unit, square wheel propulsion unit, vibration propulsion unit, amoebic type propulsion unit, sectional wheel propulsion unit and inertial propulsion unit. Thus, in some embodiments of the present invention, at least a portion of the self-propelled modules 200 being part of the system 500-2 may be provided with two or more propulsion units 220 of different types (for example, a bladed air propeller and an oar-type propulsion unit), which fact allows each such self-propelled module 200 not only to be present in one of the regions of space (in particular, in the area of air space or in the area of above-water space) corresponding each to one of the types of said propulsion units 200 (in particular, to a bladed air propeller and an oar-type propulsion unit) but also to move from one region of space (for example, from a region of air space) corresponding to one type of propulsion unit (in particular, to a bladed air propeller) of said propulsion units 200 to other region of space (in particular, to a region of above-water space) corresponding to other type of propulsion unit of said propulsion units 200 (in particular, to an oar-type propulsion unit).

In one embodiment of the present invention, at least one or each of the propulsion units 220, which may be provided to at least one of the self-propelled modules 200 being part of the system 500-2, may be configured to convert or transform from one type to another type, thus enabling altering of the type of said propulsion unit 220 in any sequence between types from a group of types comprising: ground type, above-water type, underwater type and air type. Of note, the altering of the type of the propulsion unit 220 in the self-propelled module 200 may also lead to the altering of the type of the self-propelled module 200 itself, since the altering of the type of the propulsion unit 220 substantially leads to the altering of the space in which such self-propelled module 200 performs own movement. For example, the self-propelled module 200, which previously performed movement in air space by means of the use of an air-type propulsion unit 220, upon altering of the type of propulsion unit 220 from air type to any other type of the above types of propulsion units, may continue own movement now in ground space, above-water space or underwater space. In particular, in one of the variations of this embodiment of the present invention, at least one of the propulsion units 220 in the self-propelled module 200 may be configured in the form of a bladed propeller operably coupled by means of at least one movable working member or at least two interacting working members to the drive device of the self-propelled module 200, being under the control of the control unit of the self-propelled module 200 so as to enable altering of the location of said bladed propeller with respect to the housing 210 of this self-propelled module 200 to convert said bladed propeller, for example, from the air type to the above-water type, ground type or underwater type. Furthermore, in this variation of the embodiment of the present invention, the housing 210 in such self-propelled module 200, in which at least one of the propulsion units 220 is configured in the form of a bladed propeller, may further be configured to intake water or air from the surrounding space into the housing 210 and to release previously intaken water or previously intaken air from the housing 210 to alter the type of the self-propelled module 220 from above-water type to underwater type (in particular, upon intaking water from the surrounding water space into special compartments of the housing 210) or from ground/above-water type to air type (for example, upon intaking air from the surrounding air space, followed by heating thereof by a heating device and supplying into special air-inflated chambers on the external side of the housing 210) and vice versa (upon releasing water or air from the housing 210, respectively).

In another embodiment of the present invention, the housing 210 of at least one or each of the self-propelled modules 200 being part of the system 500-2 may further be provided with suction cups that facilitate securement or holding of the self-propelled module 200 on a physical object having a flat and uniform surface (for example, on a glass structure), hook-and-loop fasteners that facilitate securement or holding of the self-propelled module 200 on a physical object made of fabric material or an object covered with fabric material, magnets that facilitate securement or holding of the self-propelled module 200 on a physical object made of ferromagnetic material (for example, iron, cast iron, steel, nickel, and the like).

The control unit (not shown) being part of each of the self-propelled modules 200 used as part of the system 500-2 is communicatively coupled by means of the above communication network (not shown) to a control device (not shown), thus allowing said control unit to receive and process navigation commands and/or control commands from said control device so as to enable control of the operation of said self-propelled module 200 depending on said navigation commands and/or control commands. In particular, in response to navigation commands and/or control commands from the control device (not shown) being part of the system 500-2, the control unit of the self-propelled module 200 may enable, for example, altering of speed or direction of flight of the self-propelled module 200, direction of the self-propelled module 200 from one of the parking stations 100 in which it was initially accommodated to a predetermined region of space, return of the self-propelled module 200 to one of the parking stations 100 for storing and/or replenishing the range, direction of the self-propelled modules 200 from one predetermined region of space to another predetermined region of space, and/or the like. Of note, the regions of space in which there may be formed a three-dimensional object using the self-propelled modules 200 being part of the system 500-2 shown in Fig. 2 may be preliminarily known to the control device of the system 500-2 (for example, the coordinates of such regions of space may be pre-recorded in the memory of the control device of the system 500-2), or may be communicated to the control device of the system 500-2 from an external source of data (for example, from database, server, user device, and the like). In particular, the region of space in which there must be formed a three-dimensional object may be selected or defined by the user using input/output means (for example, using a button, at least one of on-screen buttons or on-screen keyboard on a touch screen, means of voice input, and/or the like) of the user device which may be configured in the form of a mobile phone, smartphone, laptop, personal computer or any other computing device suitable for such purposes known from the prior art and which may establish communication with the control device of the system 500-2 using the above or other communication network for transferring, to the control device of the system 500-2, data relating to the user-selected region of space in which there must be formed a three-dimensional object, or data relating to user-entered or selected coordinates of such region of space.

The housing 210 of any one of the self-propelled modules 200 being part of the system 500-2 shown in Fig. 2 may have any suitable shape and overall dimensions typical in the prior art to any known self-propelled module, and may be made of any suitable material known from the prior art and conventionally used for the manufacture of the housings of self-propelled modules (for example, of composite material, aluminum, plastic and/or the like). Thus, the type, shape, overall dimensions and material of the housing 210 in the self-propelled module 200 are not specifically limited in any manner within the scope of the present invention. In particular, the housing 210 may have a shape generally similar to that of a helicopter, however, one skilled in the art will appreciate that the housing 210 may have any other shape similar to any other aerial, above-water, underwater or land vehicle (depending on the region of space in which it is contemplated to form a three-dimensional object in accordance with a given model of a three-dimensional object), for example, similar to an airplane, shuttle, hang glider, paraglider, boat, ferry, barge, diesel-engine-powered ship, ship, catamaran, bathyscaphe, submarine, bathyplane, underwater apparatus, automobile, truck, motorcycle, bicycle, or any other similar self-propelled apparatus known in the art.

In some embodiments of the present invention, the housing 210 may have a shape similar to any vertebrate animal (e.g., to fish, bird, reptile, amphibian, mammal, and the like), invertebrate animal (e.g., mollusk, sponge, annelid worm, flatworm, roundworm, and the like), arthropod (e.g., crustacean, centipede, arachnid) or insect (e.g., beetle, bee, wasp, ant, butterfly, moth, fly, and the like) known in the art.

In other embodiments of the present invention, the housing 210 of at least one or each of the self-propelled modules 200 being part of the system 500-2 may be configured in the form of a regular or irregular three-dimensional geometric figure, for example, in the form of a cube, cuboid, ball or sphere, square pyramid, tetrahedron (triangular pyramid), hexagonal pyramid, triangular prism, hexahedron (octahedron), pentagonal prism, hexagonal prism, dodecahedron, ellipsoid, 20-sided polyhedron (icosahedron), cone, cylinder or any other known three-dimensional figure. In some other embodiments of the present invention, at least a portion of the housing 210 in at least one or each of the self-propelled modules 200 being part of the system 500-2 may have a sectional (longitudinal- or cross-sectional) shape of a triangle, square, circle, oval, rectangle, parallelogram, rhombus, trapezium, quadrilateral, pentagon, hexagon, heptagon, octagon, nonagon, decagon, icosagon or any other known regular or irregular geometric figure. In other embodiments of the present invention, the housing 210 of at least one or each of the self-propelled modules 200 being part of the system 500-2 may be configured in the form of an orbiform (a figure with a constant-width curve or a Relo polygon), an oloid (while it rolls, every single point of its faces touches the ground, and also has a constant center of mass to enable smooth rolling, i.e. without jerking and vibration), one Steinmetz solid representing the intersection of three cylinders of the same radius at a right angle, another Steinmetz solid representing the intersection of two cylinders of the same radius at a right angle (i.e. a bi-cylinder that is capable of rolling simultaneously along two axes of rotation), a wobbler, a spherical cylinder, a cone, a torus, and the like.

In various embodiments of the present invention, the housing 210 may be configured in the form of an ornithopter or an entomopter.

In one of the embodiments of the present invention, the housing 210 of any one of the self-propelled modules 200 being part of the system 500-2 shown in Fig. 2 may be a skeleton or a bearing frame on which there is attached panelling or which may be at least partially surrounded by a shell.

In other embodiments of the present invention, the housing 210 may further be provided with fins, wing or wings, an air propeller or air propellers, a marine propeller or marine propellers, at least one power plant, a paddle wheel or paddle wheels, at least one wheel, a caterpillar landing gear and/or the like depending on the region of space in which it is contemplated to form a three-dimensional object in accordance with a predetermined model of a three-dimensional object.

In another embodiment of the present invention, the housing 210 of at least one or each of the self-propelled modules 200 being part of the system 500-2 shown in Fig. 2 may be made of metal, plastic, aggregate material (for example, composite sandwich panels), aluminum material (for example, aluminum sandwich panels), titanium material (for example, titanium sandwich panels) or any other suitable prior art material, including using any suitable combination of the above materials (for example, titanium sandwich panel with aluminum honeycomb core). The material of manufacture of the housing 210 in any one of the self-propelled modules 200 being part of the system 500-2 is not specifically limited in any manner in the present invention.

In some embodiments of the present invention, the housing 210 of at least one or each of the self-propelled modules 200 being part of the system 500-2 shown in Fig. 2 may be further provided with a landing gear which is substantially a supports system which may be necessary at least for accommodation of said self-propelled module 200 in one of the parking stations 100, or is at least one support with which the housing 210 is provided. In particular, the landing gear of the self-propelled module 200 may be of a skid type, a wheel type, a tracked type, a float type or any other type known from the prior art. The type, shape, overall dimensions and material of the landing gear of the self-propelled module 200 are not specifically limited in any manner within the scope of the present invention. Of note, in this embodiment of the present invention the landing gear of the self-propelled module 200, depending on the specific embodiment thereof and the region of space in which it is contemplated to form a three-dimensional object in accordance with a predetermined model of a three-dimensional object, may at least provide for (i) bearing of static loading from its own weight while parking of the self-propelled module 200 in one of the parking systems 100, and (ii) shock absorption of dynamic loads arising while landing of the self-propelled module 200 (including emergency landing) in one of the parking systems 100.

In one of the embodiments of the present invention, the self-propelled modules 200 in the system 500-2 for forming a three-dimensional object may not be provided with a landing gear at all. In one of the variations of such embodiment of the present invention, the bottom of the housing 210 in at least one or each of the self-propelled modules 200 being part of the system 500-2 shown in Fig. 2 may be provided with a shock-absorbing pad (not shown) made of an elastic material (for example, rubber) which shock-absorbing pad may be attached to said bottom from the external side thereof or with any other suitable support known from the prior art and used in the art for self-propelled modules (in particular, for drones or other unmanned aerial vehicles).

In another embodiment of the present invention, the housing 210 in at least one or each of the self-propelled modules 200 being part of the system 500-2 for forming a three-dimensional object shown in Fig. 2 may further be provided with at least one wing, at least one wheeled landing gear (not shown), at least one caterpillar track, at least one robotic leg, at least one flipper, at least one fin, at least one paddle and/or at least one sail, which may each be configured integral with the housing 210, may be attached to the hull 210 on the external side thereof or at least partially embedded or integrated into the housing 210, wherein said auxiliary attachment for moving the self-propelled module 200 may initially be in a folded state or in a retracted state (the initial position in which such auxiliary attachment is at least partially disposed interiorly to the housing 210) and may be configured to deploy into an unfolded or extended state (an operating position in which such auxiliary attachment at least partially extends from the internal space of the housing 210 beyond same), respectively, under the control of the above control device (not shown) being part of the system 500-2. Of note, the number of such auxiliary means for moving the self-propelled module 200 which may be provided to the housing 210 may be selected taking into account the weight/size characteristics and structural features of the housing 210 to create additional propulsive force while movement of the self-propelled module 200, taking into account the need to reduce the load on the self-propelled module 200, taking into account a predetermined region of space in which it is supposed to form a three-dimensional object 300, and/or taking into account the need to stabilize the direction of movement of the self-propelled module 200, i.e., substantially depends on the particular embodiment of such self-propelled module 200 which will be used while the formation of a three-dimensional object 300 in a predetermined region of space. Of further note, at least one of such auxiliary means for moving the self-propelled module 200 which may be provided to the housing 210 in at least one of the self-propelled modules 200 being part of the system 500-2 may be configured folding, telescopic, extendable, or the like to reduce the overall dimensions of said self-propelled module 200 in a folded state, for example, in the case when it is parked or placed in one of the parking stations 100 being part of the system 500-2, wherein deployment of said auxiliary means may be performed, for example, under the control of the control device of the system 500-2 while the exit (for example, while driving-out, taking-off, swimming-out, crawling-out, jumping-out, and the like) of this self-propelled module 200 from the parking station 100 in which it was placed, or immediately in the process of movement of this self-propelled module through the air, over land (ground), over water and/or underwater.

In another embodiment of the present invention, the housing 210 in at least one or each of the self-propelled modules 200 in the form of unmanned aerial vehicles being part of the system 500-2 for forming a three-dimensional object as shown in Fig. 2 may be further provided with wings to create additional lift while in flight and at least one aircraft engine (not shown) and preferably two aircraft engines to enable the movement of the self-propelled module 200 through the air (including in an emergency situation, for example, in the event of damage, failure and/or discharge of the self-propelled module 200 used for forming a three-dimensional object) or the increase in the speed of movement of the self-propelled module 200 through the air (i.e. enabling the operation of aircraft engines further to the propulsion units 220 used to move the self-propelled module 200 through the air in a standard situation, or instead of same). Of note, each such aircraft engine may be, for example, a propeller engine, jet engine, combined aircraft engine or any other suitable aircraft engine known from the prior art. Of further note, in the case of using two aircraft engines in the self-propelled module 200 the designs and/or types thereof may coincide or be different from one another. Each such aircraft engine, with which the housing 210 may be further provided, may operate under the control of the control unit of the self-propelled module 200 which may present control commands to the engine control driver of the self-propelled module 200 so as to enable starting, stopping or altering of the operating mode of said aircraft engine (for example, of the operating parameters of the aircraft engine).

In some other embodiment of the present invention, the housing 210 of at least one or each of the self-propelled modules 200 in the form of an unmanned aerial vehicle being part of the system 500-2 for forming a three-dimensional object as shown in Fig. 2 may be further provided with a lift propeller (not shown) or propeller propulsion unit of any suitable type known from the prior art to enable the movement of the self-propelled module 200 through the air (including in an emergency situation, for example, in the event of damage, failure and/or complete discharge of the self-propelled module 200 used for forming a three-dimensional object) or the increase in the speed of movement of the self-propelled module 200 through the air (i.e. enabling the operation of the lift propeller or propeller propulsion unit further to the propulsion units 220 used to move the self-propelled module 200 through the air in a standard situation, or instead of same). Furthermore, in the given embodiment of the present invention, the housing 210 in the self-propelled module 200 may further comprise a power plant (not shown) which may be defined, for example, by one or two turboshaft engines and which may be operably coupled to each of the lift propellers of the self-propelled module 200 so as to enable supply of power to said lift propellers for actuating same. Each such power plant of the self-propelled module 200 operably coupled to the lift propellers with which the housing 210 may be further provided in a manner to provide for transfer of driving force thereto may be operated under the control of the control unit of the self-propelled module 200 which may present control commands to the control driver of the power plant (not shown) so as to enable starting, stopping or altering of the operating mode of said power plant (for example, altering of the operating parameters of the power plant) to enable altering of the state of those lift propellers.

In other embodiments of the present invention, at least one or each of the self-propelled modules 200 being part of the system 500-2 for forming a three-dimensional object as shown in Fig. 2 may be an unmanned aerial vehicle (UAV), and the housing 210 of such self-propelled module in the form of a UAV may be a fuselage and may be further provided with measurement sensors (not shown) to measure the movement parameters or flight parameters of the self-propelled module 200. The control unit of the self-propelled module 200 may be communicatively coupled to the measurement sensors of the self-propelled module 200 and to the control device of the system 500-2 so as to enable presenting in real time of measured flight parameters of the self-propelled module 200 to the control device of the system 500-2, and may be further configured to receive navigation commands from the control device of the system 500-2 generated by the control device of the system 500-2 in response to said measured flight parameters of the self-propelled module 200. In response to navigation commands received by the control unit of the self-propelled module 200 from the control device of the system 500-2, said control unit generates and presents its own control commands providing for altering of the operation parameters of said self-propelled module 200. In particular, in this embodiment of the present invention, the control device of the system 500-2 may be further configured to present navigation commands to at least one or each of the self-propelled modules 200 being part of the system 500-2 as shown in Fig. 2 to alter the course of movement or flight and/or mode of operation thereof in the event that at least one of flight parameters thereof measured using the above measurement sensors of the self-propelled modules 200 does not correspond to a threshold value or is beyond the range of threshold values. Of note, the measurement sensors for measuring the flight parameters of the self-propelled module 200 may be, for example, barometric altimeters, airspeed and Mach indicators, variometers, pitot tubes, central air data systems, pressure gauges, tachometers, thermometers, propulsion unit control systems, artificial horizons, heading instruments, and angle of attack / overload warning systems.

In other embodiments of the present invention, the housing 210 in at least one or each of the self-propelled modules 200 being part of the system 500-2 for forming a three-dimensional object as shown in Fig. 2 may be further provided with measurement sensors for measuring the parameters of state of said fuselage 210. The control unit of such self-propelled module 200 may be communicatively coupled to the measurement sensors of the self-propelled module 200 and to the control device of the system 500-2 so as to enable presenting in real time said measured parameters of the state of the housing 210 of the self-propelled module to said control device, and may be further configured to receive navigation commands from the control device of the system 500-2 generated by the control device of the system 500-2 in response to said measured parameters of the state of the housing 210 of the self-propelled module 200. In response to navigation commands received by the control unit of the self-propelled module 200 from the control device of the system 500-2, said control unit is configured to generate and present its own control commands enabling the replacement of said self-propelled module 200 with other self-propelled module of the self-propelled modules 200 being part of the system 500-2 and accommodated in the corresponding parking stations 100. In particular, in this embodiment of the present invention, the control device of the system 500-2 may be further configured to present navigation commands to each of the self-propelled modules 200 whose at least one of the parameters of state of the housing 210 does not correspond to a threshold value or is beyond the range of threshold values, and to present navigation commands to other self-propelled module 200 accommodated in one of the parking stations 100 being part of the system 100 so as to enable direction thereof from said parking station 100 to a region of space in which there is present said self-propelled module 200 to be replaced for performing replacement of the self-propelled module 200 to be replaced with said other self-propelled module 200. Of note, the sensors for measuring the parameters of state of the housing 210 of the self-propelled module may be, for example, vibration sensors, force-sensing resistors, force sensors, and the like.

In some other embodiments of the present invention, the housing 210 in at least one or each of the self-propelled modules 200 being part of the system 500-2 for forming a three-dimensional object shown in Fig. 2 may be further provided with measurement sensors for measuring the parameters of state of the structure of said self-propelled module 200, and the below-described control unit (not shown) of said self-propelled module 200 may be communicatively coupled to said measurement sensors and to the control device of the system 500-2 so as to enable presenting in real time of said measured parameters of state of the structure of the self-propelled module 200 to said control device, and may be further configured to receive navigation commands from the control device of the system 500-2 generated by the control device of the system 500-2 in response to said measured parameters of state of the structure of the self-propelled module 200. In response to navigation commands received by the control unit (not shown) of the self-propelled module 200 from the control device of the system 500-2, said control unit is configured to generate and present its own control commands enabling the replacement of said self-propelled module 200 with other self-propelled module of the self-propelled modules 200 being part of the system 500-2 and accommodated in the corresponding parking stations 100. In particular, in this embodiment of the present invention, the control device of the system 500-2 may be further configured to present navigation commands to each of the self-propelled modules 200 whose at least one of the parameters of state of the structure does not correspond to a threshold value or is beyond the range of threshold values, and to present navigation commands to other self-propelled module accommodated in one of the parking stations 100 being part of the system 100 so as to enable direction thereof from said parking station 100 to a region of space in which there is present said self-propelled module 200 to be replaced for performing replacement of the self-propelled module 200 to be replaced with said other self-propelled module 200. Of note, the sensors for measuring the parameters of state of the structure of the self-propelled module may be, for example, vibration sensors, force-sensing resistors, force sensors, and the like.

In some embodiments of the present invention, the housing 210 in at least one or each of the self-propelled modules 200 being part of the system 500-2 for forming a three-dimensional object as shown in Fig. 2 may be a framework (i.e. a skeleton of secured or coupled between one another load-bearing structural elements which is not provided with neither a roof, nor walls, nor floor) on which there are installed or installed at least the control unit of the self-propelled module 200, propulsion units 220, additional functional devices described herein and installed in the self-propelled module 200, and/or the like.

The control unit (not shown) being part of each of the self-propelled modules 200 as shown in Fig. 2 may be a combination of hardware and software that enable performance of predetermined functional capabilities described herein. In particular, the control unit of the self-propelled module 200 may be a processor device or computing device configured to obtain access to control program instructions so as to enable execution thereof for implementing the relevant functional capabilities described herein with respect to the self-propelled modules 200.

Furthermore, the control unit (not shown) in at least one or each of the self-propelled modules 200 being part of the system 500-2 for forming a three-dimensional object as shown in Fig. 2 may be configured to obtain access to control program instructions so as to enable execution thereof for performing one of the following operations: (i) controlling the operation of the self-propelled module 200 in a fully automatic mode (autopilot), (ii) controlling the operation of the self-propelled module 200 in a semi-automatic mode comprising receiving at least a portion of the control commands from an operator who may be present in a remote control center (for example, in a mobile control center or stationary control center for movement of the self-propelled modules) and who may input said control commands by means of at least one of command input devices being part of the control elements in said control center, or (iii) controlling the operation of the self-propelled module 200 in automatic mode with receipt of at least a portion of the control commands from an external source of control (for example, from a control device being part of the system 500-2, one of parking stations 100, a control device being part of other system for forming a three-dimensional object similar to the system 500-2, a satellite, a control tower, and/or the like) via a wireless data transfer channel established between said control unit of the self-propelled module 200 and said external source of control.

At least one or each of the self-propelled modules 200 being part of the system 500-2 for forming a three-dimensional object as shown in Fig. 2 may be directed or moved through the air, over land (ground), over water and/or underwater and/or over the surface of a movable or unmovable physical object disposed at least partially in at least one of said spaces (i.e. in the air, on land (ground), on water and/or under water) under the control of the control unit (not shown) of that self-propelled module 200 from one of the parking stations 100 to a specific geographic region or a predetermined region of space in automatic mode (autopilot without operator intervention) in response to control commands or navigation commands of said control unit or one of the above external sources of control (for example, the control device of the system 500-2), as well as in semi-automatic mode (autopilot with operator intervention) in response to operator control commands input by said operator using the above control elements present in a remote control center (not shown). In other words, an instance is possible where a decision relating to directing or moving each of the self-propelled modules 200 being part of the system 500-2 individually to a particular geographic region or a predetermined region of space may be made by the operator of that self-propelled module 200 who may present, by means of the above control elements, to the control unit of the self-propelled module 200 the corresponding control command formed by the operator using said control elements by way of selecting one of the predetermined regions of space available for visualising therein a three-dimensional object, or by way of setting the coordinates of said region of space, wherein said region of space may be present in the proximity of one or more of the parking stations 100 being part of the system 500-2.

Of note, the movement or locomotion control of each of the self-propelled modules 200 being part of the system 500-2 may be performed, for example, using standard software and hardware used in the prior art to control self-propelled modules, which are similar to the self-propelled modules 200, and supplied together with such self-propelled modules 200. In particular, the self-propelled modules 200 may be commercially available self-propelled modules 200 of any type and any modification provided with a built-in autopilot function and/or a built-in remote manual, or automatic, control function.

The control unit (not shown) in any one of the self-propelled modules 200 being part of the system 500-2 for forming a three-dimensional object may comprise one or more data transfer interfaces for transmitting and/or receiving signals/commands/requests/instructions. Of note, the data transfer interfaces, databases and other hardware may either be part of said control unit, or may be implemented in the form of distinct modules or blocks communicatively coupled to said control unit.

In the present invention, at least one control unit (not shown) in each of the self-propelled modules 200 being part of the system 500-2 for forming a three-dimensional object shown in Fig. 2 or in each of them may be communicatively coupled via a communication network (not shown) to an external source of control in the form of the above control device being part of the system 500-2. In particular, the control unit (not shown) of such self-propelled module 200 may be pre-programmed to communicate with the control device of the system 500-2 to obtain or receive therefrom control or navigation commands and may be pre-programmed to execute said received navigation or control commands for providing for proper functioning of said self-propelled module 200 in accordance with the task at hand, in particular, for altering the operating parameters of such self-propelled module 200, for altering the direction of movement (in particular, movement through the air, over land (ground), above water, under water and/or over the surface of a physical object being present in a fixed position (stationary physical object) or moving at least partially through the air, over land (ground), over water and/or underwater (movable physical object)) of such self-propelled module 200, for altering or displacing the spatial location of such self-propelled module 200, for altering the spatial orientation of such self-propelled module 200 and/or the like.

In particular, the control unit of each of the self-propelled modules 200 communicatively coupled to the control device of the system 500-2 may comprise a processor configured to execute computer-readable control commands or navigation commands in an automatic mode or at least partially based on commands received from an operator or other external source of control via at least one wireless communication channel.

Thus, in the present invention, the control device (not shown) which is part of the system 500-2 and which is communicatively coupled to the self-propelled modules 200 being part of the system 500-2 is substantially configured to direct all such self-propelled modules 200 or at least a portion thereof from at least one parking station of the parking stations 100 being part of the system 500-2 to a region of space limited or defined by specific geographical coordinates so as to enable accommodation of each of said directed self-propelled modules 200 in a predetermined spatial location in accordance with a predetermined model of a three-dimensional object at least partially in the air, on land (ground), on water and/or under water. In particular, in an instance of the present invention, one portion of the self-propelled modules 200 used to form a three-dimensional object in accordance with a predetermined model of a three-dimensional object is disposed on the surface of the ground (on land) or on the surface of water (on water), and the other portion of said self-propelled modules 200 is disposed in the air or under water. Furthermore, in an instance of the present invention, the first portion of the self-propelled modules 200 used to form a three-dimensional object in accordance with a predetermined model of a three-dimensional object is disposed on the surface of the ground (on land) or on the surface of water (on water), and the second portion of said self-propelled modules 200 is disposed in the air, and the third portion of said self-propelled modules 200 is disposed under water. Furthermore, in an instance of the present invention, the first portion of the self-propelled modules 200 used to form a three-dimensional object in accordance with a predetermined model of a three-dimensional object is disposed on the surface of the ground (on land), the second portion of said self-propelled modules 200 is disposed in the air, the third portion of said self-propelled modules 200 is disposed under water, and the fourth portion of said self-propelled modules 200 is disposed on the surface of water (on water). Of note, in the present invention, the self-propelled modules 200 disposed in the spatial locations thereof in accordance with a predetermined model of a three-dimensional object in a predetermined region of space to which these self-propelled modules 200 have moved in response to the corresponding navigation commands of the control device of the system 500-2 to form a three-dimensional object may be at least partially coupled or secured to one another and/or may at least partially not contact or not interact with one another. In one embodiment of the present invention, the self-propelled modules 200 disposed in the spatial locations thereof in accordance with a predetermined model of a three-dimensional object in a predetermined region of space to form a three-dimensional object may all be coupled or secured to one another or may be present at a predetermined distance from one another without any physical contact or physical interaction with one another.

The model of a three-dimensional object which model is used to form a three-dimensional object in a predetermined region of space to which at least a portion of the self-propelled modules 200 being part of the system 500-2 is directed may be brought into accordance with a predetermined region of space, in particular, it may be set automatically depending on a predetermined or user-selected region of space in which it is desired to form a three-dimensional object. Alternatively, the model of a three-dimensional object may be selected or defined by the user separately from the region of space in which it is desired to form a three-dimensional object using, for example, the above user device. Of further note, each of the spatial locations corresponding to a particular model of a three-dimensional object has predetermined geographical or spatial coordinates, a predetermined distance from the surface of the ground, water or other physical object on the surface of which self-propelled modules may be placed while forming said three-dimensional object, and also has other parameters known from the prior art and further characterizing said spatial location. In particular, the parameters that further characterize each of the spatial locations in which the self-propelled modules 200 must be placed while forming a three-dimensional object may include a predetermined spatial displacement (i.e. displacement along at least one of the three coordinate axes, in particular along one, two or three coordinate axes at once) of each of said self-propelled modules with respect to all adjacent spatial locations in which the remaining self-propelled modules 200 must be placed in accordance with a particular model of a three-dimensional object, i.e. with respect to all adjacent self-propelled modules (for example, with respect to the predetermined geometric center thereof) used to form a three-dimensional object, wherein the adjacent self-propelled modules 200 are understood to mean those self-propelled modules that must be disposed next to one another in at least one of the three spatial dimensions while placement thereof in a predetermined region of space in accordance with a predetermined model of a three-dimensional object. Furthermore, the parameters that further characterize each of the spatial locations in which the self-propelled modules 200 must be placed while forming a three-dimensional object may include a predetermined spatial displacement (i.e., a displacement along at least one of the three coordinate axes, in particular along one, two or three coordinate axes) of each of said self-propelled modules 200 with respect to the reference (base) spatial location or the reference (base) self-propelled module (for example, with respect to the predetermined geometric center thereof), wherein at least one of three-dimensional objects may be formed using only one reference self-propelled module or multiple (two or more) reference self-propelled modules, each of which may correspond, for example, to one of the vertical or horizontal rows as part of this three-dimensional object, to one of the portions of this three-dimensional object, or the like. Furthermore, the parameters that further characterize each of the spatial locations in which the self-propelled modules 200 must be placed while forming a three-dimensional object may include a predetermined spatial displacement (i.e., a displacement along at least one of the three coordinate axes, in particular along one, two or three coordinate axes) of each of said self-propelled modules 200 with respect to a reference (base) three-dimensional structure which may be at least partially disposed on water, under water, in the air and/or on land (on the ground), i.e. the spatial displacement of each of said self-propelled modules may be predetermined with respect to at least one of the reference (base) spatial locations which may limit or define, for example, the contour of said three-dimensional structure.

The model of a three-dimensional object comprises at least data about the types and/or technical characteristics of the self-propelled modules 200 which may be used for implementing the model (i.e. the self-propelled modules 200 which are contemplated to be used for forming a three-dimensional object in one fashion or another while implementing such model of a three-dimensional object), the data about the form, sizes and/or geometry of a three-dimensional (3D) object which may be formed on land (ground), in the air, on water and/or under water after properly placing the self-propelled modules 200 in the spatial locations thereof in accordance with said model of a three-dimensional object, as well as data about mutual position of the self-propelled modules 200 in a predetermined region of space while forming a three-dimensional object on land (ground), in the air, on water and/or under water in accordance with said model of a three-dimensional object, data about the spatial locations that must be taken by the self-propelled modules 200 for forming a three-dimensional object on land (ground), in the air, on water and/or under water, data about the mutual position of the self-propelled modules 200 as part a three-dimensional object being formed in the air, data about the peculiarities of the terrain in which there may be formed a three-dimensional object on land (ground), in the air, on water and/or under water in accordance with said model of a three-dimensional object, data about free space required or necessary for forming a three-dimensional object on land (ground), in the air, on water and/or under water in accordance with said model of a three-dimensional object, and/or the like.

Furthermore, the model of a three-dimensional object may contemplate continuous or periodic movement of the three-dimensional object formed on land (ground), in the air, on water and/or under water using the self-propelled modules 200 with respect to the region of space in which said three-dimensional object was initially formed in accordance with a predetermined model of a three-dimensional object. Furthermore, the model of a three-dimensional object may contemplate continuous or periodic movement of at least one portion or more portions of the three-dimensional object formed in the air using the self-propelled modules 200 in the region of space in which said three-dimensional object was initially formed or with respect to this region of space.

Furthermore, the control unit (not shown) in each of the self-propelled modules 200 being part of the system 500-2 for forming a three-dimensional object as shown in Fig. 2 may have access to one or more local or remote databases (not shown), measurement devices or sensors (not shown) installed on the external side of the housing 210 and/or the internal side of the housing 210, on-board monitoring and control systems being part of said self-propelled module 200, and/or any other suitable functional devices, nodes or units whose use is known from the prior art with respect to all possible embodiments of self-propelled modules and which may be installed in or on the housing 210, including those functional devices that are described herein.

To the control unit (not shown) in at least one or each of the self-propelled modules 200 being part of the system 500-2 for forming a three-dimensional object shown in Fig. 2 there may be initially communicated at least the following data used by this control unit while performing the functions thereof: (a) the geographic coordinates of each of regions of space in which regions the three-dimensional objects may be formed; (b) three-dimensional objects which may be formed using at least a portion of the self-propelled modules 200 being part of the system 500-2; and (c) models of a three-dimensional object, each brought into accordance with one of the three-dimensional objects being formed and each providing for disposition of the self-propelled modules 200 in predetermined spatial locations with respect to one another. Of note, the above data may be communicated to the control unit of the self-propelled module 200 by way of inputting same manually by the operator so as to provide for recording same into the local database of the self-propelled module 200 by way of transferring same in the form of a data packet from an external source of control (for example, from a control device being part of the system 500-2) via a wireless data transfer channel established between the control unit of the self-propelled module 200 and that external source of control, or may be received by the communication module of the self-propelled module 200 from a remote data store (for example, from a website, database, data server, and the like), to which the communication module may have access, in response to a request received from the communication module of the self-propelled module 200, or the like.

While forming a three-dimensional (3D) object using the self-propelled modules 200 directed by the control device of the system 500-2 so as to provide for appropriate disposition thereof in a predetermined region of space in accordance with a predetermined model of a three-dimensional object, at least one of said directed self-propelled modules 200, in response to navigation commands from said control device, may enter into detachable interaction with at least one other unmanned aerial vehicle of said directed self-propelled modules 200 used for forming said object. Thus, the self-propelled modules 200, which enter into a detachable interaction with one another while forming a three-dimensional object in accordance with a predetermined model of a three-dimensional object, must each be provided with multiple means of interaction or at least one means of interaction to enable detachable interaction with one another while forming the desired three-dimensional object in the air, on water, under water and/or on land (ground), wherein any of such self-propelled modules 200 interacting with one another may enter into interaction with at least one other self-propelled module 200 (for example, with one, two, three, four, five, six, seven, eight, nine, ten, eleven, twelve and more other self-propelled modules 200).

Alternatively, while forming the three-dimensional (3D) object using the self-propelled modules 200 directed by the control device of the system 500-2 so as to provide for appropriate disposition thereof in a predetermined region of space in accordance with a predetermined model of a three-dimensional object, each of the self-propelled modules 200, in response to navigation commands from said control device, may occupy and maintain for a predetermined period of time a strictly defined spatial position in which that self-propelled module 200 does not physically interact or does not physically contact with any one of the remaining self-propelled modules 200 used for forming said object on land (ground), in the air, on water and/or underwater. In such alternative embodiment of the present invention, at least one or each of the self-propelled modules 200 directed by the control device of the system 500-2 to a predetermined region of space to form a three-dimensional object may further comprise at least one obstacle detection sensor (for example, LIDAR, ultrasonic sensor, IR sensor, radar, video sensor, and the like), at least one positioning sensor (for example, gyroscope sensor, GPS, GLONASS, radar, and the like) and/or other similar sensors for preventing collisions of such self-propelled module 200 in said region of space with other self-propelled modules of said directed self-propelled modules 200 in the process of forming the desired three-dimensional object and/or in the process of presence of said self-propelled modules 200 already as part of the formed object.

As yet another alternative, while forming a three-dimensional (3D) object using the self-propelled modules 200 directed by the control device of the system 500-2 so as to provide for appropriate disposition thereof in a predetermined region of space in accordance with a predetermined model of a three-dimensional object, at least one of said directed self-propelled modules 200, in response to corresponding navigation commands from said control device, may enter into detachable interaction with at least one other self-propelled module of said directed self-propelled modules 200, and at least one other of said directed self-propelled modules 200 may occupy the spatial location thereof at a predetermined distance from the remaining self-propelled modules of said directed self-propelled modules 200 (i.e., may not enter into any physical contact or any physical interaction with at least one of such remaining self-propelled modules 200).

Non-limiting examples of means for providing for detachable interaction of the self-propelled modules 200 between one another while forming a three-dimensional object are the following connecting elements with which the housing 220 of at least one of said interacting self-propelled modules 200 must be provided in the corresponding docking spots: various suitable mechanical connecting or fastening means (brackets, grips, fasteners, mounting slots, cams, hooks, latches, tongue-and-groove joints, and the like), electromechanical means under the control of the control unit (for example, electromechanical means of docking for docking by a mating element to be docked, electromechanical means of gripping for gripping a mating element to be gripped, or the like), electromagnetic means under the control of the control unit, magnetic means, vacuum grips under the control of the control unit, and/or the like. Of note, if a first self-propelled module 200 of two self-propelled modules 200 interacting with one another is provided with any connecting element of the above mechanical connecting or fastening means, electromechanical means, electromagnetic means, magnetic means, and vacuum grips, then a second self-propelled module 200 of said two self-propelled modules 200 interacting with one another, in order to detachably interact with the first self-propelled module 200, must be provided with an appropriate type of mating connecting element enabling formation of a detachable coupling with the connecting element of the first self-propelled module 200.

In one of the embodiments of the present invention, the means for providing for detachable interaction of the self-propelled modules 200 between one another while forming a three-dimensional object may be configured in the form of the above-described connecting or fastening means, wherein the fastening means in at least one of said self-propelled modules 200 interacting with one another may be configured to deploy, unfold and/or expand so as to enable mutual detachable coupling of said self-propelled modules 200 with one another. In one of the variations of this embodiment of the present invention, the fastening means in the self-propelled modules 200, which enter into detachable interaction with one another while forming a three-dimensional object, may be configured to extend from the housing 210 of at least one of said interacting with one another self-propelled modules 200 or the housings 201 thereof to enable the detachable coupling of said self-propelled modules 200 with one another while forming a three-dimensional object.

In some embodiments of the present invention, the system 500-2 for forming a three-dimensional object as shown in Fig. 2 may further comprise a stationary or movable structure (not shown) configured to accommodate thereon or therein the self-propelled modules 200 directed by the control device to a given region of space so as to provide for formation of a three-dimensional object. Of note, such a stationary or movable structure may be configured, for example, latticed, cellular, honeycombed, and the like and may have any suitable shape known in the art, for example, it may be configured figured, wherein such auxiliary structure may be placed or may move over land (ground), through the air, over water and/or under water. Thus, in this embodiment of the present invention, the stationary or dynamic structure may form the basis of a three-dimensional object formed from the self-propelled modules 200, i.e. it may be part of said three-dimensional object and may be pre-provided in at least one of said models of a three-dimensional object which may be used to form three-dimensional objects, wherein the self-propelled modules 200 employed in the formation of a three-dimensional object may be placed in the spatial locations thereof with respect to said auxiliary structure, and at least a portion of said employed self-propelled modules 200 may enter into detachable interaction or detachable contact with said auxiliary structure in respective docking spots. In one of the variations of this embodiment, such stationary or movable structure of the system 500-2 may be provided with landing platforms configured to accommodate thereon at least a portion of the self-propelled modules 200 directed by the control device of the system 500-2 to a predetermined region of space while forming a three-dimensional object. In another variation of this embodiment of the present invention, the stationary or movable structure of the system 500-2 may be provided with fastening means configured to interact with at least a portion of the self-propelled modules 200 directed by the control device of the system 500-2 to a predetermined region of space while forming a three-dimensional object. In yet another variation of the given embodiment of the present invention, at least one or each of the self-propelled modules 200 directed by the control device of the system 500-2 to a predetermined region of space for forming a three-dimensional object may be provided with fastening means configured to interact with the stationary or movable structure of the system 500-2 while forming said three-dimensional object.

Furthermore, the housing 210 in each of the self-propelled modules 200 being part of the system 500-2 shown in Fig. 2 is provided with one or more on-board power sources (not shown), each of which may be one or more batteries and which may be installed on or in the interior of the housing 210. Of note, the propulsion units 220 in each of the self-propelled modules 200 being part of the system 500-2 shown in Fig. 2 are electrically coupled to the power source (not shown) for actuation thereof so as to enable movement of the self-propelled module 200 at least partially through the air, over land (ground), over water and/or under water.

In one of the embodiments of the present invention, the housing 210 in at least one or each of the self-propelled modules 200 being part of the system 500-2 shown in Fig. 2 may comprise two or more distinct or electrically coupled to one another on-board power sources, each of which comprises one or more batteries. In another embodiment of the present invention, the power source (not shown) in at least one or each of the self-propelled modules 200 being part of the system 500-2 may be at least one of a group comprising: a generator based on an internal combustion engine, a generator based on a hydrogen engine, a solar panel and any other suitable energy source which is known from the prior art and which is disposed on or in the interior of the housing 210 of the self-propelled module. In yet another embodiment of the present invention, the power source (not shown) in at least one or each of the self-propelled modules 200 being part of the system 500-2 may be configured to connect to an external power source (not shown), for example, to an electrical network.

Thus, while accommodating any of the discharged self-propelled modules 200 being part of the system 500-2 for forming a three-dimensional object shown in Fig. 2 in one of the parking stations 100 being part of the system 500-2, the power source of said self-propelled module 200 may be coupled to the power source of said parking station 100 using a charging device (not shown) of that parking station 100, the charging device being electrically coupled to said power source of the parking station 100, so as to provide for charging or replenishment of the range of said discharged self-propelled module 200.

In other words, the control device of the system 500-2 may be further configured to direct at least one or each of the discharged self-propelled modules belonging to the plurality of the self-propelled modules 200 used to form a three-dimensional object to at least one of the parking stations 100 being part of the system 500-2 so as to enable coupling thereof to one of the charging devices, which may be provided to said parking station 100, to charge or replenish the range of said discharged self-propelled module. Furthermore, while unforming the three-dimensional object, the control device of the system 500-2 may also be further configured to direct one or more or each of the self-propelled modules 200 which were used for forming said three-dimensional object in the air, on land (ground), on water and/or under water to one of the parking stations 100 being part of the system 500-2 so as to enable coupling of each of said directed self-propelled modules 200 to the respective one of the charging devices, which may be provided to said parking station 100, while accommodating the directed self-propelled module 100 in or on said parking station 100, thus allowing to charge or replenish the range of said self-propelled module 200. Furthermore, the control device of the system 500-2 may be further configured to present navigation commands to one or more or each of the self-propelled modules 200 which have been used to form a three-dimensional object upon expiration of a predetermined period of time so as to enable direction of said self-propelled modules 200 to the corresponding parking stations 100 of the parking stations 100 being part of the system 500-2, including for charging or replenishment of the range thereof in the above-described fashion.

Of note, any one of the power sources in any one of the self-propelled modules 200 being part of the system 500-2 for forming a three-dimensional object shown in Fig. 2 may be used not only for supplying power energy to the propulsion units 220 of said self-propelled module 200 for movement thereof at least partially through the air, over land (ground), over water and/or underwater but also for supplying power to the control unit (not shown) of that self-propelled module 200, to various sensors and measurement devices used in that self-propelled module 200 and described herein and to other controlled components and/or electronic components used in the self-propelled module 200 and described herein; one skilled in the art would however readily appreciate that said components may as well have each its own power source installed each in the interior of the housing of the corresponding component.

In one of the embodiments of the present invention, at least one of the parking stations 100 being part of the system 500-2 for forming a three-dimensional object may be provided with one or more charging devices configured each, for example, in the form of a device for supplying electrical energy, a device for supplying liquid or gaseous fuels and/or a similar device for replenishing the range of the self-propelled module 200, and at least two self-propelled modules of the self-propelled modules 200 200 being part of the system 500-2 may be configured to be serially or parallelly operably coupled to one another (for example, electrically and/or via a fuel supply line) while being accommodated in or on said parking station 100 so as to enable coupling thereof to at least one of said charging devices of this parking station 100 for substantially simultaneous charging thereof (for example, charging or charging-up of batteries in such self-propelled modules 200) and/or substantially simultaneous replenishment of the range thereof (for example, charging of batteries in such self-propelled modules 200 and/or refilling of fuel tanks with fuel in such self-propelled modules 200, hydraulically coupled to the corresponding engines forming the basis of the generators used in these self-propelled modules 200).

Furthermore, at least one or each of the self-propelled modules 200 being part of the system 500-2 may further comprise at least one of the following sensors: an obstacle detection sensor (LiDAR, ultrasonic sensor, IR sensor, radar, video sensor, and the like), a positioning sensor (gyroscope sensor, GPS, GLONASS, radar, and the like), and other suitable sensors known from the prior art, wherein each of said sensors may be configured to present readings thereof in real time to the control unit (not shown) of said self-propelled module 200 and/or to the control device of the system 500-2. Furthermore, at least one or each of the self-propelled modules 200 being part of the system 500-2 may further comprise a battery charge level sensor configured to measure the battery charge capacity of the self-propelled module 200 and to present in real time said battery charge capacity to the control unit of the self-propelled module 200 and/or the control device of the system 500-2.

In another embodiment of the present invention, one or more or each of the self-propelled modules 200 being part of the system 500-2 may be provided with at least one power source and may be further configured to present, in real time, data relating to the range to the control device of the system 500-2 and/or to the control unit of said self-propelled module 200, and the control device of the system 500-2 may be further configured to receive, in real time, data relating to the range from said self-propelled modules 200 so as to enable replacement of at least one of these self-propelled modules 200 with at least one other self-propelled module 200 of the self-propelled modules 200 accommodated in the parking stations 100 being part of the system 500-2 in the event that the charge reserve of each self-propelled module 200 being replaced is below a predetermined threshold value.

In one of the embodiments of the present invention, the control unit (not shown) in at least one or each of the self-propelled modules 200 used to form a three-dimensional object may be configured to receive data relating to the range of said self-propelled module 200 and may enable said self-propelled module 200 to be withdrawn from the interaction with at least one other unmanned aerial vehicle from among the self-propelled modules 200 used to form a three-dimensional object in case if the range of said self-propelled module 200 is below a predetermined threshold value (i.e., the battery of the self-propelled module 200 is completely discharged or has an insufficient charge level which is less than a predetermined threshold value, and/or there is no fuel in the fuel tank of the self-propelled module 200 or there is an insufficient amount of fuel which is less than a predetermined threshold value) so as to enable it to be directed to one of the parking stations 100 corresponding to a predetermined region of space in which said three-dimensional object was formed.

Of note, in the given embodiment of the present invention, while accommodation on or in the parking station 100, the power source (not shown) of the discharged self-propelled module 200 may be electrically coupled to the charging device with which said parking station 100 may be provided for replenishment of the range of that self-propelled module 200, for example, by way of replenishment of the battery charge of the self-propelled module 200, replenishment of fuel in the fuel tank of the self-propelled module 200, replenishment of a working medium (liquid, solid or gaseous working medium) used in the generator of the self-propelled module 200 operating using said working medium, and/or the like.

Of further note, in the given embodiment of the present invention, the control unit (not shown) of the discharged self-propelled module 200 may be further configured to present a request to the control device of the system 500-2 for recharging or replenishment of the range of said discharged self-propelled module 200. The control device of the system 500-2, in turn, in response to the request for recharging or replenishment of the range of the discharged self-propelled module 200, which is received from the control unit (not shown) of said discharged self-propelled module 200, may be further configured to present a request to the parking stations 100 being part of the system 500-2 for identifying a free charging device, and each of the parking stations 100 being part of the system 500-2 may be configured to present data relating to the free charging devices to the control device of the system 500-2 in response to said request for identifying a free charging device. In response to data relating to the free charging devices from the parking stations 100 being part of the system 500-2, the control device of the system 500-2 may be further configured to present control instructions to the control unit of the discharged self-propelled module 200 so as to enable direction of said discharged (requiring recharging or replenishment of the range) self-propelled module 200 under the control of the control unit of the self-propelled module 200 or the control device of the system 500-2 to one of the identified free charging devices (not shown) while accommodation of the discharged self-propelled module 200 in the parking station 100 with said free charging device.

In one of the embodiments of the present invention, the housings 220 of two or more self-propelled modules 200 being part of the system 500-2 may be further provided each with a location determination module (for example, a GPS system, a GLONASS system, a Beidou system, or any other suitable location determination system known from the prior art) configured to determine the spatial coordinates of said self-propelled module 200 in real time, and may be configured to present certain spatial coordinates to the control device of the system 500-2 in real time, and the control device of the system 500-2, in turn, may be further configured to present navigation commands to at least one of said two or more self-propelled modules 200 in real time for altering the course of movement of said at least one self-propelled module 200 in the event that it is determined, based on the spatial coordinates thereof, that the distance between said at least two self-propelled modules is less than a predetermined threshold value, thus preventing or eliminating the possibility of collision of these self-propelled modules 200 with one another while direction thereof to a predetermined region of space, while disposition thereof in the corresponding spatial locations in said region of space in accordance with a particular model of a three-dimensional object, while return thereof from said region of space to at least one of the parking stations 100 being part of the system 500-2, and/or while direction thereof from said region of space to another (new) region of space in which they are contemplated to be used to form a new three-dimensional object.

In another embodiment of the present invention, the housing 220 in at least one or each of the self-propelled modules 200 being part of the system 500-2 shown in Fig. 2 may be further provided with a detection device (not shown) configured to identify or detect in the operating area or field at least one other self-propelled module of the self-propelled modules 200 used in a predetermined region of space for forming a desired three-dimensional object by using one of the methods described herein, and configured to determine the distance to each of said detected self-propelled modules 200. In such embodiment of the present invention, the detection device (not shown) may be further coupled to the control unit (not shown) of the self-propelled module 200 so as to present thereto data relating to the detected self-propelled modules occurred in the operating field or area of the detection device, and data relating to distances from the detected self-propelled modules 200 to said self-propelled module 200, and the control unit of the self-propelled module 200, in turn, may be further configured to alter the spatial location, the course of movement and/or the mode of operation of said self-propelled module 200 in the event that the distance to at least one of the detected self-propelled modules 200 is less than a predetermined threshold value. Alternatively, in the present embodiment, the control unit (not shown) of the self-propelled module 200 may be configured to present data relating to detected self-propelled modules occurred in the operating field or area of the detection device and data, relating to the distances from each of the detected self-propelled modules 200 to said self-propelled module 200, to the control device of the system 500-2, and the control device of the system 500-2, in turn, may be further configured to alter the spatial location, the course of movement and/or the mode of operation of said self-propelled module 200 in the event that the distance to at least one of the detected self-propelled module 200 is less than a predetermined threshold value. Of note, in the given embodiment of the present invention, the detection device (not shown) may be a photo camera, video camera, LIDAR, radar, IR sensor, ultrasonic sensor, RFID tag, and the like. In one of the variations of the given embodiment of the present invention, the detection device may be configured in the form of an image capturing device configured to capture images in the field or area of view in real time so as to enable identifying in said area of view at least one other self-propelled module of the self-propelled modules 200 used in a predetermined region of space for forming a desired three-dimensional object by using one of the methods described herein, and configured to determine the distance to each of said detected self-propelled modules 200. In this variation of the embodiment of the present invention, the control unit of the self-propelled module 200 and/or the control device of the system 500-2 may in a similar fashion enable altering of the spatial location, course of movement and/or mode of operation of said self-propelled module 200 in the event that the distance to at least one of the detected self-propelled modules 200 is less than a predetermined threshold value, wherein such image capturing device (not shown) may be a photo camera, video camera, video recorder, video radar, or the like.

In yet another embodiment of the present invention, the housing 220 of at least one or each of the self-propelled modules 200 being part of the system 500-2 shown in Fig. 2 may be further provided with at least one robotic manipulator or grip (not shown) being under the control of the control unit (not shown) of said self-propelled module 200, wherein the housing 210 of said self-propelled module 200 may be further provided with an image capturing device (not shown) configured to capture images in the field or area of view in real time so as to enable identifying in said area of view at least one of the self-propelled modules 200 present in a predetermined region of space and further coupled to said control unit so as to present thereto data relating to identified self-propelled modules, and the control unit of the self-propelled module 200 in turn may be further configured to actuate said grip in response to said data relating to identified self-propelled modules, which was received from said grip, so as to enable performance of a detachable gripping of said identified self-propelled module 200. Of note, in this embodiment of the present invention, such image capturing device may be a photo camera, video camera, video recorder, video radar, and the like. Of further note, in this embodiment of the present invention, the self-propelled modules being gripped by the grip may include the self-propelled modules 200 released from at least one of the parking stations 100 being part of the system 500-2 and directed to a predetermined region of space, the self-propelled modules from parking stations being part of other system for forming a three-dimensional object similar to the system 500-2, and/or any other self-propelled modules which may be directed to a predetermined region of space for forming a desired three-dimensional object within the scope of the subject technology described herein.

In one of the embodiments of the present invention, at least two of the self-propelled modules 200 being part of the system 500-2 shown in Fig. 2 may be configured to mechanically couple to one another to form a cluster self-propelled module. Such cluster self-propelled modules are configured each to detachably interact with one another and/or with at least one of the remaining self-propelled modules 200. Of note, such cluster self-propelled module (not shown) formed from multiple (two or more) self-propelled modules 200 mechanically coupled to one another may be initially accommodated in a linked or docked state in one of the parking stations 100 or may be assembled from distinct self-propelled modules 200 directed from the corresponding parking stations 100 to a predetermined region of space while said self-propelled modules 200 to be docked are already present in said region of space. Of note, the self-propelled modules 200 forming such cluster self-propelled module (not shown) may be mechanically coupled to one another in a horizontal plane and/or vertical plane to form an aggregate structure, which is propelled by its own propulsion force, of coupled to one another said self-propelled modules 200, which structure has any shape and geometric sizes suitable for the interaction of such cluster self-propelled module (not shown) with at least one other similar cluster self-propelled module and/or with at least one distinct self-propelled module 200, suitable for free accommodation of such cluster self-propelled module (not shown) in one of the parking stations 100 being part of the system 500-2, and suitable for free movement of such cluster self-propelled module (not shown) at least partially through the air, over land (ground), over water and/or underwater individually or as part of already formed three-dimensional object. Such cluster self-propelled module (not shown) may respond to control commands/instructions as integral whole, i. e. the operation of self-propelled modules 200 in such cluster self-propelled module may be synchronized (for example, using the control device of the system 500-2 or the control unit of one of the self-propelled modules 200 forming such cluster self-propelled module). Furthermore, the self-propelled modules 200 forming such cluster self-propelled module (not shown) may be electrically coupled to one another to form a single power supply circuit and a cluster power source (for example, the cluster power source may be formed from batteries of coupled to one another self-propelled modules 200) supplying power to or powering all said self-propelled modules 200 substantially simultaneously, thus making it possible to speak about the range not of each such self-propelled module 200 individually but rather about the range of a cluster self-propelled module (not shown) as a whole. Of further note, the process of mutual mechanical coupling of the self-propelled modules 200 may be started or launched in response to control commands presented by the control device of the system 500-2 or the control unit of one of the self-propelled modules 200 forming such cluster self-propelled module to said self-propelled modules 200. Furthermore, mutual mechanical coupling between the self-propelled modules 200 forming the cluster self-propelled module (not shown) may be implemented immediately between the housings or bodies of the self-propelled modules 200 to be coupled as well as by means of a connecting structural module or connecting structure (not shown) to which said self-propelled modules 200 to be coupled may be secured or coupled (for example, using fastening or connecting means known from the prior art) and which said self-propelled modules 200 to be coupled are collectively capable of carrying or moving through the air, over land (ground), over water and/or underwater. Such connecting structure may be configured in the form of a ground structure to which the self-propelled modules 200 to be coupled to one another may be secured or coupled while presence thereof on the ground surface, wherein said connecting structure may be configured expandable or deployable, thus allowing said self-propelled modules 200 to expand or deploy said connecting structure on the ground surface by way of application thereto the tractive forces from the self-propelled modules 200. Furthermore, such connecting structure may be configured in the form of an aerial structure which is configured to independently move or fly in the air and to which the self-propelled modules 200 to be coupled to one another may be secured or coupled while presence thereof in the air or yet on land (ground), wherein said connecting structure may be configured expandable or deployable, thus allowing said self-propelled modules 200 to expand or deploy said connecting structure in the air and/or on land (ground) by way of applying thereto the tractive forces from the self-propelled modules 200. Furthermore, such connecting structure may be configured in the form of an above-water or underwater structure which is configured to independently move or locomote over water or under water and to which the self-propelled modules 200 to be coupled to one another may be secured or coupled while presence thereof on the surface of the water or underwater, wherein said connecting structure may be configured expandable or deployable, thus allowing said self-propelled modules 200 to expand or deploy said connecting structure on the surface of the water and/or underwater by way of applying thereto the tractive forces from the self-propelled modules 200.

Of further note, the above cluster self-propelled module (not shown) may be formed from self-propelled modules 200 accommodated in at least one parking station of the parking stations 100 being part of the system 500-2, self-propelled modules 200 directed to a predetermined region of space from at least one of the parking stations 100 being part of the system 500-2, self-propelled modules 200 being present in a predetermined region of space as part of a formed three-dimensional object, and/or self-propelled modules released from at least one of the parking stations being part of at least one other system for forming a three-dimensional object similar to the system 500-2.

Upon discharging or reducing the range to a predetermined limit, the above cluster self-propelled module (not shown) being part of the formed three-dimensional object may be replaced in the air, on water, under water and/or on land (ground) with another (charged) cluster self-propelled module or at least one distinct charged self-propelled module in the process of forming a three-dimensional object, in the process of accommodating said discharged cluster self-propelled module in one of the parking stations 100 being part of the system 500-2, in the process of presence as part of a three-dimensional object, in the process of unforming a three-dimensional object, or in the process of directing to a given region of space. While replacing a discharged cluster self-propelled module (not shown) with a charged cluster self-propelled module or with at least one distinct charged self-propelled module, said discharged cluster self-propelled module may be directed to one of the parking stations 100 for being accommodated therein or thereon so as to enable further storage and/or to enable replenishment of the range of such cluster self-propelled module in said parking station 100. Alternatively, while replacing a discharged cluster self-propelled module (not shown) with a charged cluster self-propelled module, the self-propelled modules 200 being part of said discharged cluster self-propelled module (not shown) withdrawn from a three-dimensional object formed in the air, on water, under water and/or on land (ground) in a predetermined region of space may be at least partially withdrawn from interaction with one another (i.e., they may flyaway from one another so as to unform such cluster self-propelled module into distinct self-propelled modules 200 or into distinct component portions of said cluster self-propelled module) so as to enable direction of each of same to respective one of the parking stations 100, thus allowing to accommodate the discharged self-propelled modules 200 in the parking stations 100 so as to enable further storage thereof in those parking stations 100 and/or enable replenishment of the range of at least one of those discharged self-propelled modules 200.

Furthermore, at least one or each of the self-propelled modules 200 being part of the system 500-2 and comprising each the housing 210, configured to accommodate such self-propelled module 200 in one of the parking stations 100 being part of the system 500-2, and controlled propulsion units 220 installed or secured on the housing 210 so as to enable the self-propelled module 200 to move through the air, over land (ground), over water and/or underwater and/or over the surface of a stationary or movable physical object located in at least one of the airspace, ground space, above-water space and underwater space is configured to alter the shape and/or size thereof. Furthermore, the housing 210 of any one of the self-propelled modules 200 shown in Fig. 2-3 is provided with a control unit (not shown) which is communicatively coupled to each of the propulsion units 220 and to the above control device of the system 500-2, wherein the control unit of the self-propelled module 200 is further configured to control the operation of said propulsion units 220, including in response to navigation commands or control commands being received from the control device of the system 500-2, thus substantially allowing the control device of the system 500-2 to enable movement of said self-propelled module 200 from the parking station 100 to a predetermined region of space using at least one of the propulsion units 220 of this self-propelled module 200 and enable accommodation of this self-propelled module 200 in a predetermined spatial location in accordance with a model of a three-dimensional object to form at least a portion of a predetermined three-dimensional object 300.

Of note, the housing 210 of at least one or each of the self-propelled modules shown in Fig. 2-3 may be provided with one or more controllable propulsion units 200 (for example, one, two, three, four, five, six, seven, eight, nine, ten and more propulsion units 220). Alternatively, the housing 210 of the self-propelled module shown in Fig. 3 may be provided with two or more controllable propulsion units 200, three or more controllable propulsion units 200, four or more controllable propulsion units 200, and the like.

Of further note, each of the propulsion units 220 in at least one or each of the self-propelled modules 200 according to Fig. 2-3 being part of the system 500-2 and used to form a three-dimensional object 300 in a predetermined region of space may enable movement of the self-propelled module 200 on whose housing 210 there are installed said propulsion units 220 through the air, over land (ground), over water and/or underwater and/or over the surface of a stationary or movable physical object located in at least one of the airspace, ground space, above-water space and underwater space. In one embodiment of the present invention, at least one of the self-propelled modules 200 being part of the system 500-2 may be provided with only one propulsion unit 220 configured such that it enables movement of said self-propelled module 200 in at least one, at least two, at least three or four of the following spaces: airspace (in the air in a state of flight), ground space (i.e. over the surface of the ground with at least partial immersion into the ground and with at least partial presence in the airspace), above-water space (over the surface of water with at least partial immersion into water and with at least partial presence in airspace) and underwater space (underwater, i.e. with complete submersion under water, or any other liquid or fluid). In another embodiment of the present invention, at least one or each of the self-propelled modules 200 being part of the system 500-2 may be provided with two or more propulsion units 220 which are configured each or at least one of which is configured such that it enables movement of said self-propelled module 200 in at least one, at least two, at least three or four of the following four spaces: airspace (in the air in a state of flight, including presence on the surface or movement over the surface of an aerial stationary or movable physical object), ground space (i.e. over the surface of the ground with at least partial immersion into the ground and with at least partial presence in airspace, including presence on the surface or movement over the surface of a ground stationary or movable physical object), above-water space (over the surface of water with at least partial immersion into water and with at least partial presence in airspace, including presence on the surface or movement over the surface of an above-water stationary or movable physical object) and underwater space (underwater, i.e. with complete submersion under water, or any other liquid or fluid, including presence on the surface or movement over the surface of an underwater stationary or movable physical object).

While directing the self-propelled modules 200 according to Fig. 2-3 to a predetermined region of space from at least one of the parking stations 100 being part of the system 500-2, the control device of the system 500-2 controlling the operation of these self-propelled modules 200 by way of presenting control and/or navigation commands to the control units thereof (not shown) enables accommodation of each of said directed self-propelled modules 200 in a predetermined spatial location in accordance with a predetermined model of a three-dimensional object (as described above) known to the control device of the system 500-2 to form in the air, on water, underwater and/or on land (ground) at least one three-dimensional object 300 shown in Fig. 2 from distinct housings 210, each belonging to one of said directed self-propelled modules 200. Of note, the formed three-dimensional object 300 shown in Fig. 2 is substantially just one of particular embodiments of such three-dimensional object formed in the air, on water, under water and/or on land (ground) while implementing the above-described system 500-2. Thus, in a predetermined region of space in the air, on water, under water and/or on land (ground) there may be parallelly or sequentially formed two or more three-dimensional objects 300 using the housings 210 relating to at least a portion of the self-propelled modules 200 directed by the control device of the system 500-2 from the corresponding parking stations 100 to said region of space. Of further note, at least some of the three-dimensional objects 300 formed in a predetermined region of space in accordance with a predetermined model of a three-dimensional object may be present in said region of space independently of one another, i.e. without any physical interaction or physical contact with one another, and/or may be present in said region of space so as to enable physical interaction or physical contact with one another, including during the movement or locomotion of at least one of said interacting three-dimensional objects in said region of space.

In particular, the self-propelled modules 200 according to Fig. 2-3 may be placed in respective spatial locations in a predetermined region of space in accordance with a predetermined model of a three-dimensional object such that a three-dimensional object 300 formed from the housings 210 of said self-propelled modules 200 may generally have the shape of a known three-dimensional geometric object (for example, the shape of a cube, pyramid, parallelepiped, sphere, tetrahedra, and the like), any other suitable regular or irregular three-dimensional shape or any three-dimensional object which is known in the state of the art or may be invented by the user, including a three-dimensional object having any regular shape, curvilinear shape, concave shape, convex shape, irregular shape, a shape resembling any living or non-living object known in the state of the art, or the like.

The control device of the system 500-2 is configured to present control commands to at least one of the self-propelled modules 200 whose housings 210 form a three-dimensional object 300 and which are substantially present as part of this three-dimensional object 300 in a predetermined region of space so as to enable altering of the shape and/or size of at least a portion of the housing of said at least one self-propelled module 200 for at least partial altering of the geometry of said formed three-dimensional object. In other words, the control commands directed by the control device of the system 500-2 to the control unit of the self-propelled module 200, which substantially controls the operation of the below-described functional means, which are integrated into the housing 210 of this self-propelled module 210, operably coupled thereto or configured to interact therewith to enable altering of the shape and/or size of this housing 210, generally enable altering of the geometry (i.e., the outline or contour) of the formed three-dimensional object 300 in at least a portion thereof corresponding to said housing 210 with an altered shape and/or size. Thus, in the present invention, there may be an instance according to which the formed three-dimensional object 300 may include only one self-propelled module 200 whose housing 210 may be transformed by one of the methods described below so as to enable altering of the shape and/or sizes thereof, wherein all other self-propelled modules 200 being part of the three-dimensional object 300 may have each non-transformable housing 210 (i.e., a housing 210 with fixed and non-alterable shape and sizes). Furthermore, in the present invention, there may be instances according to which the formed three-dimensional object 300 may include two, three, four, five, six, seven, eight, nine, ten or more self-propelled modules 200, the housing 210 of each of which may be configured to transform or alter the shape and/or size in one of the fashions described below.

The housing 210 of at least one of the self-propelled modules 200 being part of the system 500-2 and shown in Fig. 2-3 is configured flexible or elastic, and the self-propelled module 200 is further provided with one or more controllable working members (not shown) at least partially installed or secured each in the internal space of the housing 210 and configured each to interact with at least one of the structural portions of the housing 210 while setting in motion or moving said movable working members in response to respective control commands. Thus, the movable working members of the self-propelled module 200, as a result of being moved or set in motion, may all enter into interaction with one and the same structural portion of the housing 210 or different structural portions of the housing 210. Furthermore, in the present invention, there may be an instance when at least one of the movable working members of the self-propelled module 200 may enter into interaction or interact simultaneously with two, three, four, five, six, seven, eight, nine, ten or more structural portions of the housing 210. The interaction of at least one movable working member of the self-propelled module 200 with at least one of the structural portions of the housing 210 as a result enables at least partial altering of the shape and/or size of the housing 210 (in particular, by way of bending or curving a portion of the housing 210, or pressing or compressing a portion of the housing 210, or stretching or pulling a portion of the housing 210, or making concave or denting a portion of the housing 210, or by other characteristic causes) by means of application of an acting force or acting forces of various types, levels and directions to said at least one portion of the housing 210, wherein such alterations in the shape and/or sizes of the housing 210 may be implemented not only in the region of the housing 210 corresponding to said portion of the housing 210 which portion enters into interaction with said working member of the self-propelled module 200 but also in the region of the housing 210 surrounding said portion of the housing 210 or in the entire housing 210. To set in motion or move the movable working members of the self-propelled module 200, this self-propelled module 200 further comprises at least one drive device (not shown), at least partially installed in the internal space of the housing 210 and controlled by the control unit of the self-propelled module 200, which in turn may receive control commands from the control device of the system 500-2. The drive device of the self-propelled module 200 is operably coupled to each of the movable working members (in particular, directly, by using one connecting element or using two or more operably coupled to one another connecting elements) so as to enable transfer of the force generated by said drive device to at least one of the movable working members of the self-propelled module 200 to set in motion or move said at least one movable working member in response to the control commands of the control device of the system 500-2 presented to said drive device by means of the control unit of the self-propelled module 200. Thus, in the present invention, there may be an instance according to which the self-propelled module 200 comprises only one drive device (not shown) operably coupled to one movable working member of the self-propelled module 200 or operably coupled to two or more movable working members of the self-propelled module 200 so as to enable them to be substantially simultaneously or (alternatively) sequentially set in motion or moved. Furthermore, in the present invention, there may be an instance according to which the self-propelled module 200 comprises two drive devices (not shown) operably coupled both to one and the same movable working member of the self-propelled module 200. **In** the present invention, there may be an instance according to which the self-propelled module 200 comprises two drive devices (not shown) operably coupled to distinct movable working members of the self-propelled module 200 or to distinct groups/pluralities of movable working members, which may be formed each from the individual movable working members of the self-propelled module 200 or from operably coupled to one another movable working members of the self-propelled module 200, wherein, in response to control commands from the control device of the system 500-2, the both drive devices may be set in motion (in particular, simultaneously or sequentially) or only one of these drive devices may be set in motion. Furthermore, in the present invention, there may be an instance according to which the self-propelled module 200 comprises one or more drive devices (not shown), each of which is operably coupled to at least two movable working members of the self-propelled module 200, wherein, upon actuating said drive device, it may enable setting in motion or movement of only one of said movable working members or at least one of said at least two movable working members (in particular, by means of the use of auxiliary technical means and/or devices operably coupled to at least one or each of the movable working members so as to enable blocking of the movement of the remaining movable working members and being under the control of, for example, the control unit of the self-propelled module 200).

In one embodiment of the present invention, the housing 210 of at least one of the self-propelled modules 200 being part of the system 500-2 may be configured flexible or elastic, and the self-propelled module 200 may be further provided with one or more movable working members (not shown) at least partially installed or secured each in the internal space of the housing 210 and operably coupled each to at least one of the structural portions of the housing 210. Thus, the movable working members of the self-propelled module 200, as a result of being moved or set in motion in response to respective control commands, may act (transfer the acting force) on one and the same structural portion of the housing 210 or different structural portions of the housing 210. Furthermore, in this embodiment of the present invention, there may be an instance when at least one of the movable working members of the self-propelled module 200 may be operably coupled simultaneously with two, three, four, five, six, seven, eight, nine, ten or more structural portions of the housing 210. The operable coupling of at least one movable working member of the self-propelled module 200 with at least one of the structural portions of the housing 210 in this embodiment of the present invention as a result enables at least partial altering of the shape and/or size of the housing 210 (in particular, by way of bending or curving a portion of the housing 210, or pressing or compressing a portion of the housing 210, or stretching or pulling a portion of the housing 210, or making concave or denting a portion of the housing 210, or the like) by means of application of an acting force or acting forces of various types, levels and directions to said at least one portion of the housing 210, wherein such alterations in the shape and/or sizes of the housing 210 may be implemented not only in the region of the housing 210 corresponding to said portion of the housing 210 with which said working member of the self-propelled module 200 is operably coupled but also in the region of the housing 210 surrounding said portion of the housing 210 or in the entire housing 210. To set in motion or move the movable working members of the self-propelled module 200 in this embodiment of the present invention, this self-propelled module 200 further comprises at least one drive device (not shown), at least partially installed in the internal space of the housing 210 and controlled by the control unit of the self-propelled module 200, which in turn may receive control commands from the control device of the system 500-2, wherein, in general, the drive device of the self-propelled module 200 in this embodiment of the present invention is configured, operably coupled to the corresponding movable working members of the self-propelled module 200 and functions (operates) similarly to the drive device described above for the preferred embodiment of the self-propelled module 200. In one of the variations of this embodiment of the present invention, the housing 210 of at least one or each of the self-propelled modules 200 being part of the system 500-2 may only be partially configured flexible or elastic and may be operably coupled or configured to functionally interact with the movable working members, wherein the remaining portion of said housing 210 may be configured integral or composite (assemblable) and may have an unalterable shape and size (may be configured rigid without the possibility of altering the shape and/or sizes thereof while application thereto or transfer thereon of any acting force).

In another embodiment of the present invention, the housing 210 of at least one of the self-propelled modules 200 being part of the system 500-2 may be made of portions or plates (in particular, at least two portions or plates) coupled to one another or configured to displace with respect to one another so as to enable at least partial altering of the shape of said housing 210, and said at least one self-propelled module 200 is further provided with one or more movable working members (not shown), each of which is operably coupled or configured to interact with at least one of said portions or plates of the housing 210 so as to enable displacement thereof with respect to one another while setting in motion or moving said movable working members. Of note, the portions or plates of the housing 210 may be configured all rigid or may be configured all flexible or elastic, wherein, alternatively, one portion of said component portions or plates of the housing 210 may be configured rigid, and the other portion of said component portions or plates of the housing 210 may be configured flexible or elastic. The movable working members of the self-propelled module 200, as a result of being moved or set in motion, may act (transfer the acting force) on one and the same portion or plate of the housing 210 or different portions or plates of the housing 210. Thus, in this embodiment of the present invention, there may be an instance according to which the portions or plates forming the housing 210 in the self-propelled module 200 are operably coupled to one another using, for example, flexible or movable joints enabling the displacement of said portions or plates of the housing 210 upon applying thereto an acting force or acting forces from the corresponding working members of the movable module 200. Furthermore, in this embodiment of the present invention there may be an instance according to which the portions or plates forming the housing 210 in the self-propelled module 200 are disposed at a predetermined distance with respect to one another (i.e., between neighbouring component portions or plates of the housing 210 there are provided, for example, interspaces, gaps, or slotted openings) or are disposed immediately adjacent to one another (so as to be freely withdrawn from the mutual contact or interaction upon applying to such component plates of the housing 210 or to at least one of same at least one acting force or upon transferring at least one acting force onto at least one of the component plates of the housing 210) so as to form a generally continuous surface of the housing 210 and are configured to displace (one at a time, in pairs, groups, sets, pluralities, and/or the like) with respect to one another along at least one of the three spatial axes (in particular, along one spatial axis, two spatial axes or three spatial axes) while applying thereto an acting force or acting forces from the respective working members of the movable module 200, wherein at least a portion of said portions or plates being displaced of the housing 210 may interact with one another in the process of mutual displacement thereof and remain in a state of interaction following completion of said process of displacement. The displacement of the portions or plates forming the housing 210 of the self-propelled module substantially takes place due to the application of an acting force or acting forces of various types, levels and directions to the displaced portions or plates of the housing 210, resulting in enabling at least partial altering of the shape and/or size of the housing 210. Of note, in case of making the housing 210 of rigid component portions or plates, at least partial altering of the shape and/or size of the housing 210 may substantially be caused by an increase or decrease in the distance between at least a portion of the component portions or plates of the housing 210 and/or spatial displacement of at least a portion of the component portions or plates of the housing 210 with respect to one another, and/or tilting or rotation of at least a portion of the component portions or plates of the housing 210 with respect to one another, and/or by other characteristic causes. Of further note, in case of making the housing 210 of flexible or elastic component portions or plates, at least partial altering of the shape and/or size of the housing 210 may be caused by at least one of the above causes characteristic of rigid component portions or plates of the housing 210, and may also be further caused by bending or curving at least a portion of the component portions or plates of the housing 210 and/or pressing or compressing at least a portion of the component portions or plates of the housing 210, and/or stretching or pulling at least a portion of the component portions or plates of the housing 210, and/or by making concave or denting at least a portion of the component portions or plates of the housing 210, and/or by other characteristic causes. Furthermore, in this embodiment of the present invention, there may be an instance according to which at least one of the movable working members of the self-propelled module 200 may be operably coupled simultaneously with two, three, four, five, six, seven, eight, nine, ten or more component portions or plates of the housing 210. To set in motion or move the movable working members of the self-propelled module 200 in this embodiment of the present invention, this self-propelled module 200 further comprises at least one drive device (not shown), at least partially installed in the internal space of the housing 210 and controlled by the control unit of the self-propelled module 200, which in turn may receive control commands from the control device of the system 500-2, wherein, in general, the drive device of the self-propelled module 200 in this embodiment of the present invention is configured, operably coupled to the corresponding movable working members of the self-propelled module 200 and functions (operates) similarly to the drive device described above for the preferred embodiment of the self-propelled module 200. In one of the variations of this embodiment of the present invention, the housing 210 of at least one or each of the self-propelled modules 200 being part of the system 500-2 may only be partially made of the above component portions or plates coupled to one another or configured to displace with respect to one another, in particular may comprise only two, three, four, five or more such component portions or plates, wherein the remaining portion of said housing 210 may be configured integral or composite (assemblable) and may have an unalterable shape and size (may be configured rigid without the possibility of altering the shape and/or sizes thereof while application thereto or transfer thereon of any acting force).

In yet another embodiment of the present invention, the housing 210 of at least one of the self-propelled modules 200 being part of the system 500-2 may be made of movable portions or movable plates (in particular, of at least two movable portions or plates) each of which is configured to alter the spatial position and/or spatial orientation thereof so as to enable at least partial altering of the shape of said housing 210, and said at least one self-propelled module 200 is further provided with one or more movable working members (not shown), each of which is operably coupled or configured to interact with at least one of said movable portions or plates of the housing 210 so as to enable displacement thereof with respect to one another while setting in motion or moving said movable working members. Of note, the movable portions or plates of the housing 210 may be configured all rigid or may be configured all flexible or elastic, wherein, alternatively, one portion of said movable portions or plates of the housing 210 may be configured rigid, and the other portion of said movable portions or plates of the housing 210 may be configured flexible or elastic. The movable working members of the self-propelled module 200, as a result of being moved or set in motion, may act (transfer the acting force) on one and the same movable portion or plate of the housing 210 or different movable portions or plates of the housing 210. Thus, in this embodiment of the present invention, there may be an instance according to which the movable portions or plates forming the housing 210 in the self-propelled module 200 are operably coupled to one another using, for example, flexible or movable joints enabling the altering of the spatial position and/or spatial orientation of said movable portions or plates of the housing 210 upon applying thereto an acting force or acting forces from the corresponding working members of the movable module 200. Furthermore, in this embodiment of the present invention there may be an instance according to which the movable portions or plates forming the housing 210 in the self-propelled module 200 are disposed at a predetermined distance with respect to one another (i.e., between neighbouring movable portions or plates of the housing 210 there are provided, for example, interspaces, gaps, or slotted openings) or are disposed immediately adjacent to one another (so as to be freely withdrawn from the mutual contact or interaction upon applying to such movable plates of the housing 210 or to at least one of same at least one acting force or upon transferring at least one acting force onto at least one of the movable plates of the housing 210) so as to form a generally continuous surface of the housing 210 and are configured to alter the spatial position and/or spatial orientation thereof upon applying thereto an acting force or acting forces from the respective working members of the movable module 200, wherein at least a portion of the movable portions or plates of the housing 210 may interact with one another in the process of altering of the spatial position and/or spatial orientation thereof and remain in a state of interaction following said process of altering of the spatial position and/or spatial orientation thereof. The altering of the spatial position and/or spatial orientation of the movable portions or plates forming the housing 210 of the self-propelled module substantially takes place due to the application of an acting force or acting forces of various types, levels and directions to said movable portions or plates of the housing 210, resulting in enabling at least partial altering of the shape and/or size of the housing 210. Of note, in case of making the housing 210 of rigid movable portions or plates, at least partial altering of the shape and/or size of the housing 210 may substantially be caused by an increase or decrease in the distance between at least a portion of the movable portions or plates of the housing 210 and/or spatial displacement of at least a portion of the movable portions or plates of the housing 210 with respect to one another, and/or tilting or rotation of at least a portion of the movable portions or plates of the housing 210 with respect to one another, and/or by other characteristic causes. Of further note, in case of making the housing 210 of flexible or elastic movable portions or plates, at least partial altering of the shape and/or size of the housing 210 may be caused by at least one of the above causes characteristic of rigid movable portions or plates of the housing 210, and may also be further caused by bending or curving at least a portion of the movable portions or plates of the housing 210 and/or pressing or compressing at least a portion of the movable portions or plates of the housing 210, and/or stretching or pulling at least a portion of the movable portions or plates of the housing 210, and/or by making concave or denting at least a portion of the movable portions or plates of the housing 210, and/or by other characteristic causes. Furthermore, in this embodiment of the present invention, there may be an instance according to which at least one of the movable working members of the self-propelled module 200 may be operably coupled simultaneously with two, three, four, five, six, seven, eight, nine, ten or more movable portions or plates of the housing 210. To set in motion or move the movable working members of the self-propelled module 200 in this embodiment of the present invention, this self-propelled module 200 further comprises at least one drive device (not shown), at least partially installed in the internal space of the housing 210 and controlled by the control unit of the self-propelled module 200, which in turn may receive control commands from the control device of the system 500-2, wherein, in general, the drive device of the self-propelled module 200 in this embodiment of the present invention is configured, operably coupled to the corresponding movable working members of the self-propelled module 200 and functions (operates) similarly to the drive device described above for the preferred embodiment of the self-propelled module 200. In one of the variations of this embodiment of the present invention, the housing 210 of at least one or each of the self-propelled modules 200 being part of the system 500-2 may only be partially made of the above movable portions or plates configured each to alter the spatial position and/or spatial orientation thereof, in particular may comprise only two, three, four, five or more such movable portions or plates, wherein the remaining portion of said housing 210 may be configured integral or composite (assemblable) and may have an unalterable shape and size (may be configured rigid without the possibility of altering the shape and/or sizes thereof while application thereto or transfer thereon of any acting force).

In some embodiments of the present invention, in at least one of the self-propelled modules 200, the housing 210 may be at least partially configured flexible or elastic and/or at least partially made of rigid component portions or plates, and/or at least partially made of flexible component portions or plates, and/or at least partially made of rigid movable portions or plates, and/or at least partially made of flexible or elastic movable portions or plates. In other words, the housing 210 of at least one of the self-propelled modules being part of the system 500-2 may have design features corresponding to any one of the above-described combinations (i.e., it may have multiple portions, each having one of the above features of the embodiment of the housing 210), wherein the features of the embodiment of each such combination are substantially described in the above description of the specific embodiments of the present invention related to the housing 210.

According to one of the embodiments of the present invention, in the housing 210 of at least one or each of the self-propelled modules 200 being part of the system 500-2 and used to form a three-dimensional object 300 there may be installed an independent movable element (not shown) configured to move in the interior of said housing 210 under the control of the control unit of the self-propelled module 200 so as to move said self-propelled module 200 in space. The control unit of the self-propelled module 200 which controls the operation of such independent movable element may not only actuate said movable element so as to enable movement thereof and switch off said movable element so as to enable stopping thereof but also alter the operating parameters of said movable element (for example, the speed of movement). By way of example, the independent movable element of the self-propelled module 200 may be configured in the form of a ball or sphere moving within the bounds of the housing 210 of the self-propelled module. By way of another example, the independent movable element of the self-propelled module 200 may be configured in the form of a controlled device or object of any shape capable of rolling over or tumbling in the internal space of the housing 210 of the self-propelled module. By way of another example, the independent movable element of the self-propelled module 200 may have a displaced center of gravity, which facilitates the task of enabling movement of such movable element in the internal space of the housing 210 of the self-propelled module. Thus, the independent movable element of the self-propelled module 200, disposed in the housing 210 of the self-propelled module, while movement within the bounds of the housing under the control of the control unit of the self-propelled module 200, exerts an action upon the housing 210 on the internal side thereof so as to enable setting of the housing 210 of the self-propelled module in motion and, accordingly, of the self-propelled module 200 itself.

According to another embodiment of the present invention, the housing 210 of at least one or each of the self-propelled modules 200 being part of the system 500-2 and used to form a three-dimensional object 300 may be provided with a drive device (not shown) operably coupled to said housing 210 or configured to act on said housing 210 so as to enable setting said housing 210 in motion to move said self-propelled module 200 in space, wherein such a drive device may be under the control of the control unit of the self-propelled module 200, thus allowing to switch on, switch off or alter the operating parameters of said drive device by way of presenting respective control commands to said drive device by said control unit, and the control commands of the control unit of the self-propelled module 200 may be generated by this control unit in response to the corresponding control commands of the control device of the system 500-2.

In other embodiments of the present invention, the housing 210 of at least one or each of the self-propelled modules 200 being part of the system 500-2 may be a folding mesh (not shown) configured to, when deployed, surround said at least one self-propelled module. The self-propelled module 200 in this embodiment of the present invention may further comprise a drive device being under the control of the control unit of the self-propelled module 200, which in turn may receive control commands from the control device of the system 500-2, and operably coupled to the mesh (not shown) so as to enable unfolding or deployment thereof while forming a three-dimensional object 300 in response to the control commands of the control device of the system 500-2. Of note, in this embodiment of the present invention, the mesh of the self-propelled module 200 may be present in two states: a folded or collapsed state which corresponds to the initial position of the mesh of the self-propelled module 200 and in which the mesh of the self-propelled module 200 is present while movement of the self-propelled module 200 (for example, during the movement of the self-propelled module 200 to a predetermined region of space and/or to a predetermined spatial location, including from one of the parking stations 100, as well as in the process of movement of the self-propelled module to one of the parking stations 100 while unforming of the three-dimensional object 300), and an expanded state in which the mesh of the self-propelled module 200 is present while presence of the self-propelled module 200 as part of a three-dimensional object), wherein the mesh of the self-propelled module 200 in the collapsed state has its minimum size, and the mesh of the self-propelled module 200 in the expanded state has its maximum size.

In other embodiments of the present invention, the housing 210 in each or at least one of the self-propelled modules 200 being part of the system 500-2 and used to form a three-dimensional object 300 may be formed from individual functional portions (not shown) and may comprise a drive device (not shown) operably coupled to said functional portions so as to enable extension or deployment of these functional portions to alter the shape, sizes and/or contour of said housing 210, thus allowing to alter at least a portion of the three-dimensional object 300 corresponding to said self-propelled module 200.

In some other embodiments of the present invention, the housing 210 in each or at least one of the self-propelled modules 200 being part of the system 500-2 and used for forming a three-dimensional object 300 may be formed from distinct controllable functional portions (not shown), wherein the control unit of the self-propelled module 200 may be communicatively coupled to said controllable functional portions so as to enable displacement (altering of spatial locations) of said functional portions with respect to one another in response to control commands of said control unit which commands, in turn, may be generated by the control unit of the self-propelled module 200 in response to corresponding control commands of the control device of the system 500-2 for altering the shape, sizes and/or contour of said housing 210.

In some other embodiments of the present invention, the housing 210 in each or at least one of the self-propelled modules 200 being part of the system 500-2 and used for forming a three-dimensional object 300 may be formed from distinct controllable functional portions (not shown), wherein the control unit of the self-propelled module 200 may be communicatively coupled to said controllable functional portions so as to enable expansion or deployment of these functional portions in response to control commands of said control unit for altering the shape, sizes and/or contour of said housing 210.

According to one of the embodiments of the present invention, at least two of the self-propelled modules 200, which are part of the system 500-2 and whose housings 210 form a three-dimensional object 300, can be further provided each with one or more spring-loaded or flexible connecting elements (not shown) enabling a detachable coupling to one another of said at least two self-propelled modules 200 while forming a three-dimensional object 300 and enabling altering of the spatial location and/or spatial orientation of at least one of said at least two self-propelled modules 200 to at least partially alter the geometry of a three-dimensional object 300 (i.e., the shape, sizes and/or contour of such three-dimensional object 300). Thus, the flexible connecting elements (not shown), which can be provided to the housings 210 of at least a portion of the self-propelled modules 200 being part of the system 500-2 and used to form a three-dimensional object 300 or of each of these self-propelled modules 200 substantially implement movable connections between the housings 210 of said self-propelled modules 200, thus allowing to alter the spatial locations and/or spatial orientations of these self-propelled modules 200, including to displace these self-propelled modules 200 with respect to one another and/or with respect to the remaining self-propelled modules 200, whose housings 210 form a three-dimensional object 300 and are not provided with similar flexible connecting elements, along at least one of three coordinate axes (x,y,z) (for example, along only one of the three coordinate axes, simultaneously along any two of the three coordinate axes, or simultaneously along all three coordinate axes), and also to tilt or rotate these self-propelled modules 200 with respect to one another and/or with respect to said remaining self-propelled modules 200 for altering the shape, sizes and/or contour of at least a portion of the formed three-dimensional object 300 corresponding to the housings 210 with an altered spatial location and/or housings 210 with an altered spatial inclination as part of the three-dimensional object 300. Of further note, in this embodiment of the present invention, the altering of the spatial location and/or spatial orientation of at least one of the self-propelled modules 200 whose housings 210 are provided with flexible connecting elements (not shown) can be carried out by the user manually or using special improvised means that can be manipulated by said user, wherein the housing 210 of at least one of such self-propelled modules 200 with flexible connecting elements may further be provided with at least one fixing means or lock (not shown) to fix the altered spatial location and/or the altered spatial orientation of said at least one self-propelled module 200 with respect to the remaining self-propelled modules 200 whose housings 210 form a three-dimensional object 300. Furthermore, in one of the variations of this embodiment of the present invention, in which at least two of the self-propelled modules 200 being part of the system 500-2 are further provided each with flexible connecting elements (not shown), at least one or each of said at least two self-propelled modules 200 may be further provided with a drive device (not shown) being under the control of the control unit of said self-propelled module 200 which in turn can receive control commands from the control device of the system 500-2 and operably coupled to the above-described flexible connecting elements (not shown) of said at least one self-propelled module 200 so as to enable altering of the spatial location and/or its spatial orientation thereof, thus allowing to at least partially alter the geometry of a previously formed or newly formed three-dimensional object 300 (i.e., to alter the shapes, sizes and/or outlines of such a three-dimensional object 300).

According to another embodiment of the present invention, at least two of the self-propelled modules 200, which are part of the system 500-2 and whose housings 210 form a three-dimensional object 300, can be further provided each with one or more movable joints (not shown) enabling a detachable coupling to one another of said at least two self-propelled modules 200 while forming a three-dimensional object 300 and enabling altering of the spatial location and/or spatial orientation of at least one of said at least two self-propelled modules 200 to at least partially alter the geometry of a three-dimensional object 300 (i.e., the shape, sizes and/or contour of such three-dimensional object 300). Thus, the movable joints (not shown), which can be provided to the housings 210 of at least a portion of the self-propelled modules 200 being part of the system 500-2 and used to form a three-dimensional object 300 or of each of these self-propelled modules 200 substantially implement movable connections between the housings 210 of said self-propelled modules 200, thus allowing to alter the spatial locations and/or spatial orientations of these self-propelled modules 200, including to displace these self-propelled modules 200 with respect to one another and/or with respect to the remaining self-propelled modules 200, whose housings 210 form a three-dimensional object 300 and are not provided with similar movable joints, along at least one of three coordinate axes (x,y,z) (for example, along only one of the three coordinate axes, simultaneously along any two of the three coordinate axes, or simultaneously along all three coordinate axes), and also to tilt or rotate these self-propelled modules 200 with respect to one another and/or with respect to said remaining self-propelled modules 200 for altering the shape, sizes and/or contour of at least a portion of the formed three-dimensional object 300 corresponding to the housings 210 with an altered spatial location and/or housings 210 with an altered spatial inclination as part of the three-dimensional object 300. Of further note, in this embodiment of the present invention, the altering of the spatial location and/or spatial orientation of at least one of the self-propelled modules 200 whose housings 210 are provided with movable joints (not shown) can be carried out by the user manually or using special improvised means that can be manipulated by said user, wherein the housing 210 of at least one of such self-propelled modules 200 with movable joints may further be provided with at least one fixing means or lock (not shown) to fix the altered spatial location and/or the altered spatial orientation of said at least one self-propelled module 200 with respect to the remaining self-propelled modules 200 whose housings 210 form a three-dimensional object 300. Furthermore, in one of the variations of this embodiment of the present invention, in which at least two of the self-propelled modules 200 being part of the system 500-2 are further provided each with movable joints (not shown), at least one or each of said at least two self-propelled modules 200 may be further provided with a drive device (not shown) being under the control of the control unit of said self-propelled module 200 which in turn can receive control commands from the control device of the system 500-2 and operably coupled to the above-described movable joints (not shown) of said at least one self-propelled module 200 so as to enable altering of the spatial location and/or its spatial orientation thereof, thus allowing to at least partially alter the geometry of a previously formed or newly formed three-dimensional object 300 (i.e., to alter the shapes, sizes and/or outlines of such a three-dimensional object 300).

According to yet another embodiment of the present invention, at least one of the self-propelled modules 200 being directed to a predetermined region of space in response to respective navigation commands from the control device of the system 500-2 may further be provided with a gripping device or a grip (not shown) configured to move and/or position at least one other self-propelled module of said directed self-propelled modules 200 while forming a three-dimensional object 300 from the housings 210 of the self-propelled modules 200, in particular while forming at least a portion of a three-dimensional object 300 from the housings 210 relating to said self-propelled modules interacting with one another by means of a grip. Of note, in this embodiment of the present invention, the grip (not shown), which may be provided to the housing 210 in at least one of the self-propelled modules 200 used to form a three-dimensional object 300, can be under the control of the control unit of said self-propelled module 200, which in turn can receive control commands to control the grip from the control device of the system 500-2, wherein said self-propelled module 200 with a grip may further comprise at least one drive device for actuating said grip, in particular the functional elements thereof. In one of the variations of this embodiment of the present invention, the grip of the self-propelled module 200 can be configured in the form of a robotic manipulator or a robotic arm configured to detachably grip objects, in particular the self-propelled modules 200.

According to another embodiment of the present invention, the system 500-2 may further comprise one or more structural modules (not shown), and at least one of the self-propelled modules 200 being directed to a predetermined region of space in response to respective navigation commands from the control device of the system 500-2 may further be provided with a gripping device or a grip (not shown) configured to move and/or position at least one of said structural modules to form at least a portion of a three-dimensional object 300 from the housings 210 of self-propelled modules and said structural modules (not shown). Thus, the grip (not shown) of the movable module 200 can grip the structural module of the system 500-2 so as to provide for the proper positioning or movement thereof with respect to at least one other movable module 200 of the movable modules 200 which are to be used to form a three-dimensional object 300. Of note, in this embodiment of the present invention, the grip (not shown), which may be provided to the housing 210 in at least one of the self-propelled modules 200 used to form a three-dimensional object 300, can be under the control of the control unit of said self-propelled module 200, which in turn can receive control commands to control the grip from the control device of the system 500-2, wherein said self-propelled module 200 with a grip may further comprise at least one drive device for actuating said grip, in particular the functional elements thereof. Of further note, in this embodiment of the present invention, the sizes, shape, material of manufacture, weight and/or the like of each of the structural modules of the system 500-2 are not specifically limited in any manner. By way of example, at least one of the structural modules of the system 500-2 may be configured in the form of a brick, a cement block, a metal beam, a composite arch, or the like of any shape and of any size. In one of the variations of this embodiment of the present invention, the grip of the self-propelled module 200 can be configured in the form of a robotic manipulator or robotic arm configured to detachably grip objects, in particular structural modules of the system 500-2, wherein such structural modules of the system 500-2 can each be further provided with devices or means that facilitate the grip, lifting, holding, suspension and/or movement in space of said structural module of the system 500-2, for example, eyelets, hooks, eye rings, or the like. In another variation of this embodiment of the present invention, at least a portion of the self-propelled modules 200 used to form a three-dimensional object 300 and at least a portion of the structural modules of the system 500-2 may be provided each with at least one fastening means (not shown) such that the grip of the self-propelled module 200 may further enable detachable securement of each gripped structural module of the system 500-2 to at least one other self-propelled module 200 by way of bringing the respective fastening means thereof into interaction.

In yet another variation of the embodiment of the present invention, in which the system 500-2 further includes one or more structural modules, at least one of said structural modules of the system 500-2 may have a transformable housing configured to transform in response to control commands so as to enable altering of the shape and/or size of at least a portion of said housing of the structural module of the system 500-2, and the control device of the system 500-2 can be configured to present control commands to said at least one structural module of the system 500-2 for transformation of the housing thereof. Of note, the transformation of the housing of each structural module of the system 500-2 leads to at least partial altering of the geometry of the formed three-dimensional object 300, in particular in a portion of the three-dimensional object 300 corresponding to at least said structural module of the system 500-2, being part of said three-dimensional object 300, in particular in a portion of the three-dimensional object 300 corresponding to said structural module of the system 500-2, being part of said three-dimensional object 300, and self-propelled modules 200 whose spatial location depends on said structural module of the system 500-2 and, accordingly, may be altered as a result of the transition of said structural module of the system 500-2 to a transformed state or as a result of the transformation of said structural module of the system 500-2.

According to some other embodiment of the present invention, while using a drive device (not shown) as part of the self-propelled module 200, as described herein for some embodiments of the present invention, such self-propelled module can further be configured to present in real time the data about the operation of the drive device thereof to the control device of the system 500-2 so as to enable replacement thereof with at least one other self-propelled module 200 from among the self-propelled modules 200 being present in the parking stations 100 being part of the system 500-2, the self-propelled modules 200 being present in a given region of space while forming a three-dimensional object 300, the self-propelled modules 200 directed to a given region of space by the control device of the system 500-2 from the corresponding parking stations 100 for forming a three-dimensional object 300, self-propelled modules forming other three-dimensional object different from the three-dimensional object 300, and/or the self-propelled modules 200 released as a result of unforming other three-dimensional object different from the three-dimensional object 300 in the event of failure of the drive device of said self-propelled module 200. Thus, in one variation of this embodiment of the present invention, the system 500-2 may include at least two self-propelled modules, at least one or each of which may be further configured to present in real time the data about the operation of the drive device thereof to a control device of the system 500-2 so as to enable replacement thereof with at least one other self-propelled module 200 from at least one of the parking stations 100 being part of the system 500-2 in the event of failure of said drive device. In another variation of this embodiment of the present invention, the system 500-2 may include one or more self-propelled modules, at least one or each of which may be further configured to present in real time the data about the operation of the drive device thereof to a control device of the system 500-2 so as to enable replacement thereof with at least one other self-propelled module 200 from at least one of the parking stations 100 being part of the system 500-2 in the event of failure of said drive device.

According to some other embodiment of the present invention, the control device of the system 500-2 may be further configured to present navigation commands to at least a portion, to at least one (one or more), or to at least two (two or more) of self-propelled modules 200 being part of the system 500-2 and whose housings 210 form a three-dimensional object 300 so as to enable re-arrangement of said self-propelled modules 200 to at least partially alter the geometry of said three-dimensional object 300 (i.e. the shape, size and/or contour of this three-dimensional object 300).

According to other embodiments of the present invention, the self-propelled modules 200 whose housings 210 form a three-dimensional object 300 may be divided into at least two groups, wherein the self-propelled modules 200 in one of said at least two groups may have a movement speed and/or movement direction that are different from those of the self-propelled modules 200 in the other group of said at least two groups.

According to other embodiments of the present invention, the self-propelled modules 200 whose housings 210 form a three-dimensional object 300 can be divided into at least two groups, wherein the self-propelled modules 200 in one of said at least two groups can have overall dimensions, a shape of the housing, operating parameters, type of a self-propelled module and/or type of power source of a self-propelled module and/or kind of a self-propelled module different from the self-propelled modules 200 in the other group of said at least two groups. Of note, the system 500-2 may generally include the following kinds of the self-propelled modules 200: ground self-propelled modules 200, above-water self-propelled modules 200, underwater self-propelled modules 200 and aerial self-propelled modules 200. Of further note, each of the kinds of the self-propelled modules 200 may include various types of self-propelled modules 200 known from the prior art. For example, in terms of the aerial self-propelled modules 200 there may be distinguished the following types of self-propelled modules 200 known in the state of the art: airplanes, helicopters, gliders, aerostats, balloons, drones, and the like.

According to some embodiments of the present invention, at least one or at least a portion (e.g., at least two) of the self-propelled modules 200 which are part of the system 500-2 and whose housings 210 form a three-dimensional object 300 can be further configured each to maintain the spatial location thereof previously occupied while forming a three-dimensional object 300 for a predetermined period of time, in particular for a period of time corresponding to the duration of formation of the entire three-dimensional object 300 or the duration of formation of at least a portion of the three-dimensional object 300 in accordance with a given model of a three-dimensional object so as to enable such formed three-dimensional object 300 to remain in place for at least said period of time.

According to some other embodiments of the present invention, the self-propelled modules 200 which are part of the system 500-2 and whose housings 210 form a three-dimensional object 300 can be divided into two or more groups, and the control device of the system 500-2 can enable formation of a single or one three-dimensional object 300 using all said groups of the self-propelled modules 200. In one variation of this embodiment of the present invention, one of the groups of the self-propelled modules 200 may be configured to form one portion of a three-dimensional object 300, and another group of the groups of the self-propelled modules 200 may be configured to form another portion of said three-dimensional object 300.

According to various embodiments of the present invention, at least a portion or each of the self-propelled modules which are part of the system 500-2 and whose housings 210 form a three-dimensional object 300 can be further configured each to alter the spatial location thereof in accordance with a given model of a three-dimensional object so as to enable movement of at least a portion of said three-dimensional object 300 in space. In other words, the possibility of movement of one or more self-propelled modules 200 being part of the formed three-dimensional object 300 from the initial spatial location thereof as part of the three-dimensional object 300, in which said self-propelled module is present in a static or unmovable state, according to a predetermined trajectory of movement or predetermined route of movement which correspond to a given model of a three-dimensional object, followed by return to said initial spatial position or stopping at (occupying of) a new spatial location, in which said self-propelled module will again be present in a static or unmovable state allows to make movable or dynamic at least a portion of the three-dimensional object 300, which portion corresponds to said self-propelled modules 200 being moved in space, wherein each self-propelled module 200 being moved in space can move at least within the limits of one of ground space, above-water space, air space and underwater space (including over the surface of other physical objects at least partially situated in at least one of said spaces) or within the limits of any combination of said spaces, thus, in turn, allowing the portion of the three-dimensional object 300 corresponding to said self-propelled modules 200 being moved in space to move (i) during the entire cycle of movement within the limits of one and the same space (for example, only in airspace) or (ii) to move in one of the spaces (for example, in the above-water space) during a portion of the cycle of movement and to move in other space of said spaces (for example, in the underwater space) during the remaining portion of the cycle, or (iii) to transit sequentially from one space to at least one other space of said spaces (for example, to start movement in the ground space, then transit into the above-water space, then submerge into the underwater space, then go into the above-water space again, and then take off from the above-water space into the air space and finally land from the air space into the ground space) so as to form a closed cycle, or the like.

According to various other embodiments of the present invention, the control device of the system 500-2 may be further configured to present to at least one or a portion of the self-propelled modules 200 which are part of the system 500-2 and whose housings 210 form a three-dimensional object 300 the data about altering of at least a portion of the three-dimensional object 300, and each of said portion of the self-propelled modules 200 can be further configured to alter the spatial position thereof in real time in accordance with said data about altering of the portion of the three-dimensional object so as to provide for the formation of at least partially altered three-dimensional object. In other words, the previously formed three-dimensional object 300 can be re-arranged or modified at any moment of time (for example, according to the user's desire presented, by means of a user device, a control panel or an operator's control point, in the form of control commands to the control device of the system 500-2, which in turn can process said user control commands and generate, as a result, said data about altering of the three-dimensional object), thus allowing to alter the geometry of at least a portion of the previously formed three-dimensional object 300 or even enable movement or motion of said portion of the three-dimensional object 300. For example, in the case when the three-dimensional object is a drawbridge, the portions of such drawbridge corresponding to the lifting leaves thereof may initially be in a lowered (expanded) state, and then can be raised by way of instantaneously or gradually altering the spatial locations of the self-propelled modules 200 whose housings 210 form said bridge leaves.

According to various other embodiments of the present invention, the control device of the system 500-2 may be further configured to present, to at least a portion or to at least one (one or more) of the self-propelled modules which are part of the system 500-2 and whose housings 210 form a three-dimensional object 300, the data about altering of the model of a three-dimensional object, and said self-propelled modules 200 can be further configured each to alter the spatial position thereof in real time in accordance with said data about altering of the model of a three-dimensional object so as to enable the performance of movement of said three-dimensional object or at least one portion thereof in at least one of the ground, above-water, underwater or air spaces, including over the surface of a physical object situated in at least one of said spaces.

In one embodiment of the present invention, the self-propelled modules 200 which are part of the system 500-2 and whose housings 210 form a three-dimensional object 300 can be divided into at least two groups, wherein one of said groups of self-propelled modules can be configured to form an unmovable portion of said three-dimensional object 300, and the other group of said groups of self-propelled modules is configured to form a movable portion of said three-dimensional object 300. For example, at least one group of self-propelled modules can form fixed unmovable spans of a three-dimensional object 300 in the form of a drawbridge, and at least one other group of self-propelled modules can form the lifting leaves of said drawbridge and enable movement thereof to perform the raising and lowering of these bridge leaves by way of altering the spatial location of all self-propelled modules forming said leaves simultaneously in accordance with a predetermined trajectory or pattern of movement corresponding to a given model of a three-dimensional object.

In another embodiment of the present invention, the control device of the system 500-2 may enable altering of the spatial position of at least one or each of the self-propelled modules 200 which are part of the system 500-2 and whose housings 210 form a three-dimensional object 300 so as to enable the displacement of said self-propelled module 200 with respect to at least one of the remaining self-propelled modules related to said self-propelled modules 200 along at least one of the three coordinate axes (x,y,z) such that said three-dimensional object 300 may assume a concave shape, convex shape, irregular, regular or curvilinear shape.

In yet another embodiment of the present invention, the control device of the system 500-2 may be further configured to present navigation commands to the self-propelled modules 200 which are part of the system 500-2 and whose housings 210 form a three-dimensional object 300 for collective movement of said self-propelled modules 200 so as to enable the maintenance of a given model of a three-dimensional object, thus allowing to uniformly move the previously formed three-dimensional object 300 without disrupting the integrity thereof.

Of note, each three-dimensional object 300, which can be formed using the self-propelled modules 200, is substantially brought to correspond to a particular model of a three-dimensional object of the models of three-dimensional objects whose data can be presented by the control device of the system 500-2 to the control units of self-propelled modules used to form the three-dimensional object 300. In particular, the three-dimensional object 300 may be defined automatically depending on a predetermined or user-selected model of a three-dimensional object and/or depending on a predetermined or user-selected region of space in which there is a need to form the three-dimensional object 300. Alternatively, the three-dimensional object 300 which must be formed in a predetermined region of space may be selected or defined by the user separately from said region of space and/or separately from the model of a three-dimensional object, in particular, using, for example, a user device provided with standard input/output means. Of note, data about a three-dimensional object 300, which must be formed in a predetermined region of space in accordance with a predetermined model of a three-dimensional object and whose formation process is substantially under the control of the control device of the system 500-2, is presented by the control device of the system 500-2 as part of the data about the model of a three-dimensional object to the corresponding control units of those self-propelled modules 200 whose housings 210 form said three-dimensional object 300, wherein said data about the model of a three-dimensional object can be pre-loaded or recorded by the operator or user into a local database being part of the control device of the system 500-2 or may be transferred as a data packet from an external source of data (e.g., from a website, database, data server, and the like) via a wireless data transfer channel (not shown) established between the control device of the system 500-2 and this external source of data in response to a request from the control device of the system 500-2, which, in turn, may be generated, for example, in response to a request from a user device with the help of which the user can select said three-dimensional object 300 from a list of selectable images of three-dimensional objects which can be formed in a given region of space.

The three-dimensional object 300 being formed in a given region of space can be an unmovable or static three-dimensional object. Furthermore, the three-dimensional object 300 being formed in a given region of space may be a movable or dynamic three-dimensional object. Furthermore, the three-dimensional object 300 being formed in a given region of space may be any combination of a static three-dimensional object and a dynamic three-dimensional object. Alternatively, the three-dimensional object 300 being formed in a given region of space in accordance with a given model of a three-dimensional object may be a three-dimensional object having at least one movable portion or being configured at least partially movable.

In particular, as shown in Fig. 2 by way of an illustrative example, the self-propelled modules 200 whose housings 210 form a three-dimensional object 300 form a predetermined number of sequentially disposed horizontal or vertical rows (i.e., a matrix of self-propelled modules 200) which are formed from self-propelled modules 200-1, 200-2, 200-3. Of note, in each of the rows of the three-dimensional object 300 there may be disposed the self-propelled modules 200 of one and the same type or the self-propelled modules 200 of different types.

Furthermore, as shown in Fig. 2 by way of an illustrative example, the self-propelled modules 200 in the form of unmanned aerial vehicles with full or replenished range may fly out (or, alternatively, drive out, float out, jump out, exit, and the like) from respective parking stations 100 being part of the system 500-2 substantially simultaneously or sequentially at short time intervals to form one or more entrance groups of self-propelled modules or individual self-propelled modules directed by the control device of the system 500-2 to a given region of space in which a three-dimensional object 300 is contemplated to be formed. Furthermore, the control device of the system 500-2 presents navigation commands to directed self-propelled modules 200 present in a given region of space so as to enable each of said directed self-propelled modules 200 to be placed in a given spatial location in accordance with a given model of a three-dimensional object in which said self-propelled module 200 is part of a plurality of self-propelled modules forming a three-dimensional object 300.

Furthermore, as shown in Fig. 2 by way of an illustrative example, while unforming or re-arranging the three-dimensional object 300, the self-propelled modules 200 forming the three-dimensional object 300 or at least a portion of same may exit (e.g., fly out, drive out, float out, jump out, roll out, crawl out, or the like) from a plurality of self-propelled modules forming the three-dimensional object 300 in a given region of space substantially simultaneously, sequentially or at predetermined time intervals to form one or more exit groups of self-propelled modules or individual self-propelled modules directed by the control device of the system 500-2 towards the parking stations 100 being part of the system 500-2. Alternatively, the control device of the system 500-2 may direct at least a portion of the self-propelled modules 200 from the groups of self-propelled modules formed as a result of the unforming or re-arrangement of the three-dimensional object 300 to another region of space in which it is contemplated to form another three-dimensional object which may coincide with a previously formed three-dimensional object 300 or which may be at least partially different therefrom. Furthermore, from the plurality of self-propelled modules which form the three-dimensional object 300 in a given region of space, the self-propelled modules 200 to be replaced (i.e., self-propelled modules 200 with insufficient range or discharged self-propelled modules 200, or self-propelled modules 200 with some malfunctions or defects) may also exit.

As shown in Fig. 2, while the approach of the groups of self-propelled modules, directed by the control device of the system 500-2 towards the parking stations 100 being part of the system 500-2, to said parking stations 100, the control device of the system 500-2 enables substantially simultaneous or sequential withdrawal of the self-propelled modules 200 from said groups of self-propelled modules so as to enable each of such self-propelled modules 200 to be placed or parked in one or on one of said parking stations 100, in particular on a parking station 100 having at least one free or unoccupied charging device. In the event of the approach of a single self-propelled module 200 directed by the control device of the system 500-2 to the parking stations 100, the control device of the system 500-2 enables such self-propelled module 200 to be placed or parked in one or on one of said parking stations 100, in particular in response to control commands of the control device of the system 500-2 presented to the control unit of the self-propelled module 200.

In another embodiment of the present invention, the control device of the system 500-2 may further enable direction of each discharged self-propelled module 200 whose housings 210 form a three-dimensional object 300 to one of the parking stations 100 being part of the system 500-2 for charging or replenishing the range thereof using a charging device on said parking station 100 and may further enable return of said self-propelled module 200 with the replenished range to a given region of space with said three-dimensional object 300 formed therein so as to provide for replacement of at least one of other discharged self-propelled modules 200 being present as part of said three-dimensional object 300.

In some other embodiment of the present invention, the control device of the system 500-2 may enable replacement of each discharged self-propelled module 200 being present as part of the three-dimensional object 300 with a charged self-propelled module 200 (i.e., a self-propelled module 200 with a full range or with at least partially replenished range) while presence of said discharged self-propelled module 200 in a spatial location in a given region of space located at the shortest distance to the place of charging thereof or the place of replenishment of range thereof, in particular to one of the parking stations 100 with a free charging device, or while presence of said discharged self-propelled module 200 in a spatial location corresponding to one of the places of replacement of self-propelled modules as part of the formed three-dimensional object 300.

In another embodiment of the present invention wherein one or more of the parking stations 100 being part of the system 500-2 may be further provided each with one or more charging devices (not shown), and one or more of the self-propelled modules 200 being part of the system 500-2 and whose housings 210 form a three-dimensional object 300 may be configured each to move to at least one of said parking stations 100 with charging devices so as to enable each of said directed self-propelled modules 200 to be coupled to one of said charging devices to replenish the range thereof.

According to one embodiment of the present invention, the three-dimensional object 300 may be configured multi-layered. In particular, in such an embodiment of the present invention, the self-propelled modules 200 directed by the control device of the system 500-2 to a given region of space to form a three-dimensional object 300 can be divided into two groups, wherein the housings 210 of the self-propelled modules from the first group can form at least one first layer of said three-dimensional object 300, and the housings 210 of self-propelled modules from the second group can form at least one second (other) layer of said three-dimensional object 300. The first layer of the three-dimensional object can be configured substantially parallel or at least partially parallel to the second layer of the three-dimensional object (see Fig. 4). Of note, in some instances the first layer of a three-dimensional object may have a shape, sizes, contours and/or spatial orientation other than the second layer of a three-dimensional object. Thus, in such embodiment of the present invention, the control device of the system 500-2 can enable formation of the first layer of a three-dimensional object different from or coinciding with the second layer of a three-dimensional object, and, accordingly, can enable formation of different from one another or identical first portion of a three-dimensional object 300 corresponding to said first layer and second portion of a three-dimensional object 300 corresponding to said second layer. Alternatively, the control device of the system 500-2 may enable formation, from the self-propelled modules 200 relating to the first layer, of a first three-dimensional object different from the second (other) three-dimensional object formed from the self-propelled modules 200 relating to the second layer, or coinciding with said second three-dimensional object.

In some other embodiment of the present invention, the control device of the system 500-2 may enable direction of the charged self-propelled modules 200 into a given region of space in quantity corresponding to the quantity of the self-propelled modules 200 whose housings 210 form a three-dimensional object 300 so as to enable them to be substantially simultaneously replaced with said charged self-propelled modules 200, wherein said directed charged self-propelled modules 200 have a range replenished using the charging devices of the parking stations being part of the system 500-2. In particular, in this embodiment of the present invention, the control device of the system 500-2 may further enable formation, in a given region of space, of a replacement three-dimensional object from charged self-propelled modules 200, which is a copy of the replaced three-dimensional object 300, so as to enable replacement of the three-dimensional object 300 to be replaced with said replacement three-dimensional object, wherein the control device of the system 500-2 can substantially simultaneously present control commands to the self-propelled modules 200 to be replaced and to the replacement self-propelled modules, thus minimizing the time delay while replacing the three-dimensional object 300 to be replaced with said replacement three-dimensional object. In one variation of this embodiment of the present invention, the replacement three-dimensional object may not only fully coincide with the three-dimensional object 300 to be replaced but also be at least partially different therefrom. In another variation of this embodiment of the present invention, the control device of the system 500-2 may further enable replacement of the three-dimensional object 300 to be replaced with a replacement three-dimensional object upon the expiration of a predetermined period of time during which the three-dimensional object to be replaced will at least partially be present in a given region of space at least partially in a static state and/or at least partially in a dynamic state.

In other embodiments of the present invention, the self-propelled modules 200 whose housings 210 form a three-dimensional object 300 can be divided into at least two groups, in each of which the housings 210 of the self-propelled modules 200 can form a corresponding one of the portions of the three-dimensional object 300 in a given region of space, wherein the control device of the system 500-2 can further enable formation, in said region of space, of at least one replacement portion of a three-dimensional object 300 from charged self-propelled modules 200 directed to said region of space by the control device of the system 500-2 so as to enable replacement of the portion to be replaced of the three-dimensional object 300 with said at least one replacement portion of the three-dimensional object. While replacing a portion to be replaced of a three-dimensional object 300 with a replacement portion of a three-dimensional object 300, the control device of the system 500-2 can substantially simultaneously present control commands to the self-propelled modules 200 whose housings 210 form the portion to be replaced of a three-dimensional object 300, and present control commands to the self-propelled modules 200 whose housings form the replacement portion of a three-dimensional object 300, thus minimizing the time delay while replacing the portion to be replaced of a three-dimensional object 300 with the replacement portion of a three-dimensional object 300.

In other embodiments of the present invention, the self-propelled modules 200 being directed by the control device of the system 500-2 to a given region of space can be divided into groups, in each of which the housings 210 of the self-propelled modules can at least partially form at least one of the layers of a three-dimensional object 300, which have different shapes and/or sizes.

In some embodiments of the present invention, at least one or each of the self-propelled modules 200 which are part of the system 500-2 and whose housings 210 form a three-dimensional object 300 may be provided with at least one power source and may be further configured to present in real time the data relating to the range to the control device of the system 500-2. In such embodiments of the present invention, the control device of the system 500-2 may be further configured to identify each discharged self-propelled module based on data about the range received from the control units of said self-propelled modules 200, thus enabling direction (for example, in response to navigation commands of the control device of the system 500-2) of each discharged self-propelled module of the self-propelled modules 200 whose housings form a three-dimensional object 300 to one of the parking stations 100 being part of the system 500-2 and further enables re-arrangement of the remaining self-propelled modules 200 whose housings 210 are involved in the formation of the three-dimensional object 300 to alter or maintain the shape and/or size of the three-dimensional object 300.

In some other embodiments of the present invention, the control device of the system 500-2 may be further configured to direct, to a predetermined region of space, one or more additional self-propelled modules 200 from at least one of the parking stations 100 being part of the system 500-2 so as to enable integration thereof into the structure of the three-dimensional object 300 for altering the shape and/or size of that three-dimensional object 300.

In some other embodiments of the present invention, the self-propelled modules 200 which are part of the system 500-2 and whose housings 210 form a three-dimensional object 300 can be divided into groups, in each of which the housings 210 of self-propelled modules can form one or more portions of a three-dimensional object 300, wherein, while forming a three-dimensional object 300, the control device of the system 500-2 may enable arrangement of said self-propelled modules 200 such that at least one of said portions of a three-dimensional object 300 may have a shape and/or sizes different from the remaining portions of the three-dimensional object 300.

In some other embodiment of the present invention, at least one or each of the self-propelled modules 200 being part of the system 500-2 may be provided with at least one power source, and said system 500-2 may further comprise a laser projection unit (not shown) configured to emit a laser beam, wherein said self-propelled module 200 may be provided with a laser emission receiver/converter (not shown) electrically coupled to said power source and configured to convert the received laser beam into an electric current so as to enable charging of said power source. In the given embodiment of the present invention, at least one or each of the self-propelled modules 200 being part of the system 500-2 may be further configured to present, in real time, data relating to the range to the control device of the system 500-2, and the control device of the system 500-2, in turn, may be further configured to control the operation of the laser projection unit (not shown) so as to enable direction of the laser beam to the self-propelled module 200 whose range is below a predetermined threshold value.

In various embodiments of the present invention, the control device of the system 500-2 may be configured to present navigation commands to at least a portion of the self-propelled modules 200 which are part of the system 500-2 and whose housings 210 form a three-dimensional object 300 to direct same to at least one of the parking stations being part of the system 500-2 upon the expiration of a predetermined period of time.

In various other embodiments of the present invention, the control device of the system 500-2 may be configured to present navigation commands to at least a portion of the self-propelled modules 200 which are part of the system 500-2 and whose housings 210 form a three-dimensional object 300 to direct same to at least one of the parking stations 100 being part of the system 500-2 substantially simultaneously or sequentially.

In various other embodiments of the present invention, the control device of the system 500-2 may be further configured to present navigation commands to at least a portion of the self-propelled modules 200 which are part of the system 500-2 and whose housings 210 form a three-dimensional object 300 to direct same to at least one of the parking stations 100 being part of the system 500-2 in groups or one after another.

In some embodiments of the present invention, the control device of the system 500-2 may be further configured to present navigation commands to one or more of the charged self-propelled modules 200 (i.e., self-propelled modules 200 with the range replenished using charging devices at the parking stations 100) being part of the system 500-2 so as to enable return thereof to the initial spatial locations thereof for re-forming the same three-dimensional object 300 or for forming other three-dimensional object different from the three-dimensional object 300.

In some other embodiments of the present invention, one or more of the self-propelled modules 200 which are part of the system 500-2 and whose housings 210 form a three-dimensional object 300 may be configured to automatically move to at least one of the parking stations 100 being part of the system 500-2 upon expiration of a predetermined period of time.

In some other embodiments of the present invention, one or more of the self-propelled modules 200 which are part of the system 500-2 and whose housings 210 form a three-dimensional object 300 may be configured to automatically move to at least one of the parking stations being part of the system 500-2 substantially simultaneously or sequentially.

In various embodiments of the present invention, at least a portion of the self-propelled modules 200 which are part of the system 500-2 and whose housings 210 form a three-dimensional object 300 may be configured to automatically move in groups or one after another to at least one of the parking stations being part of the system 500-2.

According to one embodiment of the present invention, one or more of the charged self-propelled modules 200 being part of the system 500-2 and whose housings 210 form a three-dimensional object 300 can be configured to automatically return to the initial spatial locations thereof to re-form the same three-dimensional object 300 or to form other three-dimensional object different from the three-dimensional object 300.

According to yet another embodiment of the present invention, the control device of the system 500-2 may be further configured to present navigation commands to at least a portion of self-propelled modules 200 being part of the system 500-2 and whose housings 210 form a three-dimensional object 300 so as to enable re-arrangement of these self-propelled modules 200 to divide said three-dimensional object 300 into at least two distinct three-dimensional objects.

According to another embodiment of the present invention, the control device of the system 500-2 may further enable placement of the self-propelled modules 200 directed to a predetermined region of space in response to navigation commands of the control device of the system 500-2 in predetermined spatial locations in accordance with a predetermined model of a three-dimensional object so as to enable formation of at least two three-dimensional elements in said region of space. In one of the variations of the given embodiment of the present invention, the control device of the system 500-2 may be further configured to present navigation commands to the self-propelled modules 200 whose housings 210 form at least two three-dimensional elements so as to enable re-arrangement of those self-propelled modules 200 for combining said three-dimensional elements into at least one integral three-dimensional object.

According to another embodiment of the present invention, the housing 210 of at least one or each of the self-propelled modules 200 being part of the system 500-2 and used to form a three-dimensional object 300 may further be provided with one or more displays (not shown), and the control device of the system 500-2 may be further configured to present data about an image to said at least one self-propelled module 200 so as to enable said image to be displayed on at least one of the displays thereof. Each of the displays in the self-propelled modules 200 may be one of a group of displays comprising: an LCD display, LED display, OLED display, AMOLED display, DLP display, TFT display, IPS display, TN display, STN display, CSTN display, FSTN display, DSTN display, DLP display, TFD display, LTPS display, UFB display, CRT display, PDP display, laser display, and the like. Of note, the image displayed on each of the displays of the self-propelled modules 200 with a display may be a static image (for example, a photograph, drawing, picture, and the like) or dynamic image (for example, a clip, presentation, video film, animated image, and the like). Furthermore, the image displayed on each of the displays of the self-propelled modules 200 with a display may be a two-dimensional image, a three-dimensional image, or a combination thereof, wherein such two-dimensional or three-dimensional image may be at least partially motional.

According to some other embodiment of the present invention, the housing 210 of at least one or each of the self-propelled modules 200 being part of the system 500-2 may further be provided with one or more screens, the system 500-2 may further include a projection device (not shown), and the control device of the system 500-2 may be further configured to present data about an image to said projection device so as to enable said image to be projected on at least one of said screens relating to said at least one self-propelled module with screens.

According to some other embodiment of the present invention, the housing 210 of at least one or each of the self-propelled modules 200 being part of the system 500-2 may further be provided with one or more screens and a projection device (not shown), and the control device of the system 500-2 may be further configured to present data about an image to said projection device so as to enable said image to be projected on at least one of said screens relating to said self-propelled modules with screens.

According to other embodiments of the present invention, the system 500-2 may further include a projection device (not shown), wherein the control device of the system 500-2 may be further configured to present data about an image to the projection device of the system 500-2 so as to enable said image to be projected on at least one of the housings 210 of the self-propelled modules which form the three-dimensional object 300.

According to other embodiments of the present invention, the housing 210 of at least one or each of the self-propelled modules 200 being part of the system 500-2 may be provided with a projection device (not shown), and the control device of the system 500-2 may be further configured to present data about an image to said projection device so as to enable said image to be projected on said housing 210 or multiple housings 210 of the self-propelled modules.

According to some other embodiments of the present invention, the system 500-2 may further comprise a movable or stationary load-carrying structure (not shown) which may be configured to accommodate thereon one or more of the self-propelled modules 200 directed by the control device of the system 500-2 to a given region of space so as to provide for the formation of a three-dimensional object 300 from the housings 210 of said accommodated self-propelled modules in accordance with the model of a three-dimensional object or from the housings 210 of said accommodated self-propelled modules and said load-carrying structure (not shown) in accordance with the model of a three-dimensional object. In one of the variations of this embodiment of the present invention, the movable or stationary load-carrying structure of the system 500-2 may be provided with one or more parking platforms (not shown) configured to accommodate on each of them at least one of the self-propelled modules 200 directed by the control device of the system 500-2 to a predetermined region of space. In another variation of this embodiment of the present invention, the movable or stationary load-carrying structure of the system 500-2 may be provided with at least one fastening means configured to interact with at least one of the self-propelled modules 200 directed by the control device of the system 500-2 to a predetermined region of space. In yet another variation of the given embodiment of the present invention, at least one or each of the self-propelled modules 200 directed by the control device of the system 500-2 to a predetermined region of space may be provided with one or more fastening means (not shown) configured each to interact with the movable or stationary load-carrying structure of the system 500-2.

According to some other embodiments of the present invention, one or more of the parking stations 100 being part of the system 500-2 may be further provided with one or more charging devices (not shown), and the control device of the system 500-2 may further be configured to direct one or more of the self-propelled modules 200 being part of the system 500-2 and whose housings 210 form a three-dimensional object 300 to at least one of said parking stations 100 so as to enable each of said directed self-propelled modules to be coupled to at least one of said charging devices to replenish the range thereof.

According to some embodiments of the present invention, wherein one or more of the self-propelled modules 200 which are part of the system 500-2 and whose housings 210 form a three-dimensional object 300 can each be provided with two or more propulsion units 220, the control device of the system 500-2 may further enable at least one of said propulsion units 220 to be switched off while presence of each of said self-propelled modules 200 with propulsion units as part of the formed three-dimensional object 300.

According to various embodiments of the present invention, one or more or each of the self-propelled modules 200 which are part of the system 500-2 and whose housings 210 form a three-dimensional object 300 may be provided with a location determination module (not shown) configured to determine geographic coordinates of said self-propelled modules 200 in real time and to present the determined coordinates to the control device of the system 500-2, and the control device of the system 500-2 may be further configured to detect a deviation in spatial location or spatial displacement of at least a portion of the formed three-dimensional object 300 based on the data about geographical coordinates of the self-propelled modules and a given model of a three-dimensional object and configured to move only those self-propelled modules 200 which correspond to said deviated or displaced portion of the three-dimensional object 300 to return them to the initial spatial locations thereof in accordance with said model of a three-dimensional object.

According to various other embodiments of the present invention, the housing 210 of at least one or each of the self-propelled modules 200 which are part of the system 500-2 and which are used to form a three-dimensional object 300 may be provided with at least one force sensor (not shown) configured to measure in real time a force applied by the user to said housing 210 and to present the measured force to the control device of the system 500-2 in real time, and the control device of the system 500-2 may be further configured to displace each self-propelled module 200, to whose housing 210 the force is applied, depending on the magnitude of said measured force for altering the shape, spatial location and/or spatial orientation of the three-dimensional object 300.

In one embodiment of the present invention, at least a portion (e.g., two or more) or each of the housings 210 of the self-propelled modules 200 which are part of the system 500-2 and which form a three-dimensional object 300 can be configured to be displaced by the user with respect to one another and/or with respect to the remaining housings 210 of said housings of the self-propelled modules 200 (i.e., with respect to one or more housings 210 relating to self-propelled modules which are also used to form the three-dimensional object 300 but whose housings 210 do not alter each the spatial location thereof in the event that the user applies thereto a similar displacement force, or in response to control commands from the control device of the system 500-2).

In another embodiment of the present invention, the system 500-2 may enable at least one additional self-propelled module to be added to the self-propelled modules 200 which are part of the system 500-2 and whose housings 210 form a three-dimensional object 300 or enable at least one self-propelled module of the self-propelled modules 200 whose housings 210 form a three-dimensional object 300 to be removed to at least partially alter said three-dimensional object 300.

In yet another embodiment of the present invention, at least one of the self-propelled modules 200 which are part of the system 500-2 and whose housings 210 form a three-dimensional object 300 may be provided with a location determination module (not shown) configured to determine in real time the spatial coordinates of said at least one self-propelled module 200 and to present the determined spatial coordinates to the control device of the system 500-2, and the control device of the system 500-2, in turn, can be further configured to alter the model of a three-dimensional object based on said determined spatial coordinates of the self-propelled module upon deviation of them from the initial spatial coordinates corresponding to the initial model of a three-dimensional object. Thus, if a formed three-dimensional object 300 corresponding to a particular model of a three-dimensional object has been at least partially altered by way of adding at least one additional self-propelled module to the self-propelled modules 200 whose housings 210 form the three-dimensional object 300 and/or by way of removing at least one self-propelled module of the self-propelled modules 200 whose housings 210 form a three-dimensional object 300, then the location determination modules (not shown) substantially make it possible to track structural changes to the previously formed three-dimensional object 300 and, therefore, adjust or alter the initial model of the three-dimensional object which model was used while the formation of said previously formed three-dimensional object 300. In case of further use of the adjusted model of a three-dimensional object which model can be recorded into respective database or stored on a respective storage device instead of or further to the initial model of a three-dimensional object, the control device of the system 500-2 will enable formation, in a given region of space, of an already altered three-dimensional object which will correspond to the adjusted model of a three-dimensional object and which will take into account all possible above manipulations performed to the structure of the initially formed three-dimensional object 300.

In another embodiment of the present invention, the system 500-2 may further comprise a scanning device (not shown) configured to scan the altered three-dimensional object and to present the scan of the three-dimensional object to the control device of the system 500-2, and the control device of the system 500-2 may be further configured to form or update the model of a three-dimensional object based on said scan. Thus, if a formed three-dimensional object 300 corresponding to a particular model of a three-dimensional object has been at least partially altered by way of adding at least one additional self-propelled module to the self-propelled modules 200 whose housings 210 form the three-dimensional object 300 and/or by way of removing at least one self-propelled module of the self-propelled modules 200 whose housings 210 form a three-dimensional object 300, then the scanning device of the system 500-2 makes it possible to track structural changes to the previously formed three-dimensional object 300 and, therefore, adjust or alter the initial model of the three-dimensional object which model was used while the formation of said previously formed three-dimensional object 300 based on a scan obtained as a result of scanning the altered three-dimensional object using the scanning device of the system 500-2.

In some other embodiment of the present invention, there may be further enabled attachment of one or more structural modules (not shown) to at least one of the self-propelled modules 200 which are part of the system 500-2 and whose housings 210 form a three-dimensional object 300 to at least partially alter the geometry of the three-dimensional object 300. In one variation of this embodiment of the present invention, at least one of the self-propelled modules 200, to each of which there is attached at least one structural module (not shown), may further be provided with at least one fastening or connecting element enabling the attachment of said structural module to said at least one self-propelled module 200. In another variation of this embodiment of the present invention, at least one of the self-propelled modules 200, to each of which there is attached at least one structural module (not shown), may be further provided with at least one grip (not shown) configured to grip said at least one structural module and further configured to move and/or position said captured structural module to at least partially alter the geometry of the three-dimensional object 300.

### Functioning of system for forming three-dimensional object

Fig. 2 also shows for illustrative purposes six illustrative positions (A, B, C, D, E, F) which may be taken by each self-propelled module 200 in the system 500-2 for forming a three-dimensional object during movement thereof through the air, over land (ground), over water, under water and/or over the surface of a stationary or movable physical object located in at least one of airspace, ground space, surface space and underwater space from the initial point of movement to the final point of movement within the bounds of one cycle of movement of such self-propelled module 200.

In the position (A) in Fig. 2, each of the self-propelled modules 200 being part of the system 500-2 is accommodated for the purpose of parking, storage or replenishing the range in a corresponding one of the parking stations 100 being part of the system 500-2 and awaits the receipt of navigation and/or control commands from the control device of the system 500-2. The position (A) substantially corresponds to the initial point of movement of the self-propelled module 200 and corresponds to the beginning of a cycle of movement of this self-propelled module 200.

In position (B) in Fig. 2, which each of the self-propelled modules 200 being part of the system 500-2 can take after being present in position (A) in response to the corresponding navigation commands of the control device of the system 500-2, which, in turn, may be generated, for example, in response to a request from a user device, the self-propelled modules 200 with a full range (when used for the first time in the given cycle) or with a partial range (when they have a remaining range sufficient to continue the use thereof without the need for charging or replenishing the range) or self-propelled modules 200 with a replenished range (if used repeatedly in the given cycle, i.e. after replenishing the range using a charging device) occur to be released from the corresponding parking stations 100 in the required amount sufficient to form a three-dimensional object 300 in accordance with a given model of a three-dimensional object to form one or more entrance groups of self-propelled modules in an region of space located at a distance from said parking stations 100 (see Fig. 2 (left)). Of note, to take the above-described position (B), the exit (for example, flying out, driving out, floating out, jumping out, rolling out, crawling out, or the like) of the self-propelled modules 200 from one and the same parking station 100 may be performed sequentially, and the exit of said self-propelled modules 200 from different parking stations 100 may be performed substantially simultaneously or sequentially.

In position (C) in Fig. 2, which each of the self-propelled modules 200 being part of the system 500-2 can take after being present in position (B), in response to respective navigation commands from the control device of the system 500-2, each self-propelled module 200 belonging to one of the entrance groups of self-propelled modules formed in the above-described position (B) is directed by the control device of the system 500-2 to a given region of space, in which it is contemplated to form a three-dimensional object 300, separately from its entrance group of self-propelled modules (see Fig. 2 (left)).

In position (D) in Fig. 2, which each of the self-propelled modules 200 being part of the system 500-2 can take after being present in position (C), in response to respective navigation commands from the control device of the system 500-2, each self-propelled module 200 directed by the control device of the system 500- 2 into a given region of space, in which it is contemplated to form a three-dimensional object 300, is placed in a given spatial location in accordance with a given model of a three-dimensional object in which said self-propelled module 200 is already part of a plurality of self-propelled modules forming a three-dimensional object 300 and occupies a particular spot as part of a three-dimensional object 300 in accordance with the model of a three-dimensional object (see Fig. 2 (center)), thereby forming one of the component portions of such three-dimensional object 300.

In position (E) in Fig. 2, which each of the self-propelled modules 200 being part of the system 500-2 can take after being present in position (D), in response to respective navigation commands from the control device of the system 500-2, the self-propelled modules 200 exit (e.g., fly out, drive out, float, jump, roll out, crawl out, or the like) each from the plurality of self-propelled modules 200 which form a three-dimensional object 300 in a given region of space (for example, while unforming a three-dimensional object 300, re-arranging a three-dimensional object 300, or while directing such a self-propelled module 200 for replenishment of the range thereof) substantially simultaneously or sequentially so as to enable them to be directed by the control device of the system 500-2 towards the parking stations 100 being part of the system 500-2 (see Fig. 2 (right)).

In position (F) in Fig. 2, which each of the self-propelled modules 200 being part of the system 500-2 may take after being present in position (E), in response to respective navigation commands from the control device of the system 500-2, the self-propelled modules 200 directed by the control device of the system 500-2 towards the parking stations 100 are placed in a region of space located at a distance from said parking stations 100 so as to form one or more exit groups of self-propelled modules in said region of space (see Fig. 2 (right)).

Finally, as shown in Fig. 2, in position (A) in Fig. 2, to which each of the self-propelled modules 200 having taken their position as part of one of the exit groups of self-propelled modules near the parking stations 100 transits from position (F) in response to the corresponding navigation commands of the control device of the system 500-2, said self-propelled modules exit each from the exit groups thereof of self-propelled modules substantially simultaneously or sequentially so as to enable them to be accommodated in at least one of the parking stations 100, in particular in at least one of the parking stations 100 having free or unoccupied charging devices. Thus, finally, each of the self-propelled modules 200 takes the position (A) again, wherein, prior to that, there is performed switching-off of any additional motors or propulsion units (if any) and folding of any of the above-described auxiliary means for moving the self-propelled module (e.g., wings, caterpillar track, sail, landing gear and/or the like) followed by transition to the performance of the process of movement of this self-propelled module 200 into or onto the corresponding one of the parking stations 100. Of note, in the position (A) to which each self-propelled module 200 returns, this self-propelled module 200 is present in an unmovable state with the propulsion units 220 switched off and the auxiliary means for moving the self-propelled module (not shown) folded. Upon taking the position (A), the power supply unit of the self-propelled module 200 may be coupled to the charging device of the parking station 100 so as to enable replenishment of the range of that self-propelled module 200 and enable subsequent storage of that self-propelled module 200 in the parking station until the moment of receipt, from the control device of the system 500-2, of new navigation commands for exit from the parking station 100 thereof with direction to a predetermined region of space to form therein the same three-dimensional object 300 or with direction to a new region of space to form therein a new three-dimensional object which may be the same as or different from the three-dimensional object 300.

Fig. 6 schematically shows a generalized embodiment of the system 500-3 for forming a three-dimensional object according to the present invention, wherein the description of particular or alternative embodiments described above with respect to the system 500-2 for forming a three-dimensional object according to the present invention as shown in Fig. 2 should be considered applying to the system 500-3 as well.

In particular, the system 500-3 enables formation of a three-dimensional object 300 in a given cavity, for example, in a natural or artificial recession (e.g., a hole, river, ravine, pothole, fissure between ice floes, and the like) (as shown in Fig. 6) or in a mold/framework/housing (for example, a mold for casting, a mold for pouring, the internal space of a housing of a device, the internal space of a room in a building, a cavity limited by a frame, formwork, and the like). Thus, the cavity for the use of the subject system can have a varying volume, for example, from a few mm³ or cm³, one or more m³, or tens or even hundreds of m³. The technical capability of filling such cavities with self-propelled modules 200 is conditioned on the current state of the art and level of development of individual components, whereas there may be further improvement of individual elements of the system, including in terms of the minimum and/or maximum size of the self-propelled modules as well as the individual elements thereof, which may similarly find application in the subject technical solution. The shape of the cavity is not specifically limited in any manner, in addition, the size and/or shape of the cavity can alter dynamically. For example, the shape of fissures between ice floes in case of movement of ice, an elastic mold for pouring, or a flexible/movable frame, and the like.

The cavity comprises an opening bounded by the edges of the cavity and configured to receive the housing of the self-propelled module into the cavity.

The cavity may have predetermined (known) sizes in accordance with one of the models of a three-dimensional object selected by the user using standard input-output means of the user device among the available models of a three-dimensional object previously created for said cavity so as to provide for saving thereof into the database of models of three-dimensional objects, to which the user device has or can obtain access, and displayed on the display of that user device as suitable for a given type of place of formation of three-dimensional objects, wherein the user device may further be part of the system 500-3.

In an alternative embodiment, the size of the cavity may not be known (not be determined) preliminarily and not predetermined, wherein the model of a three-dimensional object 300 is a model of at least one surface of a three-dimensional object. At least one surface of a three-dimensional object, for example, may be disposed between the edges of the cavity in the opening. In this case, the self-propelled modules 200 are directed to a predetermined region of space in which the cavity is disposed, and the housings of the self-propelled modules 200 fill the cavity. In response to filling the cavity with self-propelled modules 200 up to the edges of the cavity, in the area of the opening there is formed at least one surface of the filled cavity which is at least one surface of the formed three-dimensional object, for example, a surface for use by vehicles passing through a pit or ravine, as shown in the non-limiting illustrative example in Fig. 6.

In response to altering of the shape or size of the cavity and a corresponding altering of at least one surface of the three-dimensional object, for example, in case of movement of ice in a fissure, the control device of the system is configured to restore at least one surface of the three-dimensional object by means of adding at least one additional self-propelled module to a plurality of self-propelled modules whose housings fill the cavity, or by means of removing at least one self-propelled module of the self-propelled modules whose housings fill the cavity.

An embodiment is possible, according to which the system further comprises a scanning device configured to scan at least one surface of a three-dimensional object and to present a scan of at least one surface of a three-dimensional object to the control device, and the control device is further configured to restore at least one surface of a three-dimensional object based on said scan. Restoring the surface of a three-dimensional object in the illustrative example in Fig. 6 can be manifested in restoring the surface for the passage of a vehicle upon emergence of protrusions when one or more self-propelled modules are pushed onto the surface and/or, vice versa, upon formation of recessions on the surface when one or more self-propelled modules 200 are lowered/indented.

An embodiment is possible, according to which at least one of said self-propelled modules is configured to be placed in a cavity and is provided with a scanning device configured to scan at least one surface of a three-dimensional object and/or scan said cavity and/or determine the position of the edges of the cavity so as to obtain a scan of at least one surface of a three-dimensional object or a three-dimensional object or the edges of the cavity, respectively.

An embodiment is possible, according to which the self-propelled module further comprises a control unit to form a reference self-propelled module, the control unit is communicatively coupled to a scanning device and self-propelled modules and is configured to direct at least a portion of said self-propelled modules to said reference self-propelled module in quantity corresponding to the three-dimensional model of a cavity or at least one surface a three-dimensional object so as to enable said directed self-propelled modules to fill said cavity and form a given three-dimensional object or at least one given surface of a three-dimensional object.

Of note, the task that can be solved using the system 500-3 is to create, from the housings of the self-propelled modules 200, a three-dimensional object 300 in the form of a crossing structure, bridge, pontoon, passage or the like structure that allows a vehicle (for example, a motorcycle) to cross a pothole, river, ravine, corrugation, fissure between ice floes, and the like. In particular, as shown in Fig. 6, the task at hand is solved by filling the recession with self-propelled modules 200 in accordance with the model of formation of a three-dimensional object or the model of formation of at least one surface of a three-dimensional object corresponding to said cavity whose size and shape may be known or unknown preliminarily.

As shown in Fig. 6, the system 500-3 comprises self-propelled modules 200 each of which is provided with a housing 210 and an air propulsion unit 220 to enable movement through the air (flight) and a wheelbase 240 to enable movement over the surface of the ground (over land) and which are initially placed in at least one of the parking stations (not shown) also being part of the system 500-3, and further comprises a reference (base) self-propelled module 200-R which is provided with a spherical housing 210 and two air propulsion units 220 installed interiorly to the spherical housing 210 and which substantially sets a reference (base) spatial location for forming a three-dimensional object 300 in a recession. Furthermore, the reference (base) self-propelled module 200-R further comprises a control unit (not shown) configured to establish communication with a user device so as to enable mutual data exchange. Of note, the reference self-propelled support module 200-R may be initially placed in one of the parking stations of the system 500-3 analogously to the self-propelled modules 200 used to form a three-dimensional object 300, or may be situated in any other place or any other region of space in which between the self-propelled support module 200-R and the user device of the system there may be established a connection so as to mutually exchange data.

To set a reference (base) location, the user selects, by means of standard input-output means of their user device, on a three-dimensional map of a geographic area or on a map of the surrounding space previously created so as to provide for saving thereof into the database of maps of the surrounding space, to which the user device has access or can obtain access, displayed on the display of that user device, wherein said map of the surrounding space illustrates a three-dimensional image of the surrounding space with objects located therein, including a recession in which there must be formed a three-dimensional object 300 corresponding to the model of a three-dimensional object previously selected by the user. In response to data about the user-selected location of the formation of a three-dimensional object (i.e., the recession, by way of an illustrative example), which data is presented by the user device (not shown) to the control unit of the reference (base) self-propelled module 200-R, the control unit of this reference self-propelled module 200-R switches on or actuates the propulsion units 220 of the self-propelled module 200-R so as to provide for movement through the air (flight) of said reference self-propelled module 200-R towards said recession followed by landing thereof onto the bottom of this recess so as to provide for setting of a reference location (or by splashdown thereof on the surface of water or other fluid present in the recession so as to provide for setting of a reference location, or by hovering thereof in the air or airspace within the bounds of the recession so as to provide for keeping or maintenance of a spatial location setting the reference location). After landing of the reference self-propelled module 200-R in a reference location within the bounds of the recession, the control unit of the reference self-propelled module 200-R presents data about the reference location set by the reference self-propelled module 200-R and corresponding to the user-selected location of the formation of a three-dimensional object to the self-propelled modules 200 in the parking stations of the system 500-1. In response to the data about the reference location for the formation of a three-dimensional object, the self-propelled modules 200 are directed from the parking stations thereof of the system 500-1 under the control of the control units thereof or under the control of the control unit of the reference self-propelled module 200-R to a predetermined region of space corresponding to said reference location in an amount corresponding to a previously user-selected model of a three-dimensional object so as to provide for simultaneous or sequential landing of said directed self-propelled modules 200 followed by sequential or simultaneous movement thereof over the ground (over land) directly up to the recession in which the three-dimensional object 300 must be formed. Upon reaching the edge or edges of the recession in which the three-dimensional object 300 must be formed, the directed self-propelled modules 200 get (e.g., roll down, slide down, swim, fall, drive, or the like) into said recession so as to provide for accommodation of said directed self-propelled modules 200 in predetermined spatial locations with reference to the reference self-propelled module 200-R. Thus, the spatial location of each of the self-propelled modules 200 used to form a three-dimensional object 300 in a recession is set using the value of spatial displacement (i.e. displacement along at least one of the three coordinate axes) with respect to the reference location occupied by the self-propelled support module 200-R, and the reference self-propelled module 200-R is the basis of a three-dimensional object 300 formed in a recession from the housings of the self-propelled modules 200.

Alternatively, the user may manually (including using auxiliary tools, appliances or devices) place the reference (base) self-propelled module 200-R in a desired spot (for example, at the bottom of a recession, on the surface of water or other fluid in a recession, or in a predetermined location in the air space of the recession: having previously turned on at least one of the propulsion units 220 of the reference self-propelled module 200-R) which will substantially be a reference (base) location for forming a three-dimensional object 300, such that the reference self-propelled module 200-R may present data about the reference location to the self-propelled modules 200 so as to enable placement of said self-propelled modules 200 in predetermined spatial locations with reference to the reference self-propelled module 200-R. In one of the variations of this alternative embodiment of the system 500-1, the reference self-propelled module 200-R may further comprise a location determination module (for example, a GPS system, a GLONASS system, a Beidou system or any other suitable location determination system known from the prior art) configured to determine the spatial coordinates of said reference self-propelled module 200-R in real time, and may further be configured to present certain spatial coordinates to the self-propelled modules 200 used to form a three-dimensional object 300 for adjusting or correcting the spatial coordinates of the region of space to which the self-propelled modules 200 must be directed from the corresponding parking stations of the system 500-1 in an amount corresponding to the user-selected model of a three-dimensional object, and/or adjusting or correcting at least one of the spatial locations that said directed self-propelled modules 200 must occupy with respect to the reference location occupied by the reference self-propelled module 200-R while formation of a three-dimensional object 300. In yet another variation of this alternative embodiment of the system 500-3, the reference self-propelled module 200-R may further comprise a scanning unit (not shown) configured to create a three-dimensional map of the space surrounding the spot in which the reference self-propelled module 200-R, automatically or manually, was placed and which should be considered a reference location for forming a three-dimensional object 300 in a recession and communicatively coupled to the control unit of the reference self-propelled module 200-R such that the control unit of the reference self-propelled module 200-R may present said three-dimensional map of the surrounding space to the self-propelled modules 200 used to form a three-dimensional object 300 for adjusting or correcting the spatial coordinates of the region of space to which the self-propelled modules 200 must be directed from the corresponding parking stations of the system 500-1 in an amount corresponding to the user-selected model of a three-dimensional object, and/or for adjusting or correcting at least one of the spatial locations that said directed self-propelled modules 200 must occupy with respect to the reference location occupied by the reference self-propelled module 200-R while formation of a three-dimensional object 300 based on said three-dimensional map of the surrounding space. Furthermore, the control unit of the reference self-propelled module 200-R may be further configured to adjust the model of a three-dimensional object corresponding to the recession, in which the three-dimensional object 300 must be formed, based on data about the three-dimensional map of the surrounding space obtained by the control unit of the reference self-propelled module 200-R from the scanning unit of the reference self-propelled module 200-R, thus allowing to adjust or correct the quantity of the self-propelled modules 200 required to form a three-dimensional object 300 and/or to adjust or correct the spatial locations of said self-propelled modules 200 in case of changes in size, shape and/or the contours of said recession even before directing the self-propelled modules 200 to said recession or before the beginning of the process of forming a three-dimensional object 300 in said recession. Furthermore, the scanning unit of the reference self-propelled module 200-R can be installed on an extendable or telescopic rod being under the control of the control unit of the reference self-propelled module 200-R, thus allowing to scan the surface of a three-dimensional object 300 formed in the recession, over which surface the vehicle must move through said recession, wherein the control unit of the reference self-propelled module 200-R may be further configured to evaluate, based on said scan of the surface, whether the degree of flatness of said surface of movement meets a predetermined threshold value, and to remove at least one self-propelled module 200 from the three-dimensional object 300 or to add at least one self-propelled module 200 to the three-dimensional object 300 to correct (in particular, to smoothen or provide for rectilinearity) said surface of movement. Thus, the scanning unit of the reference self-propelled module 200-R also allows the system 500-3 to be used to form three-dimensional objects 300 in dynamically altering recessions.

Of note, the reference self-propelled module 200-R used as part of the system 500-3 may be configured in the form of a self-propelled module 200 in any one of embodiments thereof described herein or of any stationary object, configured to be gripped or moved by the user and provided with a control unit or a transceiver configured to exchange data with the self-propelled modules 200 being part of the system 500-3 and used to form a three-dimensional object 300 for presenting thereto data about the reference location occupied by said object and used to set spatial locations for said self-propelled modules 200 while forming a three-dimensional object 300.

Of further note, the self-propelled modules 200, parking stations (not shown) and three-dimensional object 300, which are part of the above-described system 500-3 shown in Fig. 1, may be configured analogously or identically to any one of the embodiments of the self-propelled modules 200, parking stations 100 and three-dimensional object 300, respectively, described above herein with respect to the system 500-2 for forming a three-dimensional object shown in Fig. 2.

### Method for forming a three-dimensional object

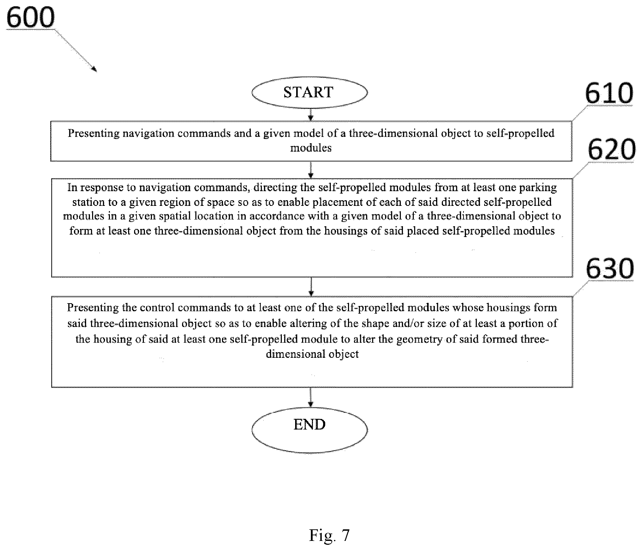

Fig. 7 is a block diagram illustrating the basic operations of a method 600 for forming a three-dimensional object, wherein the method 600 for forming a three-dimensional object shown in Fig. 7 may be performed using the system 500-2 for forming a three-dimensional object which is based on the self-propelled module shown in Fig. 3 and which may be implemented in accordance with any one of the relevant embodiments of the present invention described herein (i.e., the embodiments of the present invention pertaining to the self-propelled module 200 according to Fig. 3 and the embodiments of the system 500-2 for forming a three-dimensional object which is based on the use of the self-propelled modules 200 according to Fig. 3 for forming a desired three-dimensional object 300).

In particular, the method 600 for forming a three-dimensional object shown in Fig. 7 includes the following three main operations or main steps 610, 620 and 630, wherein the step 610 comprises presenting navigation commands and a given model of a three-dimensional object to self-propelled modules 300, each having a housing 210; the step 620 comprises, in response to said navigation commands, directing said self-propelled modules 200 from at least one parking station 100 to a given region of space so as to enable each of said directed self-propelled modules 200 to be placed in a given spatial location in accordance with a given model of a three-dimensional object for forming at least one three-dimensional object 300 from the housings 210 of said placed self-propelled modules 200; and the step 630 comprises presenting control commands to at least one of the self-propelled modules 200 whose housings 210 form said three-dimensional object 300 so as to enable altering of the shape and/or size of at least a portion of the housing 210 of said at least one self-propelled module 200 for altering the geometry of said formed three-dimensional object 300.

In one embodiment of the present invention, the method 600 for forming a three-dimensional object shown in Fig. 7 may include the additional step of manually displacing at least one of the self-propelled modules 200 whose housings 210 form a three-dimensional object 300.

In another embodiment of the present invention, the method 600 for forming a three-dimensional object shown in Fig. 7 may include the additional step of manually adding at least one additional self-propelled module to the self-propelled modules 200 whose housings form a three-dimensional object 300 or of further manually removing at least one self-propelled module of the self-propelled modules 200 whose housings form a three-dimensional object 300 to alter said three-dimensional object 300.

In yet another embodiment of the present invention, the method 600 for forming a three-dimensional object shown in Fig. 7 may include the additional step of measuring in real time the force applied to the housing 210 of at least one of the self-propelled modules 200 whose housings 210 form a three-dimensional object 300 with the help of a force sensor (not shown) provided to said housing 210, and of displacing said self-propelled module 200 depending on said measured force to alter the shape and/or spatial location of the three-dimensional object 300.

In another embodiment of the present invention, the method 600 for forming a three-dimensional object shown in Fig. 7 may include an additional step of determining in real time the spatial coordinates of the self-propelled modules 200 whose housings 210 form a three-dimensional object 300 using the location determination modules provided to said self-propelled modules 200, and of altering the model of a three-dimensional object based on said determined spatial coordinates of the self-propelled modules 200 upon deviation of at least one of them from the initial model of a three-dimensional object.

In another embodiment of the present invention, the method 600 for forming a three-dimensional object shown in Fig. 7 may include the additional step of scanning, by means of a scanning device (not shown), the altered three-dimensional object and of forming or updating the model of a three-dimensional object based on the obtained scan of the altered three-dimensional object.

The provided illustrative embodiments of the present invention, examples and description serve only to facilitate understanding of the principles of the claimed invention and are not limiting. Other possible embodiments of the present invention or modifications or improvements to the above embodiments of the present invention will suggest themselves to one skilled in the art after reading the above description. The scope of the present invention is limited only by the appended claims.

## Claims

1. A system for forming a three-dimensional object comprising:
one or more parking stations and
self-propelled modules, each of which is provided with a housing,
wherein
said self-propelled modules are accommodated in parking stations, and said system also comprises
a control device communicatively coupled to the self-propelled modules and configured to direct at least a portion of said self-propelled modules from at least one parking station of said parking stations to a given region of space so as to enable placement of each of said directed self-propelled modules in a given spatial location in accordance with a given model of a three-dimensional object to form at least one three-dimensional object from the housings of said placed self-propelled modules.

2. The system according to claim 1, wherein at least two of the self-propelled modules are further provided each with one or more flexible or spring-loaded connecting elements enabling a detachable coupling to one another of said at least two self-propelled modules while forming a three-dimensional object and enabling altering of the spatial location and/or spatial orientation of at least one of said at least two self-propelled modules to at least partially alter the geometry of the three-dimensional object.

3. The system according to claim 1, wherein at least two of the self-propelled modules are further provided each with one or more movable joints enabling a detachable coupling to one another of said at least two self-propelled modules while forming a three-dimensional object and enabling altering of the spatial location and/or spatial orientation of at least one of said at least two self-propelled modules to at least partially alter the geometry of the three-dimensional object.

4. The system according to claim 3, wherein at least one of said at least two self-propelled modules further comprises a drive device being under the control of the control device and operably coupled to the movable joints of said at least one self-propelled module so as to enable altering the spatial location and/or spatial orientation thereof.

5. The system according to claim 1, wherein at least two of the self-propelled modules are further provided each with one or more telescopic or extendable joints enabling a detachable coupling to one another of said at least two self-propelled modules while forming a three-dimensional object and enabling altering of the spatial location and/or spatial orientation of at least one of said at least two self-propelled modules while the expansion thereof to at least partially alter the geometry of the three-dimensional object, and at least one of said at least two self-propelled modules comprises a drive device being under the control of the control device and operably coupled to said joints so as to enable the expansion thereof.

6. The system according to claim 1, wherein the housing of at least one of said self-propelled modules is a folding mesh configured, upon the deployment thereof, to surround said at least one self-propelled module, and said at least one self-propelled module further comprises a drive device being under the control of the control device and operably coupled to said mesh so as to enable the deployment thereof while forming said three-dimensional object in response to control commands of the control device.

7. The system according to claim 1, wherein the housing of at least one of said self-propelled modules is configured flexible or elastic, wherein said at least one self-propelled module is further provided with one or more movable working members configured to interact with at least one of the portions of said housing while movement thereof so as to enable at least partial altering of the shape and/or size of the housing, and further comprises a drive device being under the control of the control device and operably coupled to said movable working members so as to enable movement of at least one of them in response to control commands of the control device.

8. The system according to claim 1, wherein the housing of at least one of said self-propelled modules is configured flexible or elastic, wherein said at least one self-propelled module is further provided with one or more movable working members configured operably coupled to at least one of the portions of said housing so as to enable at least partial altering of the shape of said housing while movement thereof, and further comprises a drive device being under the control of the control device and operably coupled to said movable working members so as to enable movement thereof in response to control commands of the control device.

9. The system according to claim 1, wherein the housing of at least one of said self-propelled modules is made of portions or plates coupled to one another or configured to displace with respect to one another so as to enable at least partial altering of the shape of said housing, wherein said at least one self-propelled module is further provided with one or more movable working members, each of which is operably coupled or configured to interact with at least one of said portions or plates so as to enable displacement thereof with respect to one another while the movement of said working member, and further comprises a drive device being under the control of the control device and operably coupled to the said working member so as to enable movement thereof in response to control commands of the control device.

10. The system according to claim 1, wherein the housing of at least one of said self-propelled modules is made of movable portions or plates configured each to alter the spatial position and/or spatial orientation so as to enable at least partial altering of the shape of said housing, wherein said at least one self-propelled module is further provided with one or more movable working members, each of which is operably coupled to at least one of said portions or plates so as to enable altering of the spatial position and/or spatial orientation of said at least one portion or plate while the movement of said working member, and further comprises a drive device being under the control of the control device and operably coupled to the said working member so as to enable movement thereof in response to control commands of the control device.

11. The system according to claim 1, wherein at least two of said self-propelled modules are further provided each with a location determination module configured to determine the geographical coordinates of said self-propelled module in real time and is configured to present the determined spatial coordinates to the control device, and the control device is further configured to present navigation commands to at least one of said at least two self-propelled modules for altering the course of movement of said at least one self-propelled module in the event that it is determined, based on the spatial coordinates thereof, that the distance between said at least two self-propelled modules is less than a predetermined threshold value.

12. The system according to claim 1, wherein at least one of said directed self-propelled modules is further provided with a grip configured to move and/or position at least one other self-propelled module of said directed self-propelled modules while forming a three-dimensional object from the housings of self-propelled modules.

13. The system according to claim 1, further comprising one or more structural modules, and at least one of said directed self-propelled modules is further provided with a grip configured to move and/or position at least one of said structural modules to form at least a portion of a three-dimensional object from the housings of self-propelled modules and said structural modules.

14. The system according to claim 13, wherein the housing of at least one of said structural modules is configured to alter the shape and/or size thereof, wherein the control device is configured to present control commands to said at least one structural module so as to enable altering of the shape and/or size of at least a portion of the housing of said at least one structural module to at least partially alter the geometry of said formed three-dimensional object.

15. The system according to claim 1, wherein at least one of said self-propelled modules is an unmanned aerial vehicle, wherein said at least one self-propelled module is further provided with measurement sensors for measuring the flight parameters of the self-propelled module, which are configured to measure the flight parameters of said at least one self-propelled module, and is further configured to present said measured flight parameters of the self-propelled module to the control device, and the control device is further configured to present navigation commands to the self-propelled module for altering the course of movement and/or mode of operation thereof in the event that at least one of flight parameters thereof does not correspond to a threshold value or is beyond the range of threshold values.

16. The system according to claim 1, wherein each of said at least two self-propelled modules is provided with at least one power source and is further configured to present, in real time, data relating to the range to the control device so as to enable replacement thereof with at least one other self-propelled module from at least one of said parking stations in the event that the range of said self-propelled module to be replaced is below a predetermined threshold value.

17. The system according to any one of claims 5-9, wherein at least one of said at least two self-propelled modules is further configured to present, in real time, data relating to the operation of the drive device to the control device so as to enable replacement thereof with at least one other self-propelled module from at least one of said parking stations in the event of failure of the drive device thereof.

18. The system according to claim 1, wherein at least one of the self-propelled modules is further provided with sensors for measuring the parameters of state of the structure of the self-propelled module, which are configured to measure the parameters of state of the structure of said at least one self-propelled module, and is further configured to present, in real time, the measured parameters of state of the structure of the self-propelled module to the control device so as to enable replacement thereof with at least one other self-propelled module from at least one of said parking stations in the event that at least one of said parameters of state of the structure of said at least one self-propelled module does not correspond to a threshold value or is beyond the range of threshold values.

19. The system according to claim 16, wherein said at least one power source comprises each at least one of the group comprising: a battery, a generator based on an internal combustion engine, a generator based on a hydrogen engine, and a solar panel.

20. The system according to claim 16, wherein at least one of said parking stations is further provided with at least one charging device, and the control device is further configured to direct at least one discharged self-propelled module to one of said parking stations so as to enable coupling thereof to one of said charging devices for replenishing the range of the discharged self-propelled module.

21. The system according to claim 20, wherein each of said charging devices is a wireless charging device or a wired charging device.

22. The system according to claim 20, wherein the self-propelled modules are configured to serially or parallelly electrically couple to one another while being accommodated on the parking station so as to enable coupling thereof to a charging device for simultaneous replenishment of the range thereof.

23. The system according to claim 1, wherein at least one of said self-propelled modules is further provided with a detection device configured to determine the distance to other self-propelled module of said self-propelled modules in the operating area of the detection device and is further configured to alter the spatial location and/or mode of operation thereof in the event that the distance to the detected self-propelled module is less than a threshold value, or is further configured to present data relating to determined value of the distance to the detected self-propelled module to the control device so as to enable altering of the spatial location, course of movement and/or mode of operation of said self-propelled module or said detected self-propelled module in the event that the distance to that detected self-propelled module is less than a threshold value.

24. The system according to claim. 1, wherein the control device is further configured to present navigation commands to at least a portion of said self-propelled modules whose housings form a three-dimensional object so as to enable re-arrangement of those self-propelled modules for at least partial altering of the geometry of said three-dimensional object.

25. The system according to claim 1, wherein the self-propelled modules whose housings form a three-dimensional object are divided into at least two groups, wherein the self-propelled modules in one of said groups have overall dimensions, the shape of the housing, operating parameters, type of a self-propelled module and/or type of power source of a self-propelled module and/or kind of a self-propelled module different from the self-propelled modules in the other group of said groups.

26. The system according to claim 1, wherein the self-propelled modules whose housings form a three-dimensional object are divided into at least two groups, wherein the self-propelled modules in one of said groups have a movement speed different from that of the self-propelled modules in the other group of said groups.

27. The system according to claim 1, wherein at least a portion of the self-propelled modules whose housings form a three-dimensional object are further configured each to keep or maintain the spatial location thereof for a given period of time in accordance with said model of a three-dimensional object so as to allow the formed three-dimensional object to remain in place.

28. The system according to claim 1, wherein at least a portion of the self-propelled modules whose housings form a three-dimensional object are further configured each to alter the spatial location thereof in accordance with said model of a three-dimensional object so as to enable movement of at least a portion of said three-dimensional object in space.

29. The system according to claim 1, wherein the control device of the system is further configured to present to at least a portion of the self-propelled modules whose housings form a three-dimensional object the data about altering of at least a portion of the three-dimensional object, and each of said portion of the self-propelled modules is further configured to alter the spatial position thereof in real time in accordance with said data about altering of the portion of the three-dimensional object so as to provide for the formation of at least partially altered three-dimensional object.

30. The system according to claim 1, wherein the control device of the system is further configured to present to at least a portion or one of the self-propelled modules whose housings form a three-dimensional object the data about altering of the model of a three-dimensional object, and said self-propelled modules are further configured each to alter the spatial position thereof in real time in accordance with said data about altering of the model of a three-dimensional object so as to enable the performance of movement of said three-dimensional object or at least one portion thereof in space.

31. The system according to claim 1, wherein the self-propelled modules whose housings form a three-dimensional object are divided into at least two groups, wherein one of said groups of self-propelled modules is configured to form one portion of said three-dimensional object, and the other group of said groups of self-propelled modules is configured to form the other portion of said three-dimensional object.

32. The system according to claim 1, wherein the self-propelled modules whose housings form a three-dimensional object are divided into at least two groups, wherein one of said groups of self-propelled modules is configured to form an unmovable portion of said three-dimensional object, and the other group of said groups of self-propelled modules is configured to form a movable portion of said three-dimensional object.

33. The system according to claim 1, wherein the self-propelled modules directed to a predetermined region of space are divided into two groups, wherein the housings of the self-propelled modules from the first group form at least one first layer of said three-dimensional object, and the housings of self-propelled modules from the second group form at least one second layer of said three-dimensional object.

34. The system according to claim 1, wherein the self-propelled modules directed to a predetermined region of space are provided with fastening or connecting means enabling mutual detachable interaction of said self-propelled modules with one another while forming a three-dimensional object from the housings of the self-propelled modules being coupled.

35. The system according to claim 34, wherein the fastening or connecting means of the self-propelled modules are configured to deploy, unfold or expand so as to enable mutual detachable interaction of said self-propelled modules.

36. The system according to claim 34, wherein the fastening or connecting means of the self-propelled modules are configured to extend from the housings of the self-propelled modules so as to enable mutual detachable interaction of said self-propelled modules.

37. The system of claim 1, wherein at least two of the self-propelled modules directed to a predetermined region of space are configured to mechanically connect to one another to form a cluster self-propelled module configured to detachably interact with at least one other self-propelled module of said self-propelled modules while forming a three-dimensional object.

38. The system according to claim 1, wherein the self-propelled modules directed to a predetermined area of space are configured to mechanically connect to one another to form cluster self-propelled modules, and the control device enables the formation of a three-dimensional object from the housings of said cluster self-propelled modules.

39. The system according to claim 1, wherein each of the self-propelled modules is further provided with at least one grip and image capturing device configured to capture images in real time in the field of view so as to enable identifying at least one of the directed self-propelled modules in said field of view while being present in said region of space, wherein each of said grips is communicatively coupled to the image capturing device so as to enable gripping of one of the identified self-propelled modules in response to data relating to the identified self-propelled modules from the image capturing device.

40. The system according to claim 1, wherein the control device enables altering of the spatial position of at least one of the self-propelled modules whose housings form a three-dimensional object so as to enable the displacement thereof in space with respect to the remaining self-propelled modules of said self-propelled modules along at least one of the three coordinate axes such that the three-dimensional object assumes a regular shape, concave shape, convex shape, or curvilinear shape.

41. The system according to claim 1, wherein the self-propelled modules whose housings form a three-dimensional object form a given number of sequentially disposed horizontal or vertical rows, in at least one of which rows the self-propelled modules are configured to maintain the spatial location thereof and in at least the other one of which rows the self-propelled modules are configured to alter the spatial location thereof so as to allow a portion of a three-dimensional object corresponding to said row of self-propelled modules to move or perform motion in space.

42. The system according to claim 1, wherein the control device enables replacement of at least one of the discharged self-propelled modules with at least one charged self-propelled module in at least one of the spots of the formed three-dimensional object.

43. The system according to claim 42, wherein the control device further enables direction of said discharged self-propelled module to a parking station of said parking stations for replenishment of the range thereof and enables return of said self-propelled module with replenished range so as to provide for replacement of one of discharged self-propelled modules in the formed three-dimensional object.

44. The system according to claim 43, wherein the control device enables replacement of a discharged self-propelled module with said charged self-propelled module while presence of the discharged self-propelled module in a spatial location corresponding to one said replacement spots.

45. The system according to claim 20, wherein the control device enables direction of charged self-propelled modules to a given region of space in a quantity corresponding to the quantity of self-propelled modules whose housings form a three dimensional object so as to enable substantially simultaneous replacement thereof with said charged self-propelled modules.

46. The system according to claim 45, wherein the control device further enables formation, in said region of space, a replacement three-dimensional object from said charged self-propelled modules, which is a copy of the three-dimensional object being replaced, so as to enable replacement of the three-dimensional object being replaced with a replacement three-dimensional object.

47. The system according to claim 46, wherein the control device further enables replacement of the three-dimensional object to be replaced with a replacement three-dimensional object upon expiration of a predetermined period of time.

48. The system according to claim 1, wherein the self-propelled modules whose housings form a three-dimensional object are divided into at least two groups in each of which the housings of the self-propelled modules form one of the portions of the three-dimensional object, wherein the control device further enables formation, in said region of space, of at least one replacement portion of the three-dimensional object from charged self-propelled modules directed to said region of space so as to enable replacement of the portion to be replaced of the three-dimensional object with said replacement portion of the three-dimensional object.

49. The system according to claim 48, wherein while replacing a portion being replaced of a three-dimensional object with a replacement portion of a three-dimensional object, the control device substantially simultaneously presents control commands to the self-propelled modules whose housings form the portion being replaced of a three-dimensional object.

50. The system according to claim 1, wherein the self-propelled modules being directed to a given region of space are divided into groups, in each of which the housings of the self-propelled modules may at least partially form at least one of the layers of a three-dimensional object, which have different shapes and/or sizes.

51. The system according to claim 1, wherein at least one of the self-propelled modules whose housings form a three-dimensional object is provided with at least one power source and is further configured to present in real time the data about the range thereof to the control device, and the control device is further configured to identify a discharged self-propelled module based on said data about the range so as to enable direction of the discharged self-propelled module to one of said parking stations and to enable re-arrangement of the remaining self-propelled modules of the self-propelled modules whose housings form a three-dimensional object for altering or maintaining the shape and/or size of said three-dimensional object.

52. The system according to claim 1, wherein the control device is further configured to direct, to said region of space, one or more additional self-propelled modules from at least one of said parking stations so as to enable integration thereof into the structure of a three-dimensional object for altering the shape and/or size of a three-dimensional object.

53. The system according to claim 1, wherein the self-propelled modules whose housings form a three-dimensional object are divided into groups in each of which the housings of the self-propelled modules form one or more of the portions of the three-dimensional object, wherein, while forming the three-dimensional object, the control device enables arrangement of said self-propelled modules such that at least one of said portions of the three-dimensional object has a shape and/or sizes different from the remaining portions of the three-dimensional object.

54. The system according to claim 1, wherein at least one of the self-propelled modules whose housings form a three-dimensional object is provided with at least one power source, and said system further comprises a laser projection unit configured to emit a laser beam, wherein said at least one self-propelled module is further provided with a laser emission receiver/converter electrically coupled to said power source and configured to convert the received laser beam into an electric current so as to enable charging of said power source.

55. The system according to claim 54, wherein at least one of the self-propelled modules whose housings form a three-dimensional object is further configured to present, in real time, data about the range thereof to the control device, and the control device is further configured to control the operation of the laser projection unit so as to enable direction of the laser beam to said at least one self-propelled module in the event that the range thereof is below a predetermined threshold value.

56. The system according to claim 1, further comprising a movable or stationary load-carrying structure configured to accommodate thereon one or more of the self-propelled modules directed by the control device to a given region of space so as to provide for the formation of said three-dimensional object from the housings of said accommodated self-propelled modules in accordance with the model of a three-dimensional object or from the housings of said accommodated self-propelled modules and said load-carrying structure in accordance with the model of a three-dimensional object.

57. The system according to claim 56, wherein said load-carrying structure is provided with one or more parking platforms configured each to accommodate thereon at least one of said directed self-propelled modules.

58. The system according to claim 56, wherein said load-carrying structure is provided with at least one fastening means configured to interact with at least one of said directed self-propelled modules.

59. The system according to claim 56, wherein each of said directed self-propelled modules is provided with one or more fastening means configured each to interact with said load-carrying structure.

60. The system according to claim 1, wherein one or more of the parking stations is further provided with one or more charging devices, and the control device is further configured to direct one or more of the self-propelled modules whose housings form a three-dimensional object to at least one of said parking stations so as to enable each of said directed self-propelled modules to be coupled to at least one of said charging devices to replenish the range thereof.

61. The system according to claim 60, wherein the control device is configured to present navigation commands to the self-propelled modules whose housings form a three-dimensional object for directing same to said at least one parking station upon expiration of a predetermined period of time.

62. The system according to claim 60, wherein the control device is configured to present navigation commands to at least a portion of the self-propelled modules whose housings form a three-dimensional object for directing same to said at least one parking station substantially simultaneously or sequentially.

63. The system according to claim 60, wherein the control device is configured to present navigation commands to at least a portion of the self-propelled modules whose housings form a three-dimensional object for directing same to said at least one parking station in groups or one after another.

64. The system according to any one of claims 60-63, wherein the control device is further configured to present navigation commands to one or more of the charged self-propelled modules so as to enable return thereof to the initial spatial locations thereof for re-forming said three-dimensional object.

65. The system according to claim 1, wherein one or more of the parking stations is further provided with one or more charging devices, and one or more of the self-propelled modules whose housings form a three-dimensional object are configured to move to at least one of said parking stations with charging devices so as to enable each of said directed self-propelled modules to be coupled to one of said charging devices to replenish the range thereof.

66. The system according to claim 65, wherein one or more of the self-propelled modules whose housings form a three-dimensional object are configured to automatically move to said at least one parking station upon expiration of a predetermined period of time.

67. The system according to claim 65, wherein one or more of the self-propelled modules whose housings form a three-dimensional object are configured to automatically move to said at least one parking station substantially simultaneously or sequentially.

68. The system according to claim 65, wherein at least a portion of the self-propelled modules whose housings form a three-dimensional object are configured to automatically move to said at least one parking station in groups or one after another.

69. The system according to any one of claims 65-68, wherein one or more of the charged self-propelled modules are configured to automatically return to the initial spatial locations thereof for re-forming said three-dimensional object.

70. The system according to claim. 1, wherein the control device is further configured to present navigation commands to at least a portion of the self-propelled modules whose housings form a three-dimensional object so as to enable re-arrangement of those self-propelled modules for dividing said three-dimensional object into at least two distinct three-dimensional elements.

71. The system according to claim 70, wherein the control device is further configured to present navigation commands to the self-propelled modules whose housings form said at least two three-dimensional elements so as to enable re-arrangement of those self-propelled modules for combining said three-dimensional elements into at least one integral three-dimensional object.

72. The system according to claim **1,** wherein the housing of at least one of said self-propelled modules is further provided with one or more displays, and the control device is further configured to present data about an image to said at least one self-propelled module so as to enable said image to be displayed on at least one of the displays thereof.

73. The system according to claim 72, wherein the image being displayed is a static image or a dynamic image.

74. The system according to claim **1,** wherein the housing of at least one of said self-propelled modules is further provided with one or more screens, said system further comprises a projection device, and the control device is further configured to present data about an image to said projection device so as to enable said image to be projected on at least one of said screens.

75. The system according to claim 1, wherein the housing of at least one of said self-propelled modules is further provided with one or more screens and a projection device, and the control device is further configured to present data about an image to said projection device so as to enable said image to be projected on at least one of said screens.

76. The system according to claim 1, further comprising a projection device, wherein the control device is further configured to present data about an image to said projection device so as to enable said image to be projected on at least one of the housings of the self-propelled modules which form a three-dimensional object.

77. The system according to claim 1, wherein the housing of at least one of said self-propelled modules is provided a projection device, and the control device is further configured to present data about an image to said projection device so as to enable said image to be projected on said housing.

78. The system according to claim 1, wherein one or more of said self-propelled modules whose housings form a three-dimensional object are provided each with two or more propulsion units.

79. The system according to claim 78, wherein the control device further enables switching-off of at least one of said propulsion units while presence of each of said self-propelled modules with propulsion units as part of the formed three-dimensional object.

80. The system according to claim 78, wherein at least one of said self-propelled modules whose housings form a three-dimensional object is further configured to switch off or maintain in working state said propulsion unit while presence as part of the formed three-dimensional object.

81. The system according to claim 1, wherein one or more of the self-propelled modules whose housings form a three-dimensional object is provided with a location determination module configured to determine geographic coordinates of said at least one self-propelled module in real time and to present the determined coordinates to the control device, and the control device is further configured to detect a deviation in spatial location or spatial displacement of at least a portion of the formed three-dimensional object based on the data about geographical coordinates of the self-propelled modules and the model of a three-dimensional object and configured to move the self-propelled modules corresponding to said deviated or displaced portion of the three-dimensional object for returning them to the initial spatial locations thereof in accordance with said model of a three-dimensional object.

82. The system according to claim 1, wherein the housing of at least one of the self-propelled modules which form a three-dimensional object is provided with at least one force sensor configured to measure in real time a force applied by the user to said housing and to present the measured force to the control device, and the control device is further configured to displace said at least one self-propelled module depending on said measured force for altering the shape, spatial location and/or spatial orientation of the three-dimensional object.

83. The system according to claim 1, wherein at least two of the housings of the self-propelled modules which form a three-dimensional object are configured each to be displaced by the user with respect to one another.

84. The system according to claim 1, wherein at least one additional self-propelled module is enabled to be added to the self-propelled modules whose housings form a three-dimensional object or at least one self-propelled module of the self-propelled modules whose housings form a three-dimensional object is enabled to be removed for at least partial altering of said three-dimensional object.

85. The system according to any one of claims 82-84, wherein at least one of the self-propelled modules whose housings form a three-dimensional object is provided with a location determination module configured to determine the spatial coordinates of said at least one self-propelled module in real time and to present the determined spatial coordinates to the control device, and the control device, in turn, is further configured to alter the model of a three-dimensional object based on said determined spatial coordinates of the self-propelled module upon deviation of them from the initial spatial coordinates corresponding to the initial model of a three-dimensional object.

86. The system according to any one of claims 82-84, further comprising a scanning device configured to scan the altered three-dimensional object and to present the scan of the three-dimensional object to the control device, and the control device is further configured to form or update the model of a three-dimensional object based on said scan.

87. The system according to claim 1, wherein the attachment of one or more structural modules is enabled to at least one of said self-propelled modules whose housings form a three-dimensional object for at least partial altering of the geometry of the three-dimensional object.

88. The system according to claim 87, wherein at least one of said self-propelled modules is further provided with at least one fastening or connecting element enabling the attachment of said structural modules to said at least one self-propelled module.

89. The system according to claim 87, wherein at least one of said self-propelled modules is further provided with at least one grip configured to grip said at least one structural module and further configured to move and/or position said captured structural module to at least partially alter the geometry of the three-dimensional object.

90. The system according to claim 1, wherein the housing of at least one of said self-propelled modules is configured to alter the shape and/or size thereof, and the control device is configured to present control commands to at least one of the self-propelled modules whose housings form said three-dimensional object so as to enable altering of the shape and/or size of at least a portion of the housing of said at least one self-propelled module to at least partially alter the geometry of said formed three-dimensional object.

91. The system according to claim 1, wherein the self-propelled modules are configured to be placed in a cavity comprising an opening bounded by the edges of the cavity and configured to receive the housing of the self-propelled module into the cavity and to fill the cavity with the housings of the self-propelled modules; wherein, in response to filling the cavity with the self-propelled modules up to the edges of the cavity, in the area of the opening there is formed at least one surface of the filled cavity which is at least one surface of the formed three-dimensional object.

92. The system according to claim 91, wherein in response to altering of the shape or size of the cavity and a corresponding altering of at least one surface of the three-dimensional object, the control device of the system is configured to restore at least one surface of the three-dimensional object by means of adding at least one additional self-propelled module to a plurality of self-propelled modules whose housings fill the cavity, or by means of removing at least one self-propelled module of the self-propelled modules whose housings fill the cavity.

93. The system according to claim 92, wherein the system further comprises a scanning device configured to scan at least one surface of a three-dimensional object and to present a scan of at least one surface of a three-dimensional object to the control device, and the control device is further configured to restore at least one surface of a three-dimensional object based on said scan.

94. The system according to claim 91, wherein at least one of said self-propelled modules is configured to be placed in a cavity and is provided with a scanning device configured to scan at least one surface of a three-dimensional object and/or scan said cavity and/or determine the position of the edges of the cavity so as to obtain a scan of at least one surface of a three-dimensional object or a three-dimensional object or the edges of the cavity, respectively.

95. The system according to claim 94, wherein the self-propelled module further comprises a control unit to form a reference self-propelled module, the control unit is communicatively coupled to a scanning device and self-propelled modules and is configured to direct at least a portion of said self-propelled modules to said reference self-propelled module in quantity corresponding to the three-dimensional model of the cavity or at least one surface a three-dimensional object so as to enable said directed self-propelled modules to fill said cavity and form a given three-dimensional object or at least one given surface of a three-dimensional object.

96. A method forming a three-dimensional object comprising the following step of:
presenting navigation commands and a given model of a three-dimensional object to self-propelled modules, each having a housing,
**characterized in that**
in response to said navigation commands, further directing said self-propelled modules from at least one parking station to a given region of space so as to enable placement of each of said directed self-propelled modules in a given spatial location in accordance with a given model of a three-dimensional object to form at least one three-dimensional object from the housings of said placed self-propelled modules.

97. The method according to claim 96, comprising further presenting the control commands to at least one of the self-propelled modules whose housings form said three-dimensional object so as to enable altering of the shape and/or size of at least a portion of the housing of said at least one self-propelled module to alter the geometry of said formed three-dimensional object.

98. The method according to claim 96, comprising further manually displacing at least one of the self-propelled modules whose housings form a three-dimensional object.

99. The method according to claim 96, comprising further manually adding at least one additional self-propelled module to the self-propelled modules whose housings form a three-dimensional object or further manually removing at least one self-propelled module of the self-propelled modules whose housings form a three-dimensional object for altering said three-dimensional object.

100. The method according to claim 96, comprising further measuring in real time the force applied to the housing of at least one of the self-propelled modules whose housings form a three-dimensional object with the help of a force sensor provided to said housing, and displacing said self-propelled module depending on said measured force to alter the shape and/or spatial location of the three-dimensional object.

101. The method according to any one of claims 96-100, comprising further determining in real time the spatial coordinates of the self-propelled modules whose housings form a three-dimensional object using the location determination modules provided to said self-propelled modules, and altering the model of a three-dimensional object based on said determined spatial coordinates of the self-propelled modules upon deviation of at least one of them from the initial model of a three-dimensional object.

102. The method according to any one of claims 96-100, comprising further scanning, by means of a scanning device, the altered three-dimensional object and forming or updating the model of a three-dimensional object based on the obtained scan of the altered three-dimensional object.

103. A self-propelled module for forming a three-dimensional object comprising:
a housing provided with one or more air propulsion units enabling movement of the self-propelled module,
wherein
said housing is further configured to enable placement of said self-propelled module in a parking station, and said self-propelled module also comprises
a control unit configured to receive navigation commands from an external control device so as to enable movement of said self-propelled module from the parking station to a given region of space using at least one of said propulsion units and to enable placement of said self-propelled module in a given spatial location to form at least a portion of a given three-dimensional object.

104. The self-propelled module according to claim 103, wherein the housing is provided with at least one controllable working member operably coupled to said housing and configured to alter the shape and/or size of at least a portion of said housing upon actuating said working member, and the control unit is operably coupled to said working member so as to enable presenting thereto the control commands to actuate same.

105. The self-propelled module according to claim 103, wherein the housing is provided with two or more propulsion units.

106. The self-propelled module according to claim 105, wherein each of said propulsion units is configured in the form of one of the group of propulsion units comprising: a sail, marine propeller, Voith Schneider propeller, bladed propeller, water jet propulsion unit, paddle wheel, oar-type propulsion unit, fin propulsion unit, fishtail propulsion unit, wheeled chassis, pneumatic-tire roller propulsion unit, rotary-cutting propulsion unit, caterpillar propulsion unit, half-track propulsion unit, ski-caterpillar propulsion unit, screw-type propulsion unit, walking-type propulsion unit, electromagnetic propulsion unit, jet propulsion unit, flapping-wing propulsion unit, walking wheeled propulsion unit, square wheel propulsion unit, vibration propulsion unit, amoebic type propulsion unit, sectional wheel propulsion unit and inertial propulsion unit.

107. The self-propelled module according to claim 103, in whose housing there is further installed an independent movable element configured to move interiorly to the housing under the control of the control unit so as to enable movement of said self-propelled module.

108. The self-propelled module according to claim 103, wherein the housing is further provided with a drive device operably coupled to said housing or configured to act on said housing so as to enable setting in motion of said housing for moving said self-propelled module in space.

109. The self-propelled module according to claim 103, wherein the housing is formed from distinct functional portions and comprises a drive device operably coupled to said functional portions so as to enable altering of the spatial locations of said functional portions with respect to one another to alter the shape and/or sizes of said housing.

110. The self-propelled module according to claim 103, wherein the housing is formed from distinct functional portions and comprises a drive device operably coupled to said functional portions so as to enable expansion or deployment of said functional portions to alter the shape, sizes and/or contour of said housing.

111. The self-propelled module according to claim 103, wherein the housing is formed from distinct controllable functional portions, wherein the control unit is communicatively coupled to said controllable functional portions so as to enable altering of the spatial locations of said functional portions with respect to one another in response to the control commands of the control unit to alter the shape, sizes and/or contour of said housing.

112. The self-propelled module according to claim 103, wherein the housing is formed from distinct controllable functional portions, wherein the control unit is communicatively coupled to said controllable functional portions so as to enable expansion or deployment of said functional portions in response to the control commands of the control unit to alter the shape, sizes and/or contour of said housing.

113. The self-propelled module according to claim 103, wherein the housing is configured to alter the shape and/or size thereof, and the control unit is further operably coupled to the housing and is configured to receive control commands from the control device so as to enable altering of the shape and/or size of at least a portion of said housing.
